# EUROPEAN PATENT APPLICATION

(11) **EP 4 851 748 A1**
(43) Date of publication of application: **09.12.2026**
(21) Application number: 25869568.3
(22) Date of filing: 21.10.2025
(51) Int. Cl.: G06F 1/20

(54) **LIQUID COOLING HEAT DISSIPATION DEVICE AND SERVER**

(30) Priority: 27.02.2025 CN 202510222608; 27.02.2025 CN 202510222702
(71) Applicant: Suzhou Metabrain Intelligent Technology Co., Ltd., Suzhou, Jiangsu 215000 (CN)
(72) Inventor: JIAO, Naixun, Suzhou, Jiangsu 215000 (CN); LI, Jinbo, Suzhou, Jiangsu 215000 (CN); WANG, Dawei, Suzhou, Jiangsu 215000 (CN); FENG, Yunqi, Suzhou, Jiangsu 215000 (CN)
(74) Representative: von Bülow & Tamada
(86) International application number: PCT/CN2025/129069
(87) International publication number: WO 2026/179187

(57) **Abstract**

The present application discloses a liquid-cooling heat dissipation apparatus and a server, relating to the technical field of server heat dissipation. The liquid-cooling heat dissipation apparatus includes a main heat-exchange flow channel; an expansion card heat exchange mechanism including a fixed shaft, a quick locking assembly, and expansion card heat-exchange sub-plates, wherein the expansion card heat-exchange sub-plates are sleeved on the fixed shaft so as to enable the expansion card heat-exchange sub-plates to rotate around the fixed shaft and slide axially along the fixed shaft, the expansion card heat-exchange sub-plates are used for clamping a corresponding expansion card, and the quick locking assembly is used for making the expansion card heat-exchange sub-plates abut against the main heat-exchange flow channel. When an expansion card needs to be replaced, the expansion card may be taken out and replaced with a new expansion card simply by opening the quick locking assembly and rotating the expansion card heat-exchange sub-plate around the fixed shaft, without removing the expansion card heat-exchange sub-plate for disassembly and assembly. The present application supports independent disassembly, assembly, and maintenance of expansion cards, thereby greatly improving flexibility, convenience, and safety of production, testing, as well as operation and maintenance.

## Description

### CROSS-REFERENCE TO RELATED APPLICATION

The present application claims the priority of the Chinese Patent application filed on February 27, 2025 before the CNIPA, China National Intellectual Property Administration with the application number of 202510222608.7, and the title of "LIQUID-COOLING HEAT DISSIPATION APPARATUS AND SERVER", and the Chinese Patent application filed on February 27, 2025 before the CNIPA, China National Intellectual Property Administration with the application number of 202510222702.2, and the title of "LIQUID-COOLING HEAT DISSIPATION APPARATUS AND SERVER", which are incorporated herein in their entirety by reference.

### FIELD

The present application relates to the technical field of server heat dissipation, and in particular, to a liquid-cooling heat dissipation apparatus and a server.

### BACKGROUND

With the economic development of society, especially with the development of artificial intelligence technology, a higher demand is placed on computing power of information technology (IT) devices such as servers, resulting in a rapid increase in power consumption of an expansion card in the server. Meanwhile, a higher requirement is placed on deployment density of the IT devices such as servers, which makes liquid cooling technology the best choice for meeting the high-density and high-power-consumption heat dissipation requirements of the servers.

However, in the related art, with iterative upgrading of the servers, the spacing between adjacent expansion card slots in the servers is shrinking, while frequency of expansion card replacement is relatively high, which leads to difficult installation and operation and maintenance of a liquid cooling apparatus as a whole for dissipating heat from the expansion cards in the servers.

Moreover, in the related art, arrangement design of processors and memories in the servers is increasingly compact, which leads to difficult installation and operation and maintenance of a liquid cooling apparatus as a whole for dissipating heat from the servers.

### SUMMARY

The present application provides a liquid-cooling heat dissipation apparatus and a server to at least solve the problems of difficult installation and operation and maintenance of an expansion card and a liquid-cooling heat dissipation apparatus in the related art, and the problems of difficult installation and operation and maintenance of a memory and a liquid cooling apparatus in the related art.

The present application provides a liquid-cooling heat dissipation apparatus, including:
a main heat-exchange flow channel;
an expansion card heat exchange mechanism, including a fixed shaft, a quick locking assembly, and a plurality of expansion card heat-exchange sub-plates, where the plurality of expansion card heat-exchange sub-plates are sleeved on the fixed shaft so that the plurality of expansion card heat-exchange sub-plates rotate around the fixed shaft and slide axially along the fixed shaft, the plurality of expansion card heat-exchange sub-plates are used for clamping corresponding expansion cards, and the quick locking assembly is used for fixing the plurality of expansion card heat-exchange sub-plates and pressing the plurality of expansion card heat-exchange sub-plates against the main heat-exchange flow channel, so that the plurality of expansion card heat-exchange sub-plates exchange heat with the main heat-exchange flow channel.

The present application further provides another liquid-cooling heat dissipation apparatus, including:
a main heat-exchange flow channel;
a processor heat exchange mechanism used for dissipating heat from a processor, where the processor heat exchange mechanism is detachably connected to the main heat-exchange flow channel through a quick connector assembly, so that the processor heat exchange mechanism communicates with the main heat-exchange flow channel;
a memory heat exchange mechanism including a fixed shaft, a quick locking assembly, and a plurality of memory heat-exchange sub-plates, where the plurality of memory heat-exchange sub-plates are sleeved on the fixed shaft, so that the plurality of memory heat-exchange sub-plates rotate around the fixed shaft and slide axially along the fixed shaft, the plurality of memory heat-exchange sub-plates are used for clamping a corresponding memory, and the quick locking assembly is used for fixing the plurality of memory heat-exchange sub-plates and pressing the plurality of memory heat-exchange sub-plates against the main heat-exchange flow channel, so that the plurality of memory heat-exchange sub-plates exchange heat with the main heat-exchange flow channel.

The present application further provides a server, including any one of the above liquid-cooling heat dissipation apparatuses.

Through the liquid-cooling heat dissipation apparatuses of the present application, the expansion card heat-exchange sub-plates are sleeved on the fixed shaft, and are fixed by the quick locking assembly, and pressed against the main heat-exchange flow channel, and the expansion card heat-exchange sub-plates are used for clamping a corresponding expansion card, so that an installation and disassembly process of the expansion card heat-exchange sub-plate is simplified, an operation time is reduced, and operation and maintenance efficiency is improved. Therefore, when an expansion card needs to be replaced, the expansion card may be taken out and replaced with a new expansion card simply by opening the quick locking assembly and rotating the expansion card heat-exchange sub-plates of the corresponding expansion card around the fixed shaft, without removing the expansion card heat-exchange sub-plates for disassembly and assembly; the expansion card heat-exchange sub-plates are sleeved on the fixed shaft, so the expansion card heat-exchange sub-plates may move freely axially along the fixed shaft, and during actual assembly, the expansion card heat-exchange sub-plates may be self-adapted and precisely adjust positions of the expansion card heat-exchange sub-plates based on a position of the expansion card, so as to ensure optimal adaptation to the expansion card. The present application supports independent disassembly, assembly, and maintenance of expansion cards, which greatly improves flexibility, maintainability, convenience, and safety of production, testing, as well as operation and maintenance.

Through another liquid-cooling heat dissipation apparatus of the present application, since the quick connector assembly is used to detachably connect the processor heat exchange mechanism to the main heat-exchange flow channel, when only the processor or the processor heat exchange mechanism needs to be replaced, quick connection and disconnection of the processor heat exchange mechanism and the main heat-exchange flow channel are realized through the quick connector assembly, and then the processor heat exchange mechanism is separately disassembled and installed, without being disassembled together with the memory heat exchange mechanism and the memory; the memory heat-exchange sub-plates are sleeved on the fixed shaft, and are fixed by the quick locking assembly, and pressed against the main heat-exchange flow channel, and the memory heat-exchange sub-plates the clamp corresponding memory, so that when a memory needs to be replaced, the memory may be taken out and replaced with a new memory simply by opening the quick locking assembly and rotating the memory heat-exchange sub-plates of the corresponding memory around the fixed shaft, without removing the memory heat-exchange sub-plates for disassembly and assembly; the memory heat-exchange sub-plates are sleeved on the fixed shaft, so the memory heat-exchange sub-plates may move freely axially along the fixed shaft, and during actual assembly, the memory heat-exchange sub-plates may be self-adapted and precisely adjust positions of the memory heat-exchange sub-plates based on a position of the memory, to ensure optimal adaptation to the memory. The present application supports independent disassembly, assembly, and maintenance of a processor and a memory, which greatly improves flexibility, maintainability, convenience, and safety of production, testing, as well as operation and maintenance.

### BRIEF DESCRIPTION OF THE DRAWINGS

To explain embodiments of the present application more clearly, the drawings that need to be used in the embodiments will be briefly introduced below. Apparently, the drawings described below are only some of embodiments of the present application. Other drawings may further be obtained by those of ordinary skill in the art according to these drawings, without exertion of any inventive work.
FIG. 1 is a structural schematic diagram of a server according to some embodiments of the present application;
FIG. 2 is a structural schematic diagram of a liquid-cooling heat dissipation apparatus of the server shown in FIG. 1;
FIG. 3 is a structural schematic diagram of the liquid-cooling heat dissipation apparatus shown in FIG. 2;
FIG. 4 is a partial exploded structural schematic diagram of the liquid-cooling heat dissipation apparatus of the server shown in FIG. 2;
FIG. 5 is a structural schematic diagram of a main heat-exchange flow channel of the liquid-cooling heat dissipation apparatus shown in FIG. 3;
FIG. 6 is a structural schematic diagram of the main heat-exchange flow channel shown in FIG. 5 from another perspective;
FIG. 7 is a partial exploded structural schematic diagram of the main heat-exchange flow channel shown in FIG. 5;
FIG. 8 is an enlarged structural schematic diagram of a local structure of the main heat-exchange flow channel shown in FIG. 7;
FIG. 9 is a cross-sectional view of the main heat-exchange flow channel shown in FIG. 5;
FIG. 10 is a structural schematic diagram of an expansion card heat-exchange sub-plate of the liquid-cooling heat dissipation apparatus shown in FIG. 3;
FIG. 11 is a first partial exploded structural schematic diagram of the expansion card heat-exchange sub-plate shown in FIG. 10;
FIG. 12 is a second partial exploded structural schematic diagram of the expansion card heat-exchange sub-plate shown in FIG. 10;
FIG. 13 is a structural schematic diagram of a main cold plate of the expansion card heat-exchange sub-plate shown in FIG. 10;
FIG. 14 is a structural schematic diagram of the expansion card heat-exchange sub-plate shown in FIG. 10 from another perspective;
FIG. 15 is a cross-sectional view of the expansion card heat-exchange sub-plate shown in FIG. 10;
FIG. 16 is a structural schematic diagram of an expansion card heat exchange mechanism of the liquid-cooling heat dissipation apparatus shown in FIG. 3;
FIG. 17 is a structural schematic diagram of the expansion card heat exchange mechanism shown in FIG. 16 during assembly;
FIG. 18 is a structural schematic diagram of the expansion card heat exchange mechanism shown in FIG. 16 after assembly;
FIG. 19 is a structural schematic diagram of a quick locking assembly of the expansion card heat exchange mechanism shown in FIG. 18;
FIG. 20 is a structural schematic diagram of the expansion card heat exchange mechanism shown in FIG. 18 after assembly from another perspective;
FIG. 21 is a partial exploded structural schematic diagram of a liquid leakage detection mechanism of the liquid-cooling heat dissipation apparatus shown in FIG. 3;
FIG. 22 is a partial enlarged structural schematic diagram of the liquid leakage detection mechanism shown in FIG. 21;
FIG. 23 is a structural schematic diagram of the liquid-cooling heat dissipation apparatus shown in FIG. 3 during assembly;
FIG. 24 is a structural schematic diagram of another server according to some embodiments of the present application;
FIG. 25 is a structural schematic diagram of a liquid-cooling heat dissipation apparatus of the server shown in FIG. 24;
FIG. 26 is a structural schematic diagram of the liquid-cooling heat dissipation apparatus shown in FIG. 25;
FIG. 27 is a partial exploded structural schematic diagram of the liquid-cooling heat dissipation apparatus of the server shown in FIG. 25;
FIG. 28 is a structural schematic diagram of a main heat-exchange flow channel of the liquid-cooling heat dissipation apparatus shown in FIG. 26;
FIG. 29 is a structural schematic diagram of the main heat-exchange flow channel shown in FIG. 28 from another perspective;
FIG. 30 is a partial exploded structural schematic diagram of the main heat-exchange flow channel shown in FIG. 28;
FIG. 31 is an enlarged structural schematic diagram of the main heat-exchange flow channel shown in FIG. 30;
FIG. 32 is a cross-sectional view of the main heat-exchange flow channel shown in FIG. 28;
FIG. 33 is a structural schematic diagram of a memory heat-exchange sub-plate of the liquid-cooling heat dissipation apparatus shown in FIG. 26;
FIG. 34 is a first partial exploded structural schematic diagram of the memory heat-exchange sub-plate shown in FIG. 33;
FIG. 35 is a second partial exploded structural schematic diagram of the memory heat-exchange sub-plate shown in FIG. 33;
FIG. 36 is a structural schematic diagram of a main cold plate of the memory heat-exchange sub-plate shown in FIG. 33;
FIG. 37 is a structural schematic diagram of the memory heat-exchange sub-plate shown in FIG. 33 from another perspective;
FIG. 38 is a cross-sectional view of the memory heat-exchange sub-plate shown in FIG. 33;
FIG. 39 is a structural schematic diagram of a memory heat exchange mechanism of the liquid-cooling heat dissipation apparatus shown in FIG. 26;
FIG. 40 is a structural schematic diagram of the memory heat exchange mechanism shown in FIG. 39 during assembly;
FIG. 41 is a structural schematic diagram of the memory heat exchange mechanism shown in FIG. 39 after assembly;
FIG. 42 is a structural schematic diagram of a quick locking assembly of the memory heat exchange mechanism shown in FIG. 41;
FIG. 43 is a structural schematic diagram of the memory heat exchange mechanism shown in FIG. 41 after assembly from another perspective;
FIG. 44 is a partial exploded structural schematic diagram of a liquid leakage detection mechanism of the liquid-cooling heat dissipation apparatus shown in FIG. 26;
FIG. 45 is a partial enlarged structural schematic diagram of the liquid leakage detection mechanism shown in FIG. 44; and
FIG. 46 is a structural schematic diagram of the liquid-cooling heat dissipation apparatus shown in FIG. 26 during assembly.

Herein, the above drawings include the following reference numerals:
100-liquid-cooling heat dissipation apparatus; 10-main heat-exchange flow channel; 11-main heat-exchange sub-flow channel; 111-first main heat-exchange sub-flow channel; 112-second main heat-exchange sub-flow channel; 113-third main heat-exchange sub-flow channel; 114-liquid distribution port; 115-liquid collection port; 116-sub-flow channel connector; 12-connecting pipeline; 121-first branch connecting pipeline; 122-second branch connecting pipeline; 13-cover plate; 131-flow channel cavity; 132-rib structure; 133-thermally conductive groove; 134-heat exchange pad; 14-bottom plate; 141-skived fin structure; 15-inlet; 16-outlet; 17-second positioning hole; 18-second captive screw; 19-fixing seat; 30-expansion card heat exchange mechanism; 31-fixed shaft; 32-quick locking assembly; 321-pressure rod bracket; 322-pressure rod; 323-lock catch; 3231-locking pin; 3232-guide inclined surface; 324-lock piece; 3241-blocking piece; 3242-toggle piece; 325-limiting screw rod; 326-pressure rod sleeve; 327-elastic sheet; 328-protrusion structure; 33-expansion card heat-exchange sub-plate; 331-main cold plate; 3311-base plate; 3312-reinforcement frame; 3313-limiting groove; 3314-heat pipe groove; 3315-heat pipe; 3316-guide pin; 332-secondary cold plate; 3321-thermally conductive pad groove; 3322-guide hole; 333-thermally conductive pad; 334-locking switch assembly; 3341-cam wrench; 3342-cam rotating shaft; 3343-pressing slider; 3344-guide shaft; 3345-cam portion; 3346-handle portion; 3347-compression spring; 3348-guide groove; 3349-guide block; 335-scratch-resistant film; 336-through hole; 40-liquid leakage detection mechanism; 41-first flow guide groove; 42-detection wire groove; 43-liquid leakage detection wire; 44-second flow guide groove; 50-liquid supply and return connector assembly; 51-liquid inlet pipeline; 52-liquid return pipeline; 80-cold plate bracket; 81-first positioning pin; 82-first captive screw; 83-second positioning pin; 84-bracket screw hole; 200-server; 201-motherboard; 202-processor; 203-expansion card; 204-first positioning hole; 205-motherboard screw hole; 206-liquid supply and return quick connector;
1000-liquid-cooling heat dissipation apparatus; 20-processor heat exchange mechanism; 21-quick connector assembly; 211-liquid inlet quick connector; 212-liquid outlet quick connector; 22-fastening screw hole; 23-processor heat exchange connecting pipeline; 24-processor liquid inlet pipeline; 25-processor liquid outlet pipeline; 90-memory heat exchange mechanism; 93-memory heat-exchange sub-plate; 2000-server; 903-memory; 207-stud.

### DETAILED DESCRIPTION

The technical solutions in embodiments of the present application will be clearly and completely described below in conjunction with the accompanying drawings in the embodiments of the present application. Obviously, the described embodiments are only some, but not all, of the embodiments of the present application. Based on the embodiments in the present application, all other embodiments obtained by those of ordinary skill in the art without making creative efforts fall within the protection scope of the present application.

It should be noted that the orientation or positional relationship indicated by terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" is based on the orientation or positional relationship shown in the accompanying drawings, which is only for ease of describing the present application and simplifying the description, rather than indicating or implying that the device or element referred thereto must have a specific orientation or be constructed and operated in a specific orientation, and therefore shall not be construed as limitations on the present application. The terms "mount", "connected", and "connection" should be understood in a broad sense, and for example, may refer to a fixed connection, a removable connection, or an integral connection; may refer to a mechanical connection or an electrical connection; and may refer to a direct connection, or an indirect connection via an intermediate medium, or an internal communication between two elements. The terms "parallel", "perpendicular", and "equal" include the situation set forth and a situation approximate to the situation set forth, the range of the approximate situation being within an acceptable deviation range, where the acceptable deviation range is determined by those of ordinary skill in the art in view of the measurement being discussed and errors associated with the measurement of a particular quantity (namely, limitations of the measurement system). For example, "parallel" includes "absolutely parallel" and "approximately parallel", where an acceptable deviation range of "approximately parallel" may be, for example, a deviation within 5°; "perpendicular" includes "absolutely perpendicular" and "approximately perpendicular", where an acceptable deviation range of "approximately perpendicular" may also be, for example, a deviation within 5°. "equal" includes absolute equality and approximate equality, where an acceptable deviation range of approximate equality may be, for example, that a difference between the two elements being equal is less than or equal to 5% of either element. For those skilled in the art, the specific meanings of the above terms in the present application may be understood based on specific situations.

In order to enable those skilled in the art to better understand the solutions of the present application, the present application will be further described in detail below in conjunction with the accompanying drawings and specific implementations.

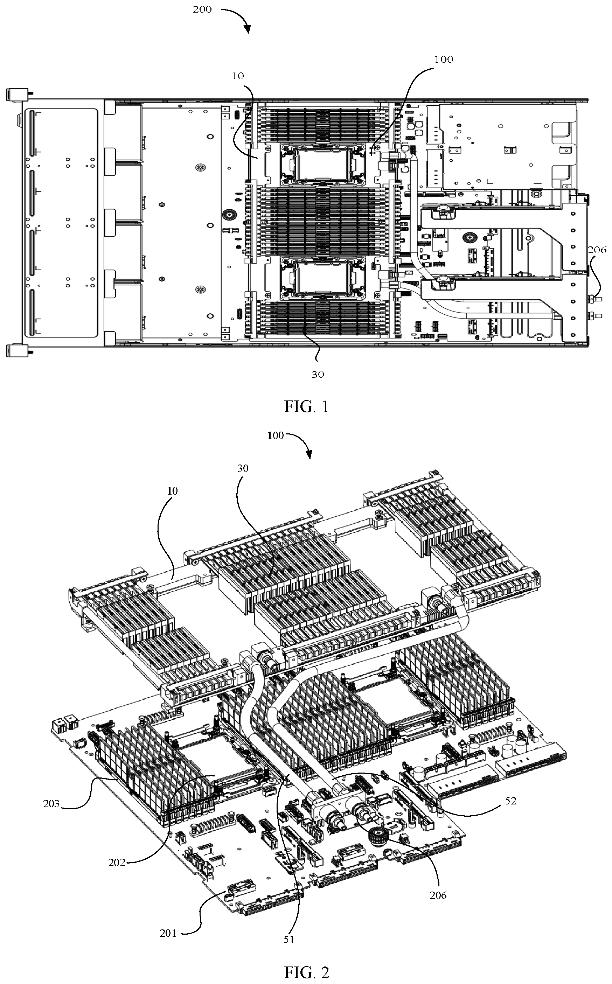

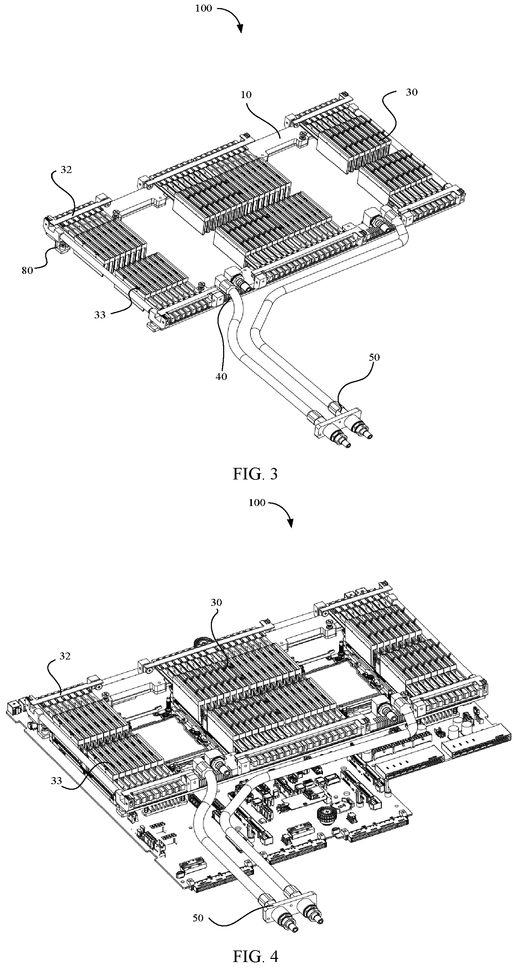

As shown in FIG. 1, FIG. 2, and FIG. 3, a liquid-cooling heat dissipation apparatus 100 according to some embodiments of the present application is used in a server 200. The server 200 includes a motherboard 201, a processor 202, an expansion card 203, and the liquid-cooling heat dissipation apparatus 100. The processor 202 and the expansion card 203 are disposed on the motherboard 201. The liquid-cooling heat dissipation apparatus 100 is used for performing liquid cooling heat dissipation and temperature reduction on the expansion card 203.

In some possible implementations, the server 200 is a dual-socket general-purpose server.

In some possible implementations, the expansion card 203 is a memory, but is not limited thereto.

The liquid-cooling heat dissipation apparatus 100 includes a main heat-exchange flow channel 10 and an expansion card heat exchange mechanism 30. The main heat-exchange flow channel 10 is used for communicating with a coolant flow path. The expansion card heat exchange mechanism 30 is in heat exchange contact with the main heat-exchange flow channel 10. The expansion card heat exchange mechanism 30 clamps the expansion card 203 and is used for cooling and reducing temperature of the expansion card 203.

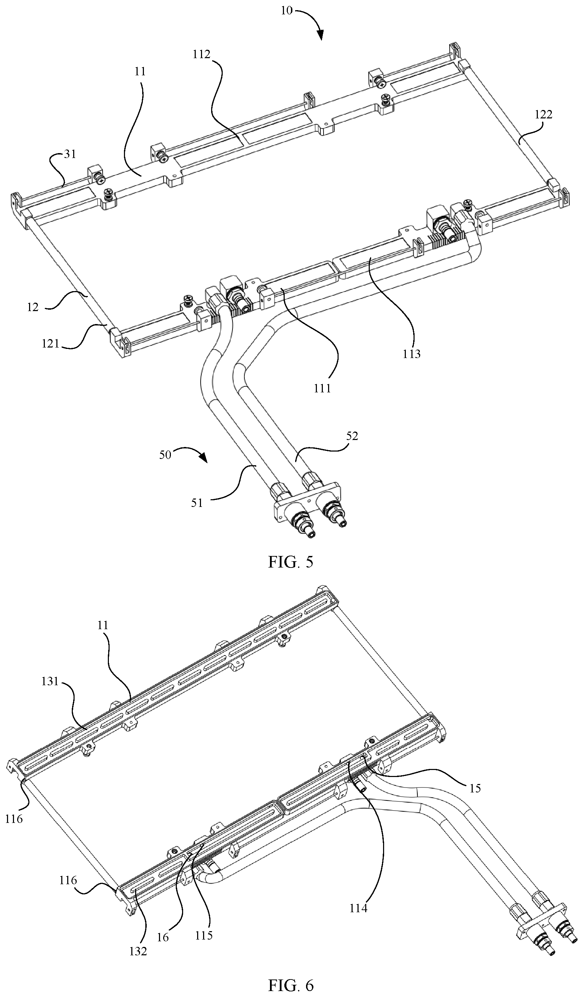

Also, referring to FIG. 5, in some possible implementations, the expansion card heat exchange mechanism 30 performs heat exchange for a memory and may serve as a memory heat exchange mechanism. The expansion card heat exchange mechanism 30 includes a fixed shaft 31, a quick locking assembly 32, and a plurality of expansion card heat-exchange sub-plates 33. The expansion card heat-exchange sub-plates 33 are sleeved on the fixed shaft 31, so that the expansion card heat-exchange sub-plates 33 rotate around the fixed shaft 31 and slide axially along the fixed shaft 31. The expansion card heat-exchange sub-plate 33 is used for clamping a corresponding expansion card 203, and the quick locking assembly 32 is used for fixing the plurality of expansion card heat-exchange sub-plates 33 and pressing the expansion card heat-exchange sub-plates against the main heat-exchange flow channel 10, so that the expansion card heat-exchange sub-plates 33 exchange heat with the main heat-exchange flow channel 10.

In some embodiments, the quick locking assembly 32 applies pressure to the expansion card heat-exchange sub-plates 33 to press the expansion card heat-exchange sub-plates 33 onto the main heat-exchange flow channel 10, thereby causing the expansion card heat-exchange sub-plates 33 to exchange heat with the main heat-exchange flow channel 10.

In some possible implementations, a plurality of expansion cards 203 are sequentially arranged on the motherboard 201, an axial direction of the fixed shaft 31 is parallel to an arrangement direction of the plurality of expansion cards 203, the quick locking assembly 32 is disposed on one side of the expansion cards 203, and in the arrangement direction of the plurality of expansion cards 203, the plurality of expansion card heat-exchange sub-plates 33 rotatably disposed on the fixed shaft 31 are pressed against the corresponding expansion cards 203.

The expansion card heat-exchange sub-plates 33 are sleeved on the fixed shaft 31, are fixed by the quick locking assembly 32, and abut against the main heat-exchange flow channel 10, and the expansion card heat-exchange sub-plate 33 clamps the corresponding expansion card 203. In this way, when the expansion card 203 needs to be replaced, the expansion card 203 may be taken out and replaced with a new expansion card 203 by simply operating to open the quick locking assembly 32 and rotate the expansion card heat-exchange sub-plate 33 of the corresponding expansion card 203 around the fixed shaft 31, without removing the expansion card heat-exchange sub-plate 33 for disassembly and assembly, thereby greatly simplifying a replacement process of the expansion card 203; the expansion card heat-exchange sub-plates 33 are sleeved on the fixed shaft 31, so that the expansion card heat-exchange sub-plates 33 may move freely on the fixed shaft 31, during actual assembly, the expansion card heat-exchange sub-plates 33 may be self-adapted and positions of the expansion card heat-exchange sub-plates may be precisely adjusted based on a position of the expansion card 203, so as to ensure optimal contact and heat exchange efficiency between the expansion card heat-exchange sub-plates 33 and the expansion card 203, achieve optimal adaptation, improve structural compatibility and reliability of the expansion card heat-exchange sub-plate 33, and improve a heat dissipation effect.

The liquid-cooling heat dissipation apparatus 100 of the present application supports independent disassembly, assembly, and maintenance of the expansion card 203, so that operation and maintenance personnel may replace and maintain components more quickly, thereby reducing a number of times of unnecessary disassembly and assembly of electronic components requiring heat dissipation, greatly improving flexibility, maintainability, convenience, and safety of production, testing, as well as operation and maintenance, reducing downtime, improving availability and maintenance efficiency of the server 200, improving structural compatibility and reliability of the expansion card heat exchange mechanism 30, meeting various operation and maintenance scenarios of a data center, and facilitating reducing a failure rate of liquid cooling components and electronic components and reducing development as well as operation and maintenance costs.

Meanwhile, application of the quick locking assembly 32 realizes tool-free installation, reduces a risk of misoperation during disassembly and assembly processes, and enhances safety and reliability of the system.

In some possible implementations, the main heat-exchange flow channel 10 includes a plurality of main heat-exchange sub-flow channels 11, and the plurality of main heat-exchange sub-flow channels 11 are sequentially in communication through connecting pipelines 12.

In some possible implementations, the main heat-exchange flow channel 10 includes a first main heat-exchange sub-flow channel 111, a second main heat-exchange sub-flow channel 112, and a third main heat-exchange sub-flow channel 113. The connecting pipelines 12 include a first branch connecting pipeline 121 and a second branch connecting pipeline 122. The first main heat-exchange sub-flow channel 111 and the second main heat-exchange sub-flow channel 112 communicate with each other through the first branch connecting pipeline 121, and the second main heat-exchange sub-flow channel 112 and the third main heat-exchange sub-flow channel 113 communicate with each other through the second branch connecting pipeline 122.

The main heat-exchange flow channel 10 is divided into a plurality of sub-flow channels, so as to realize segmented heat dissipation. Each sub-flow channel may focus on thermal management of a specific region or component, thereby improving overall heat dissipation efficiency.

In some possible implementations, the first main heat-exchange sub-flow channel 111 and the third main heat-exchange sub-flow channel 113 are located in a same row and are oppositely disposed with respect to the second main heat-exchange sub-flow channel 112.

In some possible implementations, the first main heat-exchange sub-flow channel 111 and the third main heat-exchange sub-flow channel 113 are located on rear sides of the processor 202 and the expansion card 203, and the second main heat-exchange sub-flow channel 112 is located on front sides of the processor 202 and the expansion card 203.

Also, referring to FIG. 6, in some possible implementations, the first main heat-exchange sub-flow channel 111 is provided with a liquid distribution port 114, and the third main heat-exchange sub-flow channel 113 is provided with a liquid collection port 115. The liquid-cooling heat dissipation apparatus 100 further includes a second heat exchange mechanism. The liquid distribution port 114 and the liquid collection port 115 are respectively in communication with the second heat exchange mechanism, so that the second heat exchange mechanism communicates with the main heat-exchange flow channel 10 via the liquid distribution port 114 and the liquid collection port 115.

In some possible implementations, the second heat exchange mechanism is a processor heat exchange mechanism. When the processor heat exchange mechanism is in a connected state with the main heat-exchange flow channel 10 via the liquid distribution port 114 and the liquid collection port 115, a first branch enters the processor heat exchange mechanism from the liquid distribution port 114 on a side wall of the first main heat-exchange sub-flow channel 111, and continuously carries away heat generated by the processor 202 chip during operations, so as to ensure that the temperature of the processor 202 chip is always within a normal range. Subsequently, coolant flows out through the liquid collection port 115 to the main heat-exchange flow channel 10.

A second branch passes through a flow channel within the first main heat-exchange sub-flow channel 111 on the rear side, and reaches the second main heat-exchange sub-flow channel 112 close to the front side of a chassis after a flow direction of the coolant changes when passing through the first branch connecting pipeline 121; and after the coolant absorbs, in the second main heat-exchange sub-flow channel 112 on the front side, heat transferred from the expansion card heat-exchange sub-plates 33 and flows out, the coolant subsequently passes through the second branch connecting pipeline 122 to reach the third main heat-exchange sub-flow channel 113 on the rear side. Subsequently, the coolant flows along a flow channel within the third main heat-exchange sub-flow channel 113 on the rear side and merges with the coolant of the first branch at the liquid collection port 115.

In some possible implementations, ends of the first main heat-exchange sub-flow channel 111 and the third main heat-exchange sub-flow channel 113 that face away from each other and both ends of the second main heat-exchange sub-flow channel 112 are respectively provided with sub-flow channel connectors 116. The sub-flow channel connector 116 of the first main heat-exchange sub-flow channel 111 is connected to the sub-flow channel connector 116 on one side of the second main heat-exchange sub-flow channel 112 through the first branch connecting pipeline 121. The sub-flow channel connector 116 on the other side of the second main heat-exchange sub-flow channel 112 is connected to the sub-flow channel connector 116 of the third main heat-exchange sub-flow channel 113 through the second branch connecting pipeline 122.

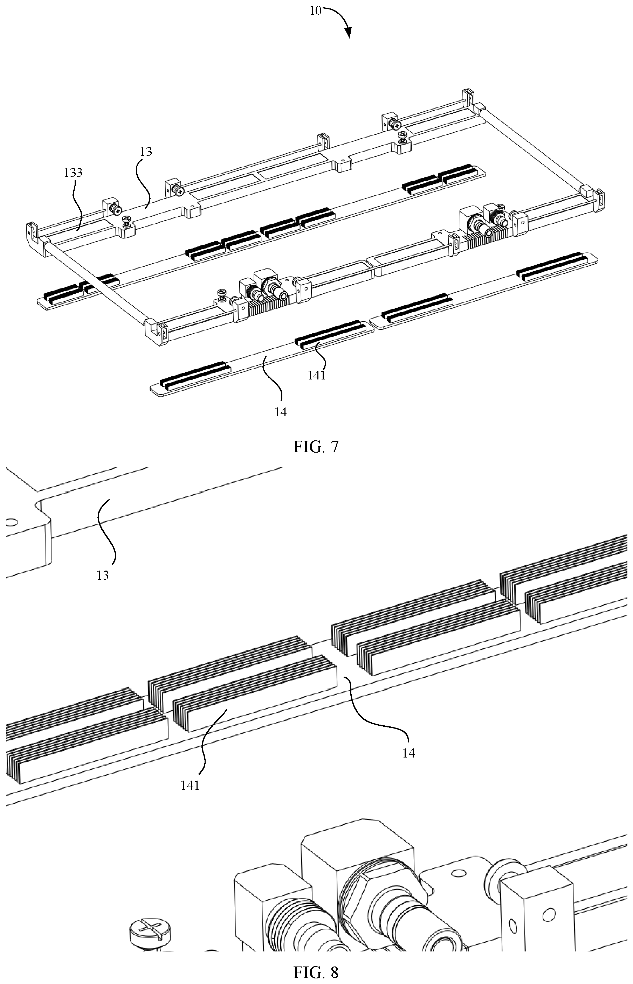

Also, referring to FIG. 7, FIG. 8, and FIG. 9, in some possible implementations, the main heat-exchange sub-flow channel 11 includes a cover plate 13 and a bottom plate 14. A flow channel cavity 131 is disposed in the cover plate 13, and the bottom plate 14 closes the flow channel cavity 131. The expansion card heat-exchange sub-plate 33 abuts against the cover plate 13.

Combination of the cover plate 13 and the bottom plate 14 provides a closed and stable structure, ensures integrity and sealing of the flow channel cavity 131, prevents coolant leakage, and improves reliability of the system. At the same time, a design of the flow channel cavity 131 may optimize a fluid path based on specific heat dissipation requirements, ensure that the coolant contacts a heat source to the greatest extent during a flow process, and improve heat exchange efficiency.

The design of the flow channel cavity 131 allows the coolant to flow inside the cover plate 13 and realizes direct communication with the second heat exchange mechanism, so as to achieve efficient heat exchange, rapidly remove the heat generated by the processor 202, and improve heat dissipation efficiency. Due to the direct communication design of the second heat exchange mechanism and the flow channel cavity 131, the second heat exchange mechanism may be conveniently disassembled and replaced during maintenance without affecting installation of the expansion card heat-exchange sub-plates 33, which improves maintainability of the system.

The expansion card heat-exchange sub-plate 33 directly abuts against the cover plate 13, so that the expansion card heat-exchange sub-plate 33 may more flexibly exchange heat with the coolant in the flow channel cavity 131, thereby reducing thermal resistance in a heat transfer path, and enabling heat generated by the expansion card 203 to be transferred to the coolant more rapidly.

In some possible implementations, a rib structure 132 is disposed in the flow channel cavity 131, and the rib structure 132 protrudes into the flow channel cavity 131 and is arranged in an extension direction of the flow channel cavity 131.

The rib structure 132 increases a surface area within the flow channel cavity 131, thereby expanding a contact area between the coolant and the flow channel wall, improving heat exchange efficiency, and enabling heat to be transferred from the heat source to the coolant more rapidly. The rib structure 132 may guide a flow path of the coolant within the flow channel cavity 131, thereby ensuring uniform distribution of the fluid in the entire flow channel, so as to avoid occurrence of a flow dead zone or local overheating.

Meanwhile, the rib structure 132 may disturb flow of the coolant and promote formation of turbulence. Compared with laminar flow, the fluid in a turbulent state has a higher heat transfer capability, thereby improving convective heat transfer between the flow channel cavity 131 and the coolant, so as to remove heat more effectively.

In addition to helping improve heat exchange efficiency, the rib structure 132 may further enhance structural strength of the flow channel cavity 131 and functions as a reinforcing rib, so as to improve liquid pressure resistance capability of the flow channel cavity 131, and prevent deformation or rupture under a high-pressure condition.

A shape and a spacing of the rib structure 132 may be designed and adjusted based on specific heat dissipation requirements, so as to achieve an optimal thermal management effect.

In some possible implementations, a skived fin structure 141 is disposed on the bottom plate 14, and the skived fin structure 141 is disposed in the flow channel cavity 131 in an extension direction of the flow channel cavity 131. The skived fin structure 141 is distributed directly below a contact region of the flow channel cavity 131 and the expansion card heat-exchange sub-plate 33.

The skived fin structure 141 increases a surface area within the flow channel cavity 131, thereby expanding a contact area between the coolant and the flow channel wall, improving heat exchange efficiency, and enabling heat to be transferred from the heat source to the coolant more rapidly. The skived fin structure 141 may guide a flow path of the coolant within the flow channel cavity 131, thereby ensuring uniform distribution of the fluid in the entire flow channel, so as to avoid occurrence of a flow dead zone or local overheating.

Meanwhile, the skived fin structure 141 may disturb flow of the coolant and promote formation of turbulence. Compared with laminar flow, the fluid in a turbulent state has a higher heat transfer capability, so that heat may be removed more effectively.

In addition to helping improve heat exchange efficiency, the skived fin structure 141 may enhance structural strength of the flow channel cavity 131, improve pressure resistance capability of the flow channel cavity, and prevent deformation or rupture under a high-pressure condition.

A shape, a length, a height, and a spacing of the skived fin structure 141 may be designed and adjusted based on specific heat dissipation requirements, so as to achieve an optimal thermal management effect.

In some possible implementations, the rib structure 132 is located in a middle portion of the flow channel cavity 131 to divide the flow channel cavity 131 into two parts, a plurality of skived fin structures 141 are respectively located in the two sides of the flow channel cavity 131, tooth tops of the skived fin structures 141 and the cover plate 13 are integrated through welding to further split the flow channel cavity 131 and form a plurality of microchannels.

In some possible implementations, the first main heat-exchange sub-flow channel 111 is provided with an inlet 15. The third main heat-exchange sub-flow channel 113 is provided with an outlet 16. The inlet 15 and the outlet 16 are respectively located in middle portions of the first main heat-exchange sub-flow channel 111 and the third main heat-exchange sub-flow channel 113, and a baffle structure is defined in the flow channel cavity 131 of the first main heat-exchange sub-flow channel 111 and the third main heat-exchange sub-flow channel 113 through the rib structure 132.

After the coolant enters the first main heat-exchange sub-flow channel 111 from the inlet 15, a part of the liquid enters the second heat exchange mechanism through the liquid distribution port 114 to form a first branch; and another part thereof flows along the flow channel cavity 131 of the first main heat-exchange sub-flow channel 111 to form a second branch, after flowing in the first main heat-exchange sub-flow channel 111 toward the third main heat-exchange sub-flow channel 113, flows in a direction away from the third main heat-exchange sub-flow channel 113 after one baffle, then enters the first branch connecting pipeline 121 through the sub-flow channel connector 116, passes through the second main heat-exchange sub-flow channel 112, and reaches the third main heat-exchange sub-flow channel 113 on the rear side through the second branch connecting pipeline 122. Subsequently, the coolant of the second branch flows along a flow channel within the third main heat-exchange sub-flow channel 113 on the rear side toward the first main heat-exchange sub-flow channel 111, and after one baffle, merges with the coolant of the first branch at the liquid collection port 115, and flows out of the main heat-exchange flow channel 10 through the outlet 16.

In some possible implementations, the fixed shaft 31 is disposed on the cover plate 13, and an axial direction of the fixed shaft 31 is the same as an extension direction of the flow channel cavity 131 in the cover plate 13 so as to sequentially arranging a plurality of expansion card heat-exchange sub-plates 33 in the extension direction of the flow channel cavity 131.

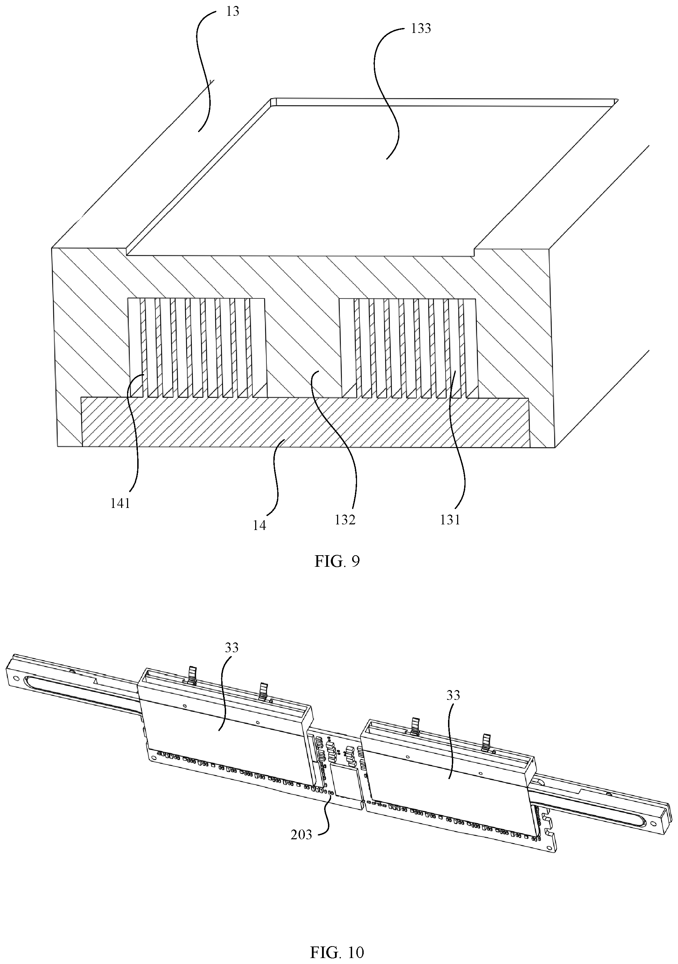

Also, referring to FIG. 10, in some possible implementations, a plurality of expansion card heat-exchange sub-plates 33 are divided into two groups in a length direction of the expansion card 203, the two groups of expansion card heat-exchange sub-plates 33 are oppositely disposed, and in the length direction of the expansion card 203, each group of expansion card heat-exchange sub-plates 33 clamps one end of the corresponding expansion card 203 respectively. Expansion card heat-exchange sub-plates 33 at two ends are axially symmetrical to each other, and are combined into a set of expansion card heat-exchange sub-plates 33 to jointly dissipate heat for one expansion card 203.

The expansion card heat-exchange sub-plates 33 are divided into two groups and clamp one end of the expansion card 203 respectively in the length direction of the expansion card 203, thereby reducing a length of the expansion card heat-exchange sub-plate 33. In addition, since the reduced length of the expansion card heat-exchange sub-plate 33 enhances resistance to stress bending and deformation, rigidity of each expansion card heat-exchange sub-plate 33 may be effectively increased, which reduces a risk of deformation of the expansion card heat-exchange sub-plate 33 during attachment to the expansion card 203 and during plugging and unplugging use, improves overall structural stability, helps to maintain good contact between the expansion card heat-exchange sub-plate 33 and the expansion card 203 during installation and disassembly processes, and ensures heat dissipation performance. Meanwhile, a region where the two expansion card heat-exchange sub-plates 33 are disconnected may further effectively prevent a chip protruding from the center of the expansion card 203 from being damaged by compression during plugging and unplugging.

The expansion card heat-exchange sub-plate 33 is connected to the main heat-exchange flow channel 10 through the fixed shaft 31, and therefore the expansion card heat-exchange sub-plate 33 may move freely on the fixed shaft 31. During actual assembly, the expansion card heat-exchange sub-plates 33 may be self-adapted and precisely adjust positions of the expansion card heat-exchange sub-plates based on a position of the expansion card 203, which may effectively solve the effect of poor attachment between the expansion card heat-exchange sub-plates 33 and the expansion card 203 caused by assembly tolerances of related components in the server 200, and ensure optimal fit with the expansion card 203.

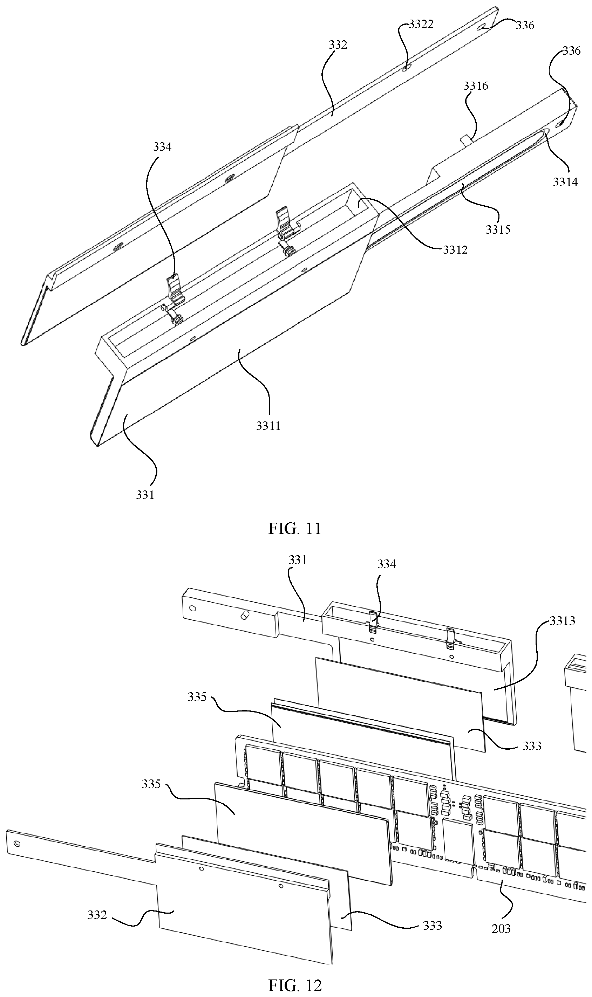

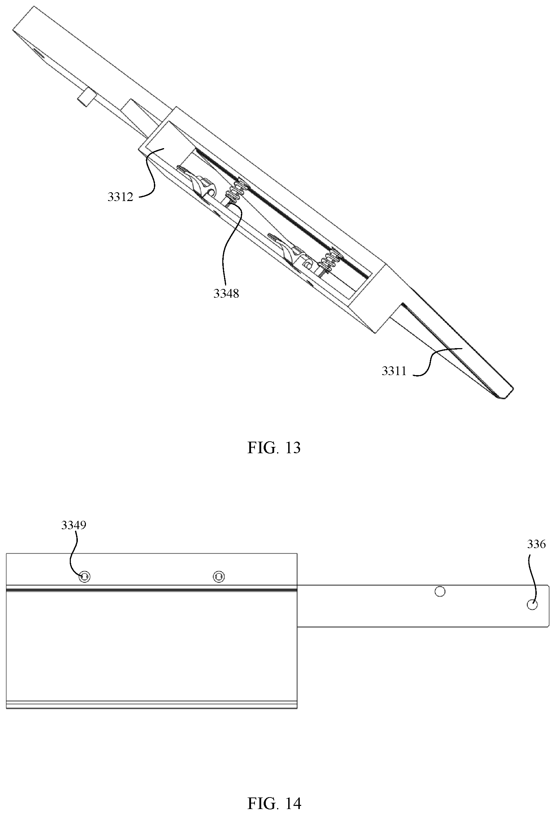

Also, referring to FIG. 11, FIG. 12, FIG. 13, and FIG. 14, in some possible implementations, the expansion card heat-exchange sub-plate 33 includes a main cold plate 331, a secondary cold plate 332, thermally conductive pads 333, and a locking switch assembly 334. In a thickness direction of the expansion card 203, the main cold plate 331 is located on one side of the expansion card 203. The secondary cold plate 332 is movably disposed on the main cold plate 331 and is located on the other side of the expansion card 203. The thermally conductive pads 333 are disposed on sides of the main cold plate 331 and the secondary cold plate 332 that face the expansion card 203. The main cold plate 331 and the secondary cold plate 332 are sleeved on the fixed shaft 31. The locking switch assembly 334 is disposed on the main cold plate 331, and the locking switch assembly 334 is used for driving the secondary cold plate 332 to move toward the main cold plate 331, so as to press the thermally conductive pads 333 on the secondary cold plate 332 and the main cold plate 331 against the expansion card 203.

The thermally conductive pads 333 are disposed on the sides of the main cold plate 331 and the secondary cold plate 332 that face the expansion card 203, which ensures good thermal contact between the expansion card heat-exchange sub-plate 33 and the expansion card 203, improves heat conduction efficiency, and may more effectively transfer the heat generated by the expansion card 203 to the expansion card heat-exchange sub-plate 33 for heat dissipation.

The secondary cold plate 332 is movably disposed on the main cold plate 331 and is adjusted through the locking switch assembly 334, which allows adjustment based on an actual thickness of the expansion card 203 during installation, so as to ensure tight contact between the expansion card heat-exchange sub-plate 33 and the expansion card 203.

The locking switch assembly 334 may drive the secondary cold plate 332 to move toward the main cold plate 331 to achieve rapid locking, which simplifies installation and disassembly processes of the expansion card heat-exchange sub-plate 33, reduces operation time, and improves operation and maintenance efficiency. Through adjustment of the locking switch assembly 334, appropriate pressing forces may be provided to avoid applying excessive mechanical stress to the expansion card 203, thereby reducing a risk of damage to the expansion card 203. The locking switch assembly 334 improves overall reliability of the system and ensures that the expansion card heat-exchange sub-plate 33 may maintain good thermal contact with the expansion card 203 under various operating conditions.

The expansion card heat-exchange sub-plate 33 may improve structural compatibility, reliability, and operational flexibility of the expansion card, and solve problems such as difficulty in plugging and unplugging of the current expansion card 203, poor contact of a heat dissipation surface, and cumbersome steps of replacing the expansion card 203. The expansion card heat-exchange sub-plate 33 is designed to be split at both ends, that is, two groups of expansion card heat-exchange sub-plates 33 having a length of approximately half the length of the expansion card 203 are combined to achieve heat dissipation for each expansion card 203. Each group of expansion card heat-exchange sub-plates 33 is designed to be provided with a locking switch assembly 334 for rapid locking, which provides adjustable spring forces to ensure good attachment between the thermally conductive pad 333 and the expansion card 203 and a required pressing force, may further achieve manual rapid locking and unlocking between the expansion card heat-exchange sub-plate 33 and the expansion card 203, meanwhile, reduces a failure rate of the expansion card 203, and further improves the service life thereof.

In some possible implementations, the main cold plate 331 includes a base plate 3311 and a reinforcement frame 3312. The base plate 3311 is sleeved on the fixed shaft 31, the reinforcement frame 3312 is disposed on the base plate 3311, the secondary cold plate 332 is movably disposed on the reinforcement frame 3312, and the locking switch assembly 334 is disposed on the reinforcement frame 3312.

In some possible implementations, the reinforcement frame 3312 is designed at a top end of the base plate 3311, which is used for strengthening rigidity of the base plate 3311 and preventing deformation caused by compression with the expansion card 203 during use on one hand; on the other hand, the reinforcement frame 3312 may provide a mounting hole for the locking switch assembly 334 and does not interfere with the expansion card 203 during operations.

Introduction of the reinforcement frame 3312 improves overall rigidity and strength of the main cold plate 331, reduces possible deformation of the expansion card heat-exchange sub-plate 33 during installation and use, ensures stable contact between the expansion card heat-exchange sub-plate 33 and the expansion card 203, and improves heat dissipation efficiency. The reinforcement frame 3312 helps to uniformly distribute pressure applied to the locking switch assembly 334 during a locking process, so as to avoid excessive local stress on the expansion card 203, and reduce a risk of damage to the expansion card 203.

In some possible implementations, a limiting groove 3313 is disposed on the base plate 3311, and the limiting groove 3313 is used for accommodating the thermally conductive pad 333.

The limiting groove 3313 provides a clear mounting position for the thermally conductive pad 333, ensures precise positioning of the thermally conductive pad 333 between the main cold plate 331 and the expansion card 203, helps to maintain an effective contact area of the thermally conductive pad 333, and improves heat conduction efficiency. The limiting groove 3313 may further effectively prevent the thermally conductive pad 333 from moving or sliding during installation and use, so as to ensure that the thermally conductive pad 333 is always in an optimal position, and avoid degradation of heat dissipation performance caused by position deviation.

The limiting groove 3313 provides a fixed position for the thermally conductive pad 333, simplifying an installation process, reducing a possibility of an installation error, and improving operational efficiency. Meanwhile, the limiting groove 3313 may further protect edges of the thermally conductive pad 333 to a certain extent, and reduce damage caused by mechanical stress or friction, thereby extending the service life of the thermally conductive pad 333.

In some possible implementations, a heat pipe groove 3314 is disposed on a side of the base plate 3311 that is away from the limiting groove 3313, and the heat pipe groove 3314 is used for a heat pipe 3315 to be embedded therein.

The heat pipe 3315 is a highly efficient heat conduction apparatus capable of rapidly transferring heat, and by embedding the heat pipe 3315 in the base plate 3311, heat may be more rapidly transferred from a region of the expansion card 203 to another part, so as to improve heat dissipation efficiency of the main cold plate 331.

Design of the heat pipe groove 3314 allows the heat pipe 3315 to be closely embedded in the base plate 3311, ensuring that heat is evenly distributed in the length direction of the heat pipe 3315, thereby helping to prevent a local overheating phenomenon and improving temperature uniformity of the expansion card 203. Embedding the heat pipe 3315 into the base plate 3311 through the heat pipe groove 3314 makes the main cold plate 331 more compact without significantly increasing a volume of the expansion card heat-exchange sub-plate 33. The heat pipe groove 3314 ensures close contact between the heat pipe 3315 and the base plate 3311, reducing thermal resistance in a heat transfer path and improving heat conduction efficiency.

In some possible implementations, a thermally conductive pad groove 3321 is disposed on a side of the secondary cold plate 332 that faces the expansion card 203, and the thermally conductive pad groove 3321 is used for accommodating the thermally conductive pad 333.

The thermally conductive pad groove 3321 provides a clear mounting position for the thermally conductive pad 333, ensures precise positioning of the thermally conductive pad 333 between the secondary cold plate 332 and the expansion card 203, helps to maintain an effective contact area of the thermally conductive pad 333, and improves heat conduction efficiency. The thermally conductive pad groove 3321 may further effectively prevent the thermally conductive pad 333 from moving or sliding during installation and use, so as to ensure that the thermally conductive pad 333 is always in an optimal position, and avoid degradation of heat dissipation performance caused by position deviation.

The thermally conductive pad groove 3321 provides a fixed position for the thermally conductive pad 333, simplifying an installation process, reducing a possibility of an installation error, and improving operational efficiency. Meanwhile, the thermally conductive pad groove 3321 may further protect edges of the thermally conductive pad 333 to a certain extent, and reduce damage caused by mechanical stress or friction, thereby extending the service life of the thermally conductive pad 333.

Hardness of the thermally conductive pads 333 on the main cold plate 331 and the secondary cold plate 332 is the same, so that forces applied by the locking switch assembly 334 on the main cold plate 331 and the secondary cold plate 332 are the same, and thus fastening forces borne by two sides of the expansion card 203 are also consistent, thereby avoiding tilting of the expansion card 203 to one side caused by different forces resulting from different contact methods or dimensional deviations on the two sides of the expansion card 203 in previous solutions, avoiding stress damage to golden fingers of the expansion card 203 and an expansion card slot, being beneficial to reduction of a failure rate of the expansion card 203, and further improving the service life of the expansion card.

In some possible implementations, one of the main cold plate 331 and the secondary cold plate 332 is provided with a guide pin 3316, and the other one of the main cold plate 331 and the secondary cold plate 332 is provided with a guide hole 3322 corresponding to the guide pin 3316.

Design of the guide pin 3316 and the guide hole 3322 ensures that the main cold plate 331 and the secondary cold plate 332 may be precisely aligned during an installation process, helping to ensure good contact between the expansion card heat-exchange sub-plate 33 and the expansion card 203 and improving heat conduction efficiency.

The guide pin 3316 and the guide hole 3322 provide a simple and effective alignment mechanism, such that the installation process is more intuitive and convenient, a possibility of an installation error is reduced, and the operational efficiency is improved. During use, the guide pin 3316 and the guide hole 3322 may effectively prevent relative misalignment of the main cold plate 331 and the secondary cold plate 332, ensuring that the expansion card heat-exchange sub-plate 33 maintains a stable structure during operations.

In some possible implementations, the base plate 3311 and the secondary cold plate 332 are provided with a through hole 336, and the through hole 336 is used for the fixed shaft 31 to pass through. The through hole 336 mates with the fixed shaft 31 to form a hinge structure, such that the base plate 3311 and the secondary cold plate 332 may rotate on the fixed shaft 31.

In some possible implementations, the secondary cold plate 332 has no heat pipe groove thereon, and thus a thickness of the secondary cold plate may be appropriately reduced to meet requirements of a spacing of the expansion cards 203.

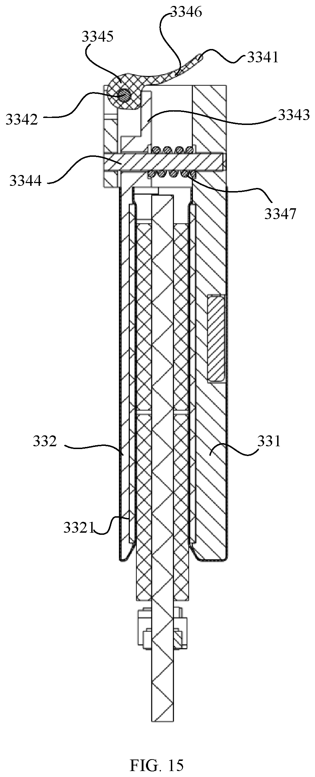

Also, referring to FIG. 15, in some possible implementations, the locking switch assembly 334 includes a cam wrench 3341, a cam rotating shaft 3342, a pressing slider 3343, and a guide shaft 3344. The cam wrench 3341 is rotatably disposed on the reinforcement frame 3312 through the cam rotating shaft 3342. The guide shaft 3344 is disposed on the reinforcement frame 3312. The secondary cold plate 332 is sleeved on the guide shaft 3344, and the pressing slider 3343 is disposed on the secondary cold plate 332 and faces the cam wrench 3341. The cam wrench 3341 is used for pushing the pressing slider 3343 to move in an axial direction of the guide shaft 3344, so as to cause the secondary cold plate 332 to move toward the main cold plate 331.

When the expansion card heat-exchange sub-plate 33 is mounted on the expansion card 203, the main cold plate 331 and the secondary cold plate 332 rotate together around the fixed shaft 31 to the two sides of the expansion card 203 until making contact with the main heat-exchange sub-flow channel 11, at this time, the quick locking assembly 32 is lowered and locked, and finally the cam wrench 3341 is moved from a vertical position to a horizontal position to achieve locking. During the process, a cam of the cam wrench 3341 rotates from a minor diameter to a major diameter, so as to push the pressing slider 3343 to translate along the guide shaft 3344. In the above process, the pressing slider 3343 drives the secondary cold plate 332 to translate, and the thermally conductive pads 333 on the main cold plate 331 and the secondary cold plate 332 first make contact with the expansion card 203, and as the main cold plate 331 and the secondary cold plate 332 continue to translate and clamp the expansion card 203 under a cam thrust, the thermally conductive pads 333 may be further compressed, so as to ensure that a required preload force is met between the thermally conductive pads 333 and the expansion card 203, thereby reducing thermal contact resistance, and achieving an optimal heat dissipation effect.

Tight fitting and unlocking of the expansion card heat-exchange sub-plate 33 and the expansion card 203 simply require toggling the cam wrench 3341, so that the operation is fast and reliable, thereby effectively reducing the failure rate and operation time of electronic component replacement. Use of the cam wrench 3341 makes a locking process and an unlocking process simple and intuitive, so that an operator may quickly complete installation and disassembly of the expansion card heat-exchange sub-plate 33 and the expansion card 203, thereby improving operational efficiency.

The cam wrench 3341, through rotation of the cam rotating shaft 3342, is capable of precisely controlling movement of the pressing slider 3343, allowing a precise pressing force to be applied to the secondary cold plate 332, thereby ensuring good thermal contact between the expansion card heat-exchange sub-plate 33 and the expansion card 203.

The guide shaft 3344 provides a stable sliding path to prevent the secondary cold plate 332 from shifting or tilting during movement, thereby ensuring stability of the expansion card heat-exchange sub-plate 33. Through a cam mechanism, the pressing slider 3343 may move smoothly in the axial direction of the guide shaft 3344, ensuring that a force applied to the secondary cold plate 332 is uniform, thereby reducing local stress concentration, and lowering a risk of damage to the expansion card 203.

In some possible implementations, the cam wrench 3341 has a cam portion 3345 and a handle portion 3346, the cam portion 3345 is rotatably disposed on the cam rotating shaft 3342 and abuts against and mates with the pressing slider 3343, and the handle portion 3346 is connected to the cam portion 3345.

The cam portion 3345, through abutting against and mating with the pressing slider 3343, may convert rotational motion into linear motion, thereby precisely controlling the pressing force applied to the secondary cold plate 332, helping to ensure good thermal contact between the expansion card heat-exchange sub-plate 33 and the expansion card 203, and improving heat dissipation efficiency.

The handle portion 3346 provides an interface facilitating gripping and operation, enabling a user to easily rotate the cam wrench 3341, thereby improving efficiency of installation and disassembly, and reducing operation time. By adjusting a rotation angle of the handle portion 3346, the user may conveniently adjust a magnitude of the pressing force, flexible adjustment based on specific installation requirements is allowed, so as to ensure an optimal pressing effect.

In some possible implementations, a mating surface of the cam portion 3345 and the pressing slider 3343 is an arc surface, which may ensure smooth sliding during a mating process.

In some possible implementations, a self-locking surface is disposed on the cam portion 3345, and the self-locking surface may mate with the pressing slider 3343 to achieve self-locking of the cam wrench 3341, thereby preventing accidental loosening or movement, ensuring that the locking switch assembly 334 remains stable during operations, and maintaining precise alignment and positions, so as to enhance precision and performance of the entire system and improve overall reliability of the system.

In some possible implementations, the locking switch assembly 334 further includes a compression spring 3347, the compression spring 3347 is sleeved on the guide shaft 3344 and is located on a side of the pressing slider 3343 that is away from the cam wrench 3341, one side of the compression spring 3347 is connected to the reinforcement frame 3312, and the other side of the compression spring 3347 is connected to the pressing slider 3343.

The compression spring 3347 provides a buffering mechanism capable of absorbing and mitigating mechanical shocks and vibrations that may be generated during installation and use, helping to protect the expansion card heat-exchange sub-plate 33 and the expansion card 203, and extending the service life of the expansion card heat-exchange sub-plate and the expansion card.

A difference between the major diameter and the minor diameter of the cam portion 3345 is a horizontal displacement amount of the secondary cold plate 332. Based on this, parameters such as a compression amount of the thermally conductive pad 333 may be further calculated, thereby facilitating design and selection. When operation and maintenance or unlocking of the expansion card heat-exchange sub-plate 33 are/is needed, the cam wrench 3341 is toggled from the horizontal position to the vertical position, thereby opening the locking switch device. During the process, the cam portion 3345 rotates from the major diameter to the minor diameter, and the compression spring 3347 pushes the pressing slider 3343 to translate in a loosening direction during a rebounding process, at this time, the thermally conductive pads 333 of the main cold plate 331 and the secondary cold plate 332 as well as the expansion card 203 change from a compressed state to a non-contact state. Therefore, after the quick locking assembly 32 is unlocked, the expansion card 203 may be smoothly pulled out from the motherboard 201 by opening an expansion card slot switch, thereby achieving tool-free and quick replacement.

In some possible implementations, one of the pressing slider 3343 and the guide shaft 3344 is provided with a guide groove 3348, and the other one of the pressing slider 3343 and the guide shaft 3344 is provided with a guide block 3349 corresponding to the guide groove 3348.

Cooperative use of the guide groove 3348 and the guide block 3349 may ensure that the main cold plate 331 and the secondary cold plate 332 do not tilt during a translation process, thereby improving accuracy of fitting with the expansion card 203.

Combination of the guide groove 3348 and the guide block 3349 ensures precise linear motion of the pressing slider 3343 along the guide shaft 3344, thereby helping to prevent the pressing slider 3343 from shifting or tilting during movement, and ensuring that the applied pressing force is uniform and stable. Design of the guide groove 3348 and the guide block 3349 provides a clear motion path, so as to reduce friction and wear between the pressing slider 3343 and other components, thereby extending the service life of the components. The precise guide mechanism improves reliability of locking and unlocking operations, so as to ensure that each operation may achieve an expected pressing effect, thereby enhancing overall reliability of the system.

In some possible implementations, the expansion card heat-exchange sub-plate 33 further includes a scratch-resistant film 335, and the scratch-resistant film 335 is adhered to the thermally conductive pad 333, the main cold plate 331, and the secondary cold plate 332.

The scratch-resistant film 335 may effectively protect the thermally conductive pad 333 as well as surfaces of the main cold plate 331 and the secondary cold plate 332, reduce a friction force during installation, and prevent scratches, wear, or other physical damage during installation, operation, and maintenance, thereby extending the service life of the components, maintaining integrity and thermal conductivity of the thermally conductive pads 333, and ensuring that heat may be efficiently transferred from the expansion card 203 to the expansion card heat-exchange sub-plate 33.

The scratch-resistant film 335 may further prevent dust, grease, and other contaminants from adhering to the thermally conductive pad 333 as well as the surfaces of the main cold plate 331 and the secondary cold plate 332, thereby maintaining cleanliness of the components and improving heat dissipation efficiency. Presence of the scratch-resistant film 335 makes cleaning and maintenance processes simpler, so that the user may easily wipe off dirt on the film without worrying about damaging the thermally conductive pad 333 or the surfaces of the main cold plate 331 and the secondary cold plate 332.

In some possible implementations, a thermally conductive groove 133 is disposed on the cover plate 13, a heat exchange pad 134 is disposed in the thermally conductive groove 133, and the expansion card heat-exchange sub-plate 33 abuts against the heat exchange pad 134.

Design of the thermally conductive groove 133 may reduce thermal resistance of heat from the expansion card 203 continuing to be transferred to the main heat-exchange sub-flow channel 11 through the expansion card heat-exchange sub-plate 33. In this way, a wall thickness of the main heat-exchange sub-flow channel 11 in a heat conducting region here may be reduced, and heat conduction thermal resistance thereof may be reduced; on the other hand, a position of the heat exchange pad 134 may be better fixed, so that the heat exchange pad may be prevented from moving, generating wrinkles, or falling off after being compressed, so as to improve the service life.

The heat exchange pad 134 may effectively fill a gap in the heat conducting region between the expansion card heat-exchange sub-plate 33 and the cover plate 13, so as to ensure close contact between the two, and reduce thermal contact resistance. The heat conduction efficiency is improved, and heat generated by the expansion card 203 is transferred to the cover plate 13 more rapidly for heat dissipation.

Combined design of the thermally conductive groove 133 and the heat exchange pad 134 reduces thermal resistance in the heat transfer path, and ensures that heat may be efficiently transferred from the expansion card heat-exchange sub-plate 33 to the cover plate 13.

The thermally conductive groove 133 provides a defined position for placing the heat exchange pad 134, which simplifies an installation process, thereby ensuring correct positioning of the heat exchange pad 134, and improving operational efficiency.

The heat exchange pad 134 has certain flexibility, and may compensate for possible unevenness on surfaces of the expansion card heat-exchange sub-plate 33 and the cover plate 13, thereby improving a contact area and the heat conduction efficiency.

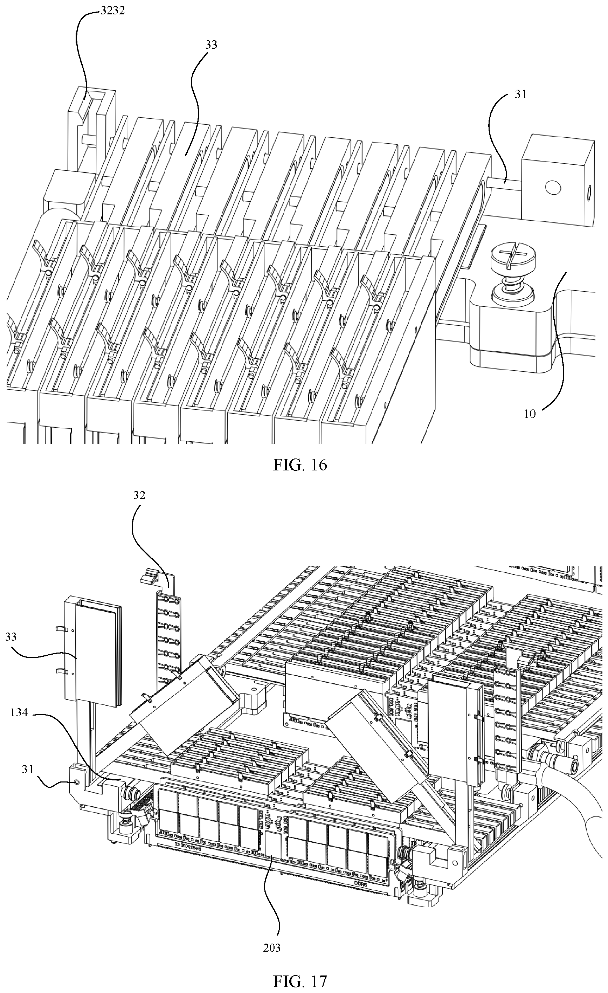

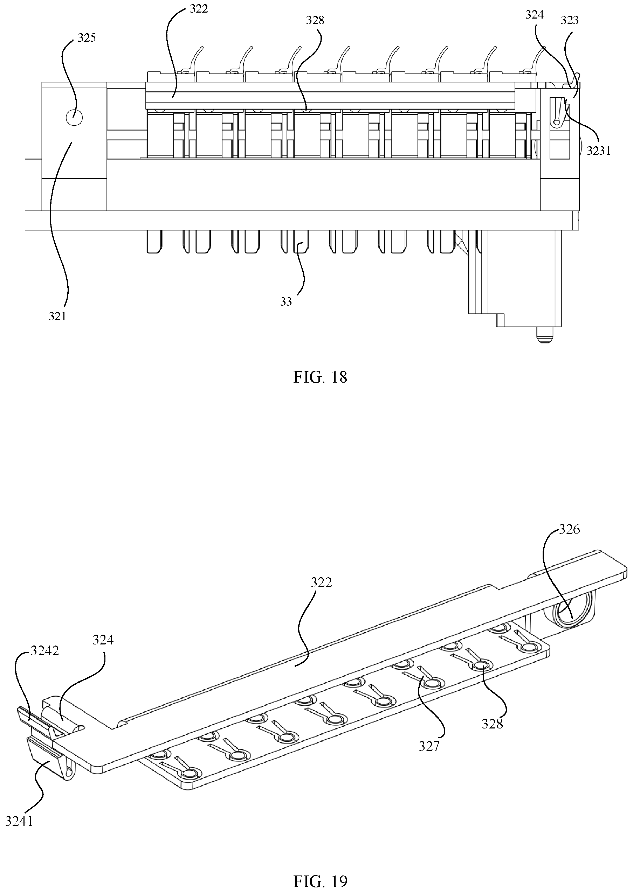

Also, referring to FIG. 16, FIG. 17, FIG. 18, FIG. 19, and FIG. 20, in some possible implementations, the quick locking assembly 32 includes a pressure rod bracket 321, a pressure rod 322, a lock catch 323, and a lock piece 324. The lock catch 323 is disposed on the main heat-exchange flow channel 10, one end of the pressure rod 322 is rotatably disposed on the pressure rod bracket 321, the other end of the pressure rod 322 is provided with the lock piece 324, and the lock catch 323 mates with the lock piece 324 for locking the pressure rod 322 and causing the pressure rod 322 to press against one side of the expansion card heat-exchange sub-plate 33 that is away from the main heat-exchange flow channel 10 so as to enable the expansion card heat-exchange sub-plate 33 to abut against the main heat-exchange flow channel 10.

The quick locking assembly 32 is used for applying a specific fastening force to the expansion card heat-exchange sub-plate 33, thereby further improving heat conduction efficiency of the expansion card heat-exchange sub-plate 33 and the main heat-exchange sub-flow channel 11, and reducing thermal contact resistance thereof.

The design of the quick locking assembly 32 allows the user to quickly lock or release the expansion card heat-exchange sub-plate 33 through a simple operation of the pressure rod 322, thereby greatly simplifying installation and disassembly processes, and improving operational efficiency.

Mating of the lock catch 323 with the lock piece 324 provides a stable mechanical connection, which ensures that the pressure rod 322 may firmly press the expansion card heat-exchange sub-plate 33 against the main heat-exchange flow channel 10, thereby preventing loosening or displacement during use. The design of the pressure rod 322 makes a force applied to the expansion card heat-exchange sub-plate 33 uniform, thereby ensuring good contact between the expansion card heat-exchange sub-plate 33 and the main heat-exchange flow channel 10 and improving heat conduction efficiency.

In some possible implementations, the pressure rod bracket 321 and the lock catch 323 are respectively disposed on the main heat-exchange flow channel 10 and are located on two sides of a plurality of expansion cards 203 arranged in sequence. When the lock catch 323 mates with the lock piece 324, an extension direction of the pressure rod 322 is the same as a direction in which the plurality of expansion cards 203 are arranged in sequence, so as to simultaneously press the plurality of expansion card heat-exchange sub-plates 33 against the corresponding expansion cards 203.

In some possible implementations, the quick locking assembly 32 further includes a limiting screw rod 325. The limiting screw rod 325 is disposed on the pressure rod bracket 321, one end of the pressure rod 322 is provided with a pressure rod sleeve 326, and the pressure rod sleeve 326 is sleeved on the limiting screw rod 325.

The limiting screw rod 325 provides a defined limiting function and ensures that the pressure rod 322 is maintained at a predetermined position during operations, thereby helping ensure a stable connection between the expansion card heat-exchange sub-plate 33 and the main heat-exchange flow channel 10. By limiting a moving range of the pressure rod 322, the limiting screw rod 325 may prevent excessive force application, so as to avoid damage to the expansion card heat-exchange sub-plate 33 and other components.

The pressure rod sleeve 326 is sleeved on the limiting screw rod 325, to provide additional support and guidance, thereby enhancing the stability of the pressure rod 322 and reducing possible shaking or deviation during operations.

In some possible implementations, the side of the pressure rod 322 that faces the expansion card heat-exchange sub-plate 33 is provided with an elastic sheet 327, and the elastic sheet 327 is provided with a protrusion structure 328 opposite to the expansion card heat-exchange sub-plate 33.

The elastic sheet 327 has certain elasticity, may provide additional buffering and support when the pressure rod 322 applies a force, adapts to slight dimensional changes caused by thermal expansion or other factors, and ensures stable contact between the expansion card heat-exchange sub-plate 33 and the main heat-exchange flow channel 10. The elastic sheet 327 and the protrusion structure 328 help to improve heat conduction efficiency and enhance a heat dissipation effect.

The protrusion structure 328 may apply force in a concentrated manner to a specific region, so as to ensure that pressure applied to the expansion card heat-exchange sub-plate 33 is uniform, thereby reducing local stress concentration and reducing a risk of component damage.

A height of the protrusion structure 328 on the corresponding elastic sheet 327 may be designed based on a required compression amount of the heat exchange pad 134. When the pressure rod 322 is lowered and locked, the protrusion structure 328 on the elastic sheet 327 presses against the expansion card heat-exchange sub-plate 33, so that the elastic sheet 327 undergoes elastic deformation and generates a specific elastic force acting on the expansion card heat-exchange sub-plate 33, and the acting force is transferred through the expansion card heat-exchange sub-plate 33 and compresses the heat exchange pad 134 in the thermally conductive groove 133, so as to satisfy a fastening force requirement thereof.

In some possible implementations, the lock catch 323 includes a locking pin 3231 and a guide inclined surface 3232, the lock piece 324 is provided with a blocking piece 3241 and a toggle piece 3242, the locking pin 3231 mates with the blocking piece 3241 in a limiting manner, and the toggle piece 3242 is connected to the blocking piece 3241. When the pressure rod 322 is pressed until the locking pin 3231 mates with the blocking piece 3241 in a limiting manner, locking may be achieved, and when the toggle piece 3242 is toggled so that the locking pin 3231 is disengaged from the blocking piece 3241, unlocking may be achieved, thereby realizing tool-free installation, and improving operational efficiency.

Mating in a limiting manner between the locking pin 3231 and the blocking piece 3241 provides a stable locking mechanism, ensuring that the pressure rod 322 does not loosen when at a locked position, thereby maintaining a stable connection between the expansion card heat-exchange sub-plate 33 and the main heat-exchange flow channel 10. The guide inclined surface 3232 facilitates guiding the lock piece 324 into a correct position to reduce a need for precise alignment during operations, such that locking and unlocking processes are made smoother and more intuitive. The presence of the guide inclined surface 3232 further reduces direct friction between the lock piece 324 and the locking pin 3231, thereby reducing wear and extending the service life of the component. Design of the toggle piece 3242 allows the user to quickly release the locking mechanism through a simple action, thereby simplifying a disassembly process and improving operation efficiency.

In some embodiments of the present application, by unlocking the quick locking assembly 32 and the locking switch assembly 334, the expansion card heat-exchange sub-plate 33 may be rotated along the fixed shaft 31 and be lifted to completely expose the expansion card slot switch, and with no components obstructing a region above, the operator may directly perform an unlocking operation on the expansion card slot switch. This effectively solves a difficulty in existing memory cold plate solutions where the memory slot switch needs to be unlocked through a tool from a gap between adjacent memory cold plates across the memory cold plate, thereby greatly improving operation efficiency and safety.

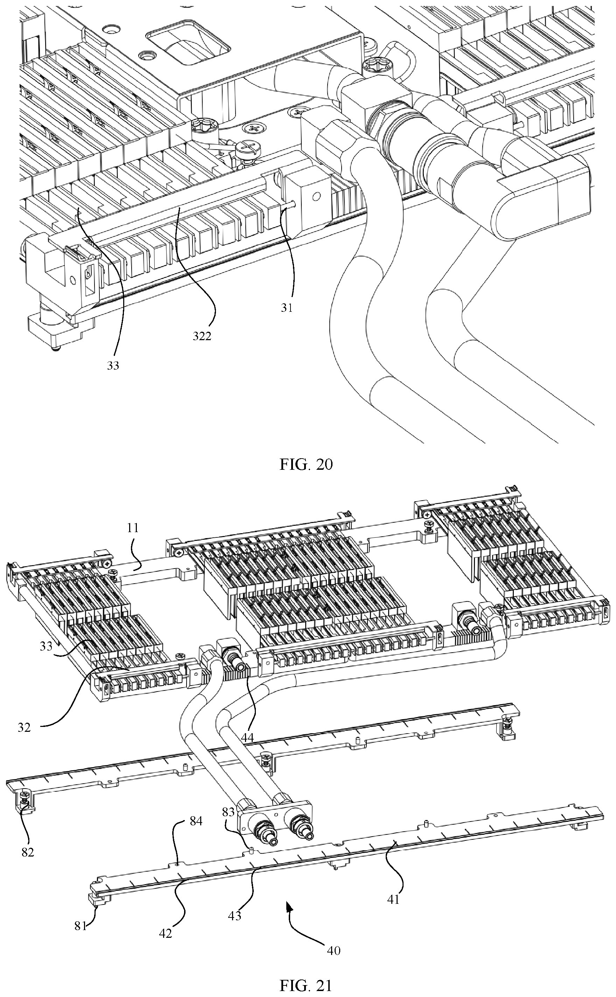

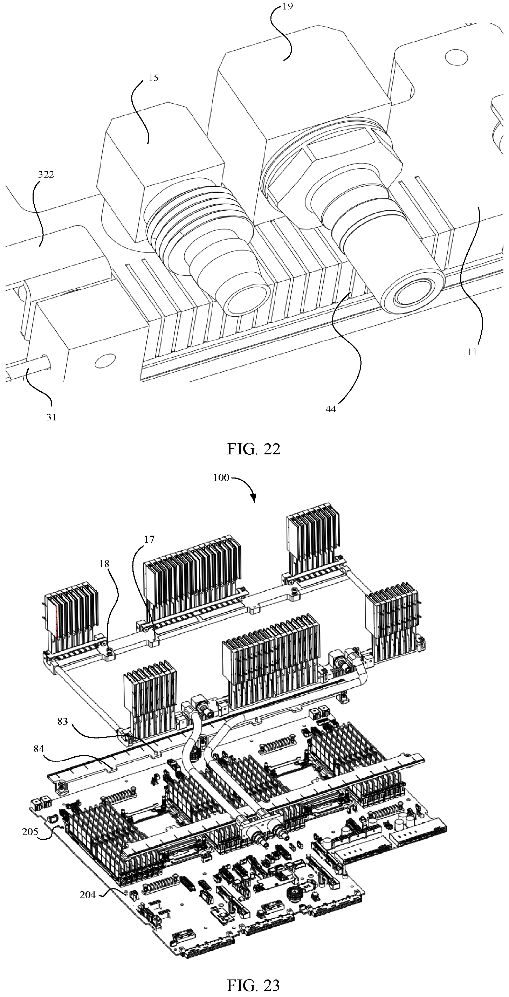

Also, referring to FIG. 21 and FIG. 22 at the same time, in some possible implementations, the liquid-cooling heat dissipation apparatus 100 further includes a liquid leakage detection mechanism 40, and the liquid leakage detection mechanism 40 includes a processor liquid leakage detection assembly and an expansion card liquid leakage detection assembly.

The liquid leakage detection mechanism 40 may rapidly detect any leakage in the liquid cooling system and promptly issue an alarm or take an automatic protection measure to prevent damage caused by liquid leakage. The processor 202 and the expansion card 203 are key components in a computer system, and the liquid leakage detection mechanism 40 specially monitors these regions, facilitating protection of these key components against liquid damage and extending their service life. By rapidly detecting and responding to a liquid leakage issue, the system may perform repair before the issue escalates, thereby reducing unexpected downtime caused by liquid leakage and improving system availability. The liquid leakage detection mechanism 40 may be integrated with an automated management and monitoring system of the system to achieve real-time monitoring of and automated response to the liquid cooling system, improving management efficiency. To satisfy flexibility requirements, the processor liquid leakage detection assembly and the expansion card liquid leakage detection assembly are independently designed and respectively have independent signal interfaces to be connected to the motherboard 201.

In some possible implementations, the processor liquid leakage detection assembly includes a second heat exchange mechanism detection element, a second heat exchange mechanism and connecting pipeline connection detection element, and a second heat exchange mechanism connecting pipeline detection element.

The processor liquid leakage detection assembly are disposed at locations such as a welding joint of the second heat exchange mechanism, a connection portion between the second heat exchange mechanism and the connecting pipeline, and positions below the second heat exchange mechanism connecting pipeline and a maintenance joint connecting pipeline. Fixing of the liquid leakage detection wire to metal parts such as a cold plate and a joint may be achieved through means such as winding along an outer diameter of the metal part, an acetate tape, a waterproof tape, or a snap fastener, and fixing of the liquid leakage detection wire to the connecting pipeline may be achieved by wrapping the liquid leakage detection wire and the connecting pipeline inside a heat shrink tubing and then performing heat shrinking.

A plurality of detection elements are disposed at key positions, so that the system may comprehensively monitor the second heat exchange mechanism, the connecting pipeline, and connection points thereof, thereby ensuring that any potential leakage issue may be promptly detected. Comprehensive liquid leakage detection improves overall reliability of the liquid cooling system, ensures safe operation under various operating conditions, and reduces a risk of failure caused by liquid leakage.

In some possible implementations, the liquid-cooling heat dissipation apparatus 100 further includes a cold plate bracket 80, and the expansion card liquid leakage detection assembly includes a first flow guide groove 41, a detection wire groove 42, and a liquid leakage detection wire 43. The main heat-exchange flow channel 10 is disposed on the cold plate bracket 80, and a side of the cold plate bracket 80 that faces the main heat-exchange flow channel 10 is provided with the detection wire groove 42 and a plurality of first flow guide grooves 41. The plurality of first flow guide grooves 41 are disposed at intervals, the plurality of first flow guide grooves 41 communicate with each other via the detection wire groove 42, and the liquid leakage detection wire 43 is disposed in the detection wire groove 42. The first flow guide groove 41 is used for collecting and directing leaked liquid in the main heat-exchange flow channel 10 to prevent leaked liquid in the main heat-exchange flow channel 10 from spreading to the motherboard 201 and damaging a circuit. The detection wire groove 42 is used for placing and protecting the liquid leakage detection wire 43 to prevent the liquid leakage detection wire from being damaged by pulling and friction on one hand, and is used for receiving leaked liquid directed from the first flow guide groove 41 on the other hand. Once liquid leakage is detected, an electrical signal of the liquid leakage detection wire 43 changes accordingly and triggers an alarm. After receiving an alarm signal, a server management module immediately issues an instruction to shut down a server power supply to avoid equipment and data loss.

If the expansion card liquid leakage detection assembly follows an installation scheme of the processor liquid leakage detection assembly, the liquid leakage detection wire needs to be fixed to the main heat-exchange sub-flow channel 11 through a tape to perform leaked liquid detection. However, in actual use, due to different structures of the expansion card heat-exchange sub-plates 33 and a need to frequently operate the expansion card 203, in the above-mentioned method, there is a difficulty in fixing the liquid leakage detection wire flatly and firmly to the expansion card heat-exchange sub-plate 33, and the liquid leakage detection wire may easily loosen or be displaced and then interfere with the expansion card slot switch during opening and closing processes, causing damage to the liquid leakage detection wire due to wear and pulling, and failures such as inability to lock due to interference with the expansion card slot switch, which result in the expansion card 203 not being installed in place. If a quantity of fixing tapes is increased, part of the leaked liquid may be absorbed and isolated, affecting accuracy of the liquid leakage detection system. Therefore, the expansion card liquid leakage detection assembly in some embodiments of the present application simultaneously considers convenience of installation as well as operation and maintenance, and accuracy of a detection function.

Disposing of the plurality of first flow guide grooves 41 may effectively guide any potential leaked liquid to flow toward the specific detection wire groove 42, ensuring that the leaked liquid may be rapidly collected and detected, and reducing diffusion of liquid in the system. A plurality of spaced first flow guide grooves 41 and detection wire grooves 42 are disposed on the cold plate bracket 80, so that the system may cover a larger region, ensuring that liquid leakage at any position may be detected, and improving an overall detection coverage. Communicating design of the detection wire groove 42 with the plurality of first flow guide grooves 41 enables the liquid leakage detection wire 43 to rapidly detect liquid in any first flow guide groove 41, providing a timely liquid leakage alarm and preventing the liquid from causing damage to the system. Efficient and reliable liquid leakage detection may be achieved within limited space, interference with the expansion card 203 is not easily caused, there is firm fixing and good contact, and damage is not easily caused during installation and maintenance, thereby reducing a difficulty in production and maintenance operations, effectively improving detection accuracy as well as installation and maintenance efficiency, and saving server downtime.

In some possible implementations, a fixing seat 19 is disposed on the main heat-exchange flow channel 10, and the fixing seat 19 is used for connecting to the second heat exchange mechanism.

A connector is disposed on the fixing seat 19, one of the connector and a connection end of the second heat exchange mechanism is a female connector, the other one of the connector and a connection end of the second heat exchange mechanism is a male connector, and the two are mutually docked, so as to realize a connection to the second heat exchange mechanism.

In some possible implementations, a second flow guide groove 44 penetrating the main heat-exchange flow channel 10 is disposed on the main heat-exchange flow channel 10 below a connection port between the second heat exchange mechanism and the fixing seat 19, and the second flow guide groove 44 communicates with the detection wire groove 42.

Disposing of the second flow guide groove 44 may effectively guide any leaked liquid from the connection port of the second heat exchange mechanism to rapidly flow into the detection wire groove 42, thereby improving efficiency of liquid leakage detection. The second flow guide groove 44 communicates with the detection wire groove 42, so that the system may cover a larger detection region that is not limited to a region of the expansion card 203 and further includes a region near the connection port of the second heat exchange mechanism, so as to ensure comprehensive monitoring. Since the second flow guide groove 44 directly penetrates the main heat-exchange flow channel 10, any leaked liquid may be rapidly guided to the liquid leakage detection wire 43 in the detection wire groove 42, therefore, when liquid leakage occurs at the connection port of the second heat exchange mechanism, the leaked liquid will drip onto a surface of the main heat-exchange flow channel 10 under an action of gravity, and when the liquid accumulates to a certain volume, the liquid may flow along the second flow guide groove 44 to the detection wire groove 42. The liquid leakage detection wire 43 disposed in the detection wire groove 42 will immediately trigger an alarm after being wetted, thereby achieving rapid response and reducing potential damage to the system by the liquid. This design makes the liquid leakage detection system more integrated and simplified, reduces a need for additional sensors or complicated wiring, and reduces system complexity and costs.

In some possible implementations, a width of the second flow guide groove 44 covers a range where liquid leakage may exist at a connection portion between the fixing seat 19 and the second heat exchange mechanism, that is, the width of the second flow guide groove 44 is greater than a gap between the female connector and the male connector, so that more comprehensive detection of the liquid leakage at the connection portion of the second heat exchange mechanism may be performed.

In some possible implementations, the inlet 15 is disposed adjacent to one of the fixing seats 19, the outlet 16 is disposed adjacent to another fixing seat 19, and a length of the second flow guide groove 44 covers the inlet 15 and the one of the fixing seats 19, or the outlet 16 and the another fixing seat 19, so that liquid leakage at the inlet 15 and the fixing seat 19, or liquid leakage at the outlet 16 and the fixing seat 19 may be simultaneously detected.

The liquid leakage detection mechanism 40 of the present application effectively solves a problem of a failure in liquid leakage detection at the connection port of the second heat exchange mechanism within limited space. For movable components for connections such as a quick connector that may be used by the second heat exchange mechanism, which need to be connected during operations and disconnected during maintenance, accuracy of liquid leakage detection and service life thereof are of critical importance. If the liquid leakage detection wire is directly laid along a connection direction of the quick connector and fixed integrally with the quick connector, the liquid leakage detection wire has to be provided with a connection terminal in the middle, so as to be connected and disconnected. Therefore, in actual use, when the quick connector needs to be unlocked and disconnected, a connection terminal of the liquid leakage detection wire at this location needs to be disconnected first, and after the quick connector is connected and locked, the connection terminal of the liquid leakage detection wire at this location needs to be connected again. The above operation steps will inevitably increase the operation difficulty and time, and if there is slight carelessness, the liquid leakage detection wire may be damaged due to pulling by an external force. At the same time, a shape of the quick connector is generally a continuous curved surface in an axial direction, and problems such as difficulty in good fitting and fixing of the liquid leakage detection wire with the quick connector, and inability to cover all regions of droplet leakage may also lead to low detection accuracy. The liquid leakage detection mechanism 40 of some embodiments of the present application avoids winding a complicated liquid leakage detection wire loop on the expansion card heat-exchange sub-plate 33, so as to solve an interference problem that is prone to occurring in practical application, and further effectively improves detection accuracy and installation and maintenance efficiency, thereby saving server downtime.

In some possible implementations, a first positioning pin 81 and a first captive screw 82 are disposed on the cold plate bracket 80, the first positioning pin 81 corresponds to a first positioning hole 204 on the motherboard 201, and the first captive screw 82 corresponds to a motherboard screw hole 205 on the motherboard.

The first positioning pin 81 corresponds to the positioning hole 204 on the motherboard, ensures that the cold plate bracket 80 may be accurately positioned on the motherboard 201, and helps to ensure correct alignment of the cold plate bracket 80 with the processor 202 or other components, thereby optimizing heat conduction efficiency. Design of the first positioning pin 81 and the first captive screw 82 makes an installation process simpler and more intuitive, reduces a possibility of an installation error, improves operational efficiency, facilitates maintenance and replacement of the cold plate bracket 80 and related components, allows the user to easily remove and reinstall these components, and reduces maintenance costs. The user may easily fix the cold plate bracket 80 in place without complicated adjustments. Design of the first captive screw 82 ensures that the screw does not fall off during installation and maintenance, reduces a risk of losing the screw, and further ensures that the cold plate bracket 80 remains stable during use, so as to prevent loosening caused by vibration or movement.

In some possible implementations, a second positioning hole 17 and a second captive screw 18 are disposed on the main heat-exchange flow channel 10, a second positioning pin 83 and a bracket screw hole 84 are disposed on the cold plate bracket 80, the second positioning pin 83 corresponds to the second positioning hole 17, and the second captive screw 18 corresponds to the bracket screw hole 84.

The second positioning pin 83 corresponds to the second positioning hole 17, so as to ensure precise alignment of the cold plate bracket 80 and the main heat-exchange flow channel 10, help to optimize a liquid flow path and heat conduction efficiency, and ensure efficient operation of the system.

Design of the second positioning pin 83 and the second captive screw 18 makes an installation process simpler and more intuitive. The user may easily fix the main heat-exchange flow channel 10 to the cold plate bracket 80 without complicated adjustment, thereby reducing a possibility of an installation error, facilitating maintenance and replacement of the main heat-exchange flow channel 10 and related components, allowing the user to easily remove and reinstall these components, and reducing maintenance costs. Design of the second captive screw 18 ensures that the screw does not fall off during installation and maintenance to reduce a risk of losing the screw and screwdriver slippage, and further ensures that the main heat-exchange flow channel 10 remains stable during use to prevent loosening caused by vibration or movement.

In some possible implementations, the liquid-cooling heat dissipation apparatus 100 further includes a liquid supply and return connector assembly 50, the liquid supply and return connector assembly 50 communicates with the main heat-exchange flow channel 10, and the liquid supply and return connector assembly 50 is mainly used for opening and closing of a coolant flow path in the server 200.

Introduction of the liquid supply and return connector assembly 50 allows the coolant to circulate in the main heat-exchange flow channel 10, so as to carry away heat generated by electronic components such as the processor 202 and the expansion card 203, thereby achieving efficient thermal management and heat dissipation. The liquid supply and return connector assembly 50 may be integrated with an external cooling system (for example, a chiller or radiator) to provide a flexible heat dissipation solution and adapt to different application requirements and environmental conditions. Through continuous liquid circulation, the liquid-cooling heat dissipation apparatus 100 may maintain stable temperature in the system, prevent overheating, and improve performance and reliability of an electronic device.

In some possible implementations, the liquid supply and return connector assembly 50 is fixed on a leftmost side of a rear window of the server 200, and is connected with a cabinet-side water distributor through a liquid supply and return quick connector 206, so that a coolant circuit is conducted, and separation of water and electricity from a power module on a right side of the server 200 is achieved to the maximum extent.

In some possible implementations, the liquid supply and return connector assembly 50 includes a liquid inlet pipeline 51 and a liquid return pipeline 52, the liquid inlet pipeline 51 communicates with one side of the main heat-exchange flow channel 10, and the liquid return pipeline 52 communicates with the other side of the main heat-exchange flow channel 10.

The coolant enters the liquid-cooling heat dissipation apparatus 100 of the server 200 through the liquid supply and return quick connector 206 and reaches the first main heat-exchange sub-flow channel 111 through the liquid inlet pipeline 51, and the coolant flowing out from the third main heat-exchange sub-flow channel 113 returns to the liquid supply and return quick connector 206 through the liquid return pipeline 52, thereby completing an entire circulation process of the coolant in the server 200.

By connecting the liquid inlet pipeline 51 and the liquid return pipeline 52 to two sides of the main heat-exchange flow channel 10 respectively, a complete circulation path is formed, ensuring that the coolant may effectively flow through the entire main heat-exchange flow channel 10 and carry away heat generated by the device, so as to achieve efficient heat exchange. This design allows flexible configuration of a flow direction and a flow rate of the coolant to adapt to different heat dissipation requirements and system configurations, providing greater design and application flexibility.

Also, referring to FIG. 23, during installation, the first step is to install the cold plate bracket 80, and align and place all the first positioning pins 81 on the cold plate bracket 80 into the first positioning holes 204 on the motherboard 201, at this time, the first captive screw 82 may also be aligned with the motherboard screw hole 205 to fasten the first captive screw 82 in place. The second step is to lift the pressure rod 322, rotate all the expansion card heat-exchange sub-plates 33 around the fixed shaft 31 to a maximum elevation angle position, at this time, the pressure rod 322 is put down and locked. Then, all the expansion card heat-exchange sub-plates 33 are rotated around the fixed shaft 31 in a reverse direction and rested against the pressure rod 322, and the pressure rod 322 serves to block and limit the expansion card heat-exchange sub-plates 33 to restrict the expansion card heat-exchange sub-plates from continuing to fall. The third step is to align the second positioning hole 17 on the main heat-exchange flow channel 10 with the second positioning pin 83 on the cold plate bracket 80, and put down the main heat-exchange flow channel 10 and the expansion card heat-exchange sub-plate 33 together. At this time, the second captive screw 18 on the main heat-exchange flow channel 10 is also aligned with the bracket screw hole 84 on the cold plate bracket 80 to fasten the second captive screw 18 in place. Then, the liquid supply and return connector assembly 50 is fastened through screws and fixed to a rear window of a chassis. The fourth step is to install the expansion card heat-exchange sub-plate 33, insert the expansion card 203, lift the pressure rod 322, rotate all the expansion card heat-exchange sub-plates 33 around the fixed shaft 31 to a position covering particles of the expansion card 203, then put down and lock the pressure rod 322, and finally toggle the locking switch assembly 334 to press the expansion card 203. The fifth step is to install a signal interface of the liquid leakage detection wire. Installation of the entire liquid cooling and heat dissipation system may be completed by connecting the signal interfaces of the liquid leakage detection wires of the second heat exchange mechanism and the expansion card heat-exchange sub-plate 33 to the motherboard 201 according to tag numbers respectively.

The liquid-cooling heat dissipation apparatus 100 provided by some embodiments of the present application includes the main heat-exchange flow channel 10 and the expansion card heat exchange mechanism 30. The expansion card heat exchange mechanism 30 includes the fixed shaft 31, the quick locking assembly 32, and the plurality of expansion card heat-exchange sub-plates 33, the expansion card heat-exchange sub-plates 33 are sleeved on the fixed shaft 31 and clamp corresponding expansion cards 203, and the quick locking assembly 32 is used for fixing and pressing the expansion card heat-exchange sub-plates 33 against the main heat-exchange flow channel 10, so that the expansion card heat-exchange sub-plates 33 perform heat exchange with the main heat-exchange flow channel 10. The expansion card heat-exchange sub-plate 33 includes the main cold plate 331, the secondary cold plate 332, the thermally conductive pads 333, and the locking switch assembly 334, in the thickness direction of the expansion card 203, the main cold plate 331 is located on one side of the expansion card 203, the secondary cold plate 332 is movably disposed on the main cold plate 331 and is located on the other side of the expansion card 203, the thermally conductive pads 333 are disposed on the sides of the main cold plate 331 and the side of the secondary cold plate 332 that face the expansion card 203, the main cold plate 331 and the secondary cold plate 332 are sleeved on the fixed shaft 31, the locking switch assembly 334 is disposed on the main cold plate 331, and the locking switch assembly 334 is used for driving the secondary cold plate 332 to move toward the main cold plate 331, so as to press the thermally conductive pads 333 on the secondary cold plate 332 and the main cold plate 331 against the expansion card 203.

The expansion card heat-exchange sub-plates 33 are sleeved on the fixed shaft 31, fixed by the quick locking assembly 32, and abut against the main heat-exchange flow channel 10, and the expansion card heat-exchange sub-plate 33 clamps the corresponding expansion card 203. In this way, when the expansion card 203 needs to be replaced, the expansion card 203 may be taken out and replaced with a new expansion card 203 by simply operating to open the quick locking assembly 32 and rotate the expansion card heat-exchange sub-plate 33 corresponding to the expansion card 203 around the fixed shaft 31, without removing the expansion card heat-exchange sub-plate 33 for disassembly and assembly, thereby greatly simplifying a replacement process of the expansion card 203; the expansion card heat-exchange sub-plates 33 are sleeved on the fixed shaft 31, so that the expansion card heat-exchange sub-plates 33 may move freely on the fixed shaft 31, during actual assembly, the expansion card heat-exchange sub-plates 33 may be self-adapted and positions of the expansion card heat-exchange sub-plates may be precisely adjusted based on a position of the expansion card 203, so as to ensure optimal contact and heat exchange efficiency between the expansion card heat-exchange sub-plate 33 and the expansion card 203, achieve optimal adaptation and improve a heat dissipation effect.

The liquid-cooling heat dissipation apparatus 100 of the present application supports independent disassembly, assembly, and maintenance of the processor 202 and the expansion card 203, so that operation and maintenance personnel may replace and maintain components more quickly, thereby greatly improving flexibility, maintainability, convenience, and safety of production, testing, as well as operation and maintenance, reducing downtime, and improving availability and maintenance efficiency of the server 200.

In addition, some embodiments of the present application further provide a server 200, including a motherboard 201, a processor 202, an expansion card 203, and the liquid-cooling heat dissipation apparatus 100 described above, the processor 202 and the expansion card 203 are disposed on the motherboard 201, and the liquid-cooling heat dissipation apparatus 100 is used for cooling the expansion card 203.

In view of the fact that the server 200 in some embodiments of the present application includes the liquid-cooling heat dissipation apparatus 100 described in any of the above embodiments, the server 200 includes the structure and beneficial effects of the liquid-cooling heat dissipation apparatus 100, which will not be further elaborated herein in the present application.

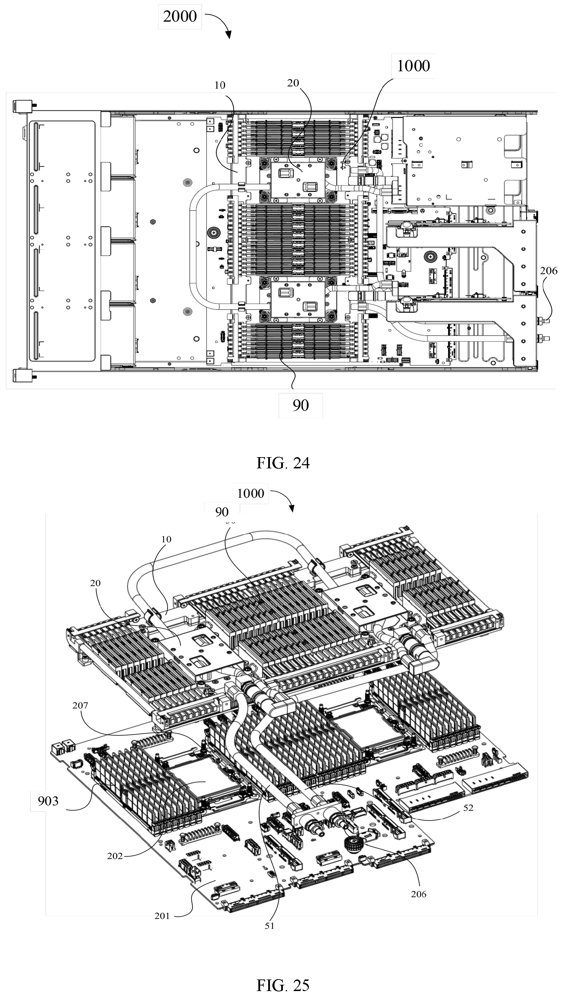

As shown in FIG. 24, FIG. 25, and FIG. 26, a liquid-cooling heat dissipation apparatus 1000 according to some embodiments of the present application is used in a server 2000. The server 2000 includes a motherboard 201, a processor 202, a memory 903, and a liquid-cooling heat dissipation apparatus 1000. The processor 202 and the memory 903 are disposed on the motherboard 201. The liquid-cooling heat dissipation apparatus 1000 is used for performing liquid cooling heat dissipation and temperature reduction on the processor 202 and the memory 903.

In some possible implementations, the processor 202 includes a central processing unit (CPU) and a graphics processing unit (GPU).

In some possible implementations, the server 2000 is a dual-socket general-purpose server.

The liquid-cooling heat dissipation apparatus 1000 includes a main heat-exchange flow channel 10, a processor heat exchange mechanism 20, and a memory heat exchange mechanism 90. The main heat-exchange flow channel 10 is used for communicating with a coolant flow path. The processor heat exchange mechanism 20 communicates with the main heat-exchange flow channel 10. The processor heat exchange mechanism 20 is disposed on the processor 202 and is used for cooling and reducing temperature of the processor 202. The memory heat exchange mechanism 90 is in heat exchange contact with the main heat-exchange flow channel 10. The memory heat exchange mechanism 90 clamps the memory 903 and is used for cooling and reducing temperature of the memory 903.

In some possible implementations, the processor heat exchange mechanism 20 is detachably connected to the main heat-exchange flow channel 10 through a quick connector assembly 21, so that the processor heat exchange mechanism 20 communicates with the main heat-exchange flow channel 10.

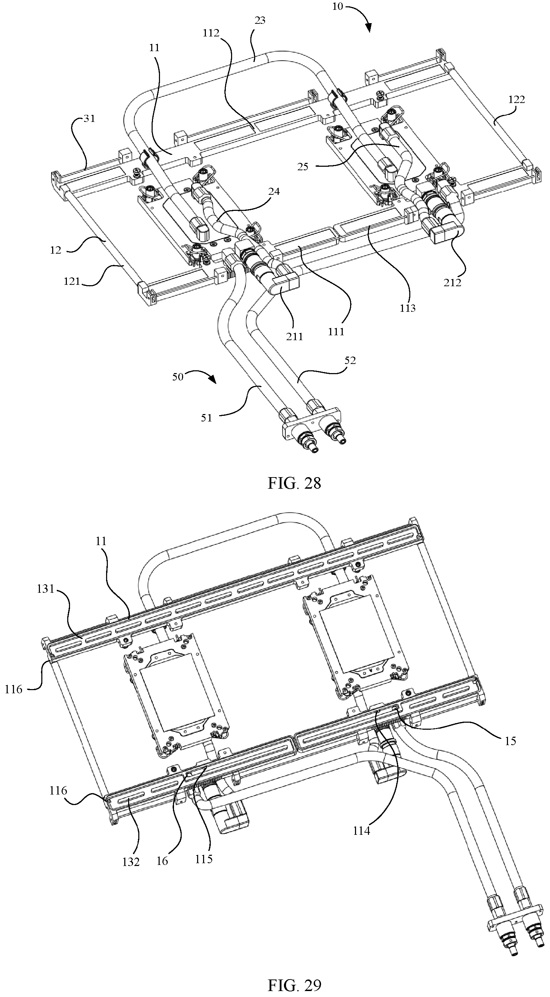

Also, referring to FIG. 28, in some possible implementations, the memory heat exchange mechanism 90 includes a fixed shaft 31, a quick locking assembly 32, and a plurality of memory heat-exchange sub-plates 93. The memory heat-exchange sub-plates 93 are sleeved on the fixed shaft 31, so that the memory heat-exchange sub-plates 93 rotate around the fixed shaft 31 and slide axially along the fixed shaft 31. The memory heat-exchange sub-plate 93 is used for clamping the corresponding memory 903, and the quick locking assembly 32 is used for fixing the plurality of memory heat-exchange sub-plates 93 and pressing the memory heat-exchange sub-plates against the main heat-exchange flow channel 10, so that the memory heat-exchange sub-plates 93 exchange heat with the main heat-exchange flow channel 10.

In some embodiments, the quick locking assembly 32 applies pressure to the memory heat-exchange sub-plates 93 to press the memory heat-exchange sub-plates 93 onto the main heat-exchange flow channel 10, thereby causing the memory heat-exchange sub-plates 93 to exchange heat with the main heat-exchange flow channel 10.

In some possible implementations, a plurality of memories 903 are sequentially arranged on the motherboard 201, an axial direction of the fixed shaft 31 is parallel to an arrangement direction of the plurality of memories 903, the quick locking assembly 32 is disposed on one side of the memories 903, and in the arrangement direction of the plurality of memories 903, the plurality of memory heat-exchange sub-plates 93 rotatably disposed on the fixed shaft 31 are pressed against the corresponding memories 903.

Since the processor heat exchange mechanism 20 communicates with the main heat-exchange flow channel 10 through the quick connector assembly 21, when only the processor 202 or the processor heat exchange mechanism 20 needs to be replaced, quick connection and disconnection of the processor heat exchange mechanism 20 and the main heat-exchange flow channel 10 are realized through the quick connector assembly 21, and then the processor heat exchange mechanism 20 is separately disassembled and installed, without being disassembled together with the memory heat exchange mechanism 90 and the memory 903.

However, the memory heat-exchange sub-plates 93 are sleeved on the fixed shaft 31, are fixed by the quick locking assembly 32, and abut against the main heat-exchange flow channel 10, and the memory heat-exchange sub-plate 93 clamps the corresponding memory 903, so that when the memory 903 needs to be replaced, the memory 903 may be taken out and replaced with a new memory 903 by simply operating to open the quick locking assembly 32 and rotate the memory heat-exchange sub-plate 93 corresponding to the memory 903 around the fixed shaft 31, without removing the memory heat-exchange sub-plate 93 for disassembly and assembly, thereby greatly simplifying a replacement process of the memory 903; the memory heat-exchange sub-plates 93 are sleeved on the fixed shaft 31, so that the memory heat-exchange sub-plates 93 may move freely on the fixed shaft 31, during actual assembly, the memory heat-exchange sub-plates 93 may be self-adapted and positions of the memory heat-exchange sub-plates may be precisely adjusted based on a position of the memory 903, so as to ensure optimal contact and heat exchange efficiency between the memory heat-exchange sub-plates 93 and the memory 903, achieve optimal adaptation, improve structural compatibility and reliability of the memory heat-exchange sub-plate 93, and improve a heat dissipation effect.

However, in a scenario where only the memory heat exchange mechanism 90 needs to be replaced, that is, the memory 903 uses air cooling, the processor heat exchange mechanism 20 still does not need to be disassembled, the quick connector assembly 21 is disconnected, and the main heat-exchange flow channel 10 and the memory heat exchange mechanism 90 as well as other related components are disassembled. The coolant may be conducted simply by connecting two supply and liquid return pipelines to a cabinet manifold through the quick connector assembly 21, which may save time for replacing the processor heat exchange mechanism 20 and applying thermal grease.

The liquid-cooling heat dissipation apparatus 1000 of the present application supports independent disassembly, assembly, and maintenance of the processor 202 and the memory 903, so that operation and maintenance personnel may replace and maintain components more quickly, thereby reducing a number of times of unnecessary disassembly and assembly of electronic components requiring heat dissipation, greatly improving flexibility, maintainability, convenience, and safety of production, testing, as well as operation and maintenance, reducing downtime, improving availability and maintenance efficiency of the server 2000, improving structural compatibility and reliability of the memory heat exchange mechanism 90, meeting various operation and maintenance scenarios of a data center, and facilitating reducing a failure rate of liquid cooling components and electronic components and reducing development as well as operation and maintenance costs.

Meanwhile, application of the quick connector assembly 21 and the quick locking assembly 32 realizes tool-free installation, reduces a risk of misoperation during disassembly and assembly processes, and enhances safety and reliability of the system.

In some possible implementations, the quick connector assembly 21 includes a liquid inlet quick connector 211 and a liquid outlet quick connector 212. One side of the main heat-exchange flow channel 10 communicates with the processor heat exchange mechanism 20 via the liquid inlet quick connector 211, and the other side of the main heat-exchange flow channel 10 communicates with the processor heat exchange mechanism 20 via the liquid outlet quick connector 212.

Design of the liquid inlet quick connector 211 and the liquid outlet quick connector 212 ensures that the coolant may efficiently circulate and flow between the main heat-exchange flow channel 10 and the processor heat exchange mechanism 20 to carry away the heat generated by the processor 202, thereby achieving efficient heat dissipation. Design of the liquid inlet quick connector 211 and the liquid outlet quick connector 212 provides flexible system configuration options, allowing a user to adjust a flow path and direction of the coolant based on specific needs, so as to adapt to different heat dissipation requirements.

The quick connector assembly 21 allows the user to easily connect and disconnect a liquid pipeline of the processor heat exchange mechanism 20, thereby simplifying installation and disassembly processes of the system and improving convenience and efficiency of operations. A quick connector typically has good sealing performance, which may effectively reduce a risk of liquid leakage and ensure safety and reliability of the system.

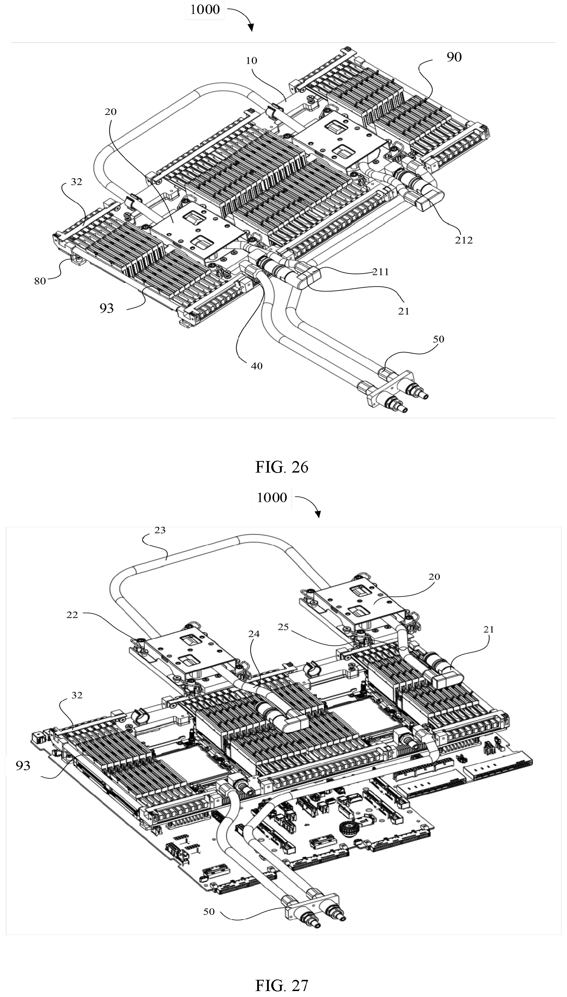

Also, referring to FIG. 27, in some possible implementations, the liquid-cooling heat dissipation apparatus 1000 includes a plurality of processor heat exchange mechanisms 20, and adjacent processor heat exchange mechanisms 20 communicate with each other through a processor heat exchange connecting pipeline 23.

The plurality of processor heat exchange mechanisms 20 communicate with each other through the processor heat exchange connecting pipeline 23, so that the coolant may circulate and flow among the processor heat exchange mechanisms 20, thereby ensuring uniform temperature distribution within the system and avoiding local overheating. Series design of the plurality of processor heat exchange mechanisms 20 may optimize the flow path of the coolant, improve heat exchange efficiency, and ensure that each processor 202 may obtain a sufficient cooling effect. Modular design of the plurality of processor heat exchange mechanisms 20 and the processor heat exchange connecting pipeline 23 facilitates expansion and upgrading of the system, supports application scenarios of different scales and complexities, and reduces manufacturing and maintenance costs.

In some possible implementations, the liquid-cooling heat dissipation apparatus 1000 includes two processor heat exchange mechanisms 20. The liquid inlet quick connector 211 communicates with one of the two processor heat exchange mechanisms 20 through a processor liquid inlet pipeline 24, the two processor heat exchange mechanisms 20 communicate with each other through the processor heat exchange connecting pipeline 23, and the other processor heat exchange mechanism 20 communicates with the liquid outlet quick connector 212 through a processor liquid outlet pipeline 25, so that the two processor heat exchange mechanisms 20 communicate with the main heat-exchange flow channel 10.

The coolant on one side of the main heat-exchange flow channel 10 is divided into two branches through the liquid inlet quick connector 211. A first branch enters the liquid inlet quick connector 211 from the main heat-exchange flow channel 10, enters a first processor heat exchange mechanism 20 through the processor liquid inlet pipeline 24, then enters a second processor heat exchange mechanism 20 through the processor heat exchange connecting pipeline 23, finally flows into the liquid outlet quick connector 212 through the processor liquid outlet pipeline 25, and flows to the other side of the main heat-exchange flow channel 10. A second branch sequentially passes through three groups of the first main heat-exchange sub-flow channels 111, the second main heat-exchange sub-flow channels 112, and the third main heat-exchange sub-flow channels 113, and after absorbing heat conducted by the memory heat exchange mechanism 90, merges with the first branch, and returns to the liquid supply and return quick connector 206 through the liquid return pipeline 52 to form a complete liquid circuit within the server 2000.

In some possible implementations, the main heat-exchange flow channel 10 includes a plurality of main heat-exchange sub-flow channels 11, and the plurality of main heat-exchange sub-flow channels 11 are sequentially in communication through connecting pipelines 12.

In some possible implementations, the main heat-exchange flow channel 10 includes a first main heat-exchange sub-flow channel 111, a second main heat-exchange sub-flow channel 112, and a third main heat-exchange sub-flow channel 113. The connecting pipelines 12 include a first branch connecting pipeline 121 and a second branch connecting pipeline 122. The first main heat-exchange sub-flow channel 111 and the second main heat-exchange sub-flow channel 112 communicate with each other through the first branch connecting pipeline 121, and the second main heat-exchange sub-flow channel 112 and the third main heat-exchange sub-flow channel 113 communicate with each other through the second branch connecting pipeline 122.

The main heat-exchange flow channel 10 is divided into a plurality of sub-flow channels, so as to realize segmented heat dissipation. Each sub-flow channel may focus on thermal management of a specific region or component, thereby improving overall heat dissipation efficiency.

In some possible implementations, the first main heat-exchange sub-flow channel 111 and the third main heat-exchange sub-flow channel 113 are located in a same row and are oppositely disposed with respect to the second main heat-exchange sub-flow channel 112.

In some possible implementations, the first main heat-exchange sub-flow channel 111 and the third main heat-exchange sub-flow channel 113 are located on rear sides of the processor 202 and the memory 903, and the second main heat-exchange sub-flow channel 112 is located on front sides of the processor 202 and the memory 903. The first main heat-exchange sub-flow channel 111 communicates with the processor heat exchange mechanism 20 through the quick connector assembly 21, and the third main heat-exchange sub-flow channel 113 communicates with the processor heat exchange mechanism 20 through the quick connector assembly 21, thereby diverting fluid of the main heat-exchange flow channel 10 to the processor heat exchange mechanism 20.

Also, referring to FIG. 29, in some possible implementations, the first main heat-exchange sub-flow channel 111 is provided with a liquid distribution port 114, and the third main heat-exchange sub-flow channel 113 is provided with a liquid collection port 115. The liquid inlet quick connector 211 communicates with the liquid distribution port 114, and the liquid outlet quick connector 212 communicates with the liquid collection port 115.

When the liquid inlet quick connector 211 and the liquid outlet quick connector 212 are in a connected state, the first branch enters the liquid inlet quick connector 211 from the liquid distribution port 114 on a side wall of the first main heat-exchange sub-flow channel 111, and the coolant sequentially enters two processor heat exchange mechanisms 20 through the processor liquid inlet pipeline 24 and the processor heat exchange connecting pipeline 23 and continuously carries away heat generated during operations of a processor 202 chip to ensure that temperature of the processor 202 chip is always within a normal range. Subsequently, the coolant sequentially passes through the processor liquid outlet pipeline 25 and the liquid outlet quick connector 212 to reach the liquid collection port 115 on the third main heat-exchange sub-flow channel 113.

A second branch passes through a flow channel within the first main heat-exchange sub-flow channel 111 on the rear side, and reaches the second main heat-exchange sub-flow channel 112 close to the front side of a chassis after a flow direction of the coolant changes when passing through the first branch connecting pipeline 121; and after the coolant absorbs, in the second main heat-exchange sub-flow channel 112 on the front side, heat transferred from the memory heat-exchange sub-plates 93 and flows out, the coolant subsequently passes through the second branch connecting pipeline 122 to reach the third main heat-exchange sub-flow channel 113 on the rear side. Subsequently, the coolant flows along a flow channel within the third main heat-exchange sub-flow channel 113 on the rear side and merges with the coolant of the first branch at the liquid collection port 115.

In some possible implementations, ends of the first main heat-exchange sub-flow channel 111 and the third main heat-exchange sub-flow channel 113 that face away from each other and both ends of the second main heat-exchange sub-flow channel 112 are respectively provided with sub-flow channel connectors 116. The sub-flow channel connector 116 of the first main heat-exchange sub-flow channel 111 is connected to the sub-flow channel connector 116 on one side of the second main heat-exchange sub-flow channel 112 through the first branch connecting pipeline 121. The sub-flow channel connector 116 on the other side of the second main heat-exchange sub-flow channel 112 is connected to the sub-flow channel connector 116 of the third main heat-exchange sub-flow channel 113 through the second branch connecting pipeline 122.

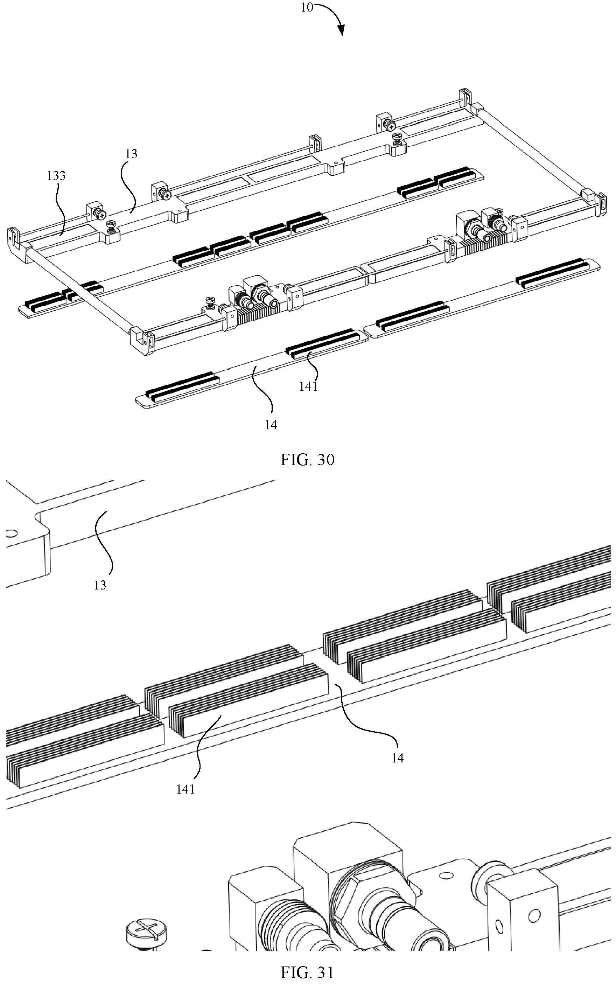

Also, referring to FIG. 30, FIG. 31, and FIG. 32, in some possible implementations, the main heat-exchange sub-flow channel 11 includes a cover plate 13 and a bottom plate 14. A flow channel cavity 131 is disposed in the cover plate 13, and the bottom plate 14 closes the flow channel cavity 131. The processor heat exchange mechanism 20 communicates with the flow channel cavity 131, and the memory heat-exchange sub-plate 93 abuts against the cover plate 13.

Combination of the cover plate 13 and the bottom plate 14 provides a closed and stable structure, ensures integrity and sealing of the flow channel cavity 131, prevents coolant leakage, and improves reliability of the system. At the same time, a design of the flow channel cavity 131 may optimize a fluid path based on specific heat dissipation requirements, ensure that the coolant contacts a heat source to the greatest extent during a flow process, and improve heat exchange efficiency.

Design of the flow channel cavity 131 allows the coolant to flow inside the cover plate 13 and realizes direct communication with the processor heat exchange mechanism 20, so as to achieve efficient heat exchange, rapidly remove the heat generated by the processor 202, and improve heat dissipation efficiency. Due to the direct communication design of the processor heat exchange mechanism 20 and the flow channel cavity 131, the processor heat exchange mechanism 20 may be conveniently disassembled and replaced during maintenance without affecting installation of the memory heat-exchange sub-plates 93, which improves maintainability of the system.

The memory heat-exchange sub-plate 93 directly abuts against the cover plate 13, so that the memory heat-exchange sub-plate 93 may more flexibly exchange heat with the coolant in the flow channel cavity 131, thereby reducing thermal resistance in a heat transfer path, and enabling heat generated by the memory 903 to be transferred to the coolant more rapidly.

In some possible implementations, a rib structure 132 is disposed in the flow channel cavity 131, and the rib structure 132 protrudes into the flow channel cavity 131 and is arranged in an extension direction of the flow channel cavity 131.

The rib structure 132 increases a surface area within the flow channel cavity 131, thereby expanding a contact area between the coolant and the flow channel wall, improving heat exchange efficiency, and enabling heat to be transferred from the heat source to the coolant more rapidly. The rib structure 132 may guide a flow path of the coolant within the flow channel cavity 131, thereby ensuring uniform distribution of the fluid in the entire flow channel, so as to avoid occurrence of a flow dead zone or local overheating.

Meanwhile, the rib structure 132 may disturb flow of the coolant and promote formation of turbulence. Compared with laminar flow, the fluid in a turbulent state has a higher heat transfer capability, thereby improving convective heat transfer between the flow channel cavity 131 and the coolant, so as to remove heat more effectively.

In addition to helping improve heat exchange efficiency, the rib structure 132 may further enhance structural strength of the flow channel cavity 131 and functions as a reinforcing rib, so as to improve liquid pressure resistance capability of the flow channel cavity 131, and prevent deformation or rupture under a high-pressure condition.

A shape and a spacing of the rib structure 132 may be designed and adjusted based on specific heat dissipation requirements, so as to achieve an optimal thermal management effect.

In some possible implementations, a skived fin structure 141 is disposed on the bottom plate 14, and the skived fin structure 141 is disposed in the flow channel cavity 131 in an extension direction of the flow channel cavity 131. The skived fin structure 141 is distributed directly below a contact region of the flow channel cavity 131 and the memory heat-exchange sub-plate 93.

The skived fin structure 141 increases a surface area within the flow channel cavity 131, thereby expanding a contact area between the coolant and the flow channel wall, improving heat exchange efficiency, and enabling heat to be transferred from the heat source to the coolant more rapidly. The skived fin structure 141 may guide a flow path of the coolant within the flow channel cavity 131, thereby ensuring uniform distribution of the fluid in the entire flow channel, so as to avoid occurrence of a flow dead zone or local overheating.

Meanwhile, the skived fin structure 141 may disturb flow of the coolant and promote formation of turbulence. Compared with laminar flow, the fluid in a turbulent state has a higher heat transfer capability, so that heat may be removed more effectively.

In addition to helping improve heat exchange efficiency, the skived fin structure 141 may enhance structural strength of the flow channel cavity 131, improve pressure resistance capability of the flow channel cavity, and prevent deformation or rupture under a high-pressure condition.

A shape, a length, a height, and a spacing of the skived fin structure 141 may be designed and adjusted based on specific heat dissipation requirements, so as to achieve an optimal thermal management effect.

In some possible implementations, the rib structure 132 is located in a middle portion of the flow channel cavity 131 to divide the flow channel cavity 131 into two parts, a plurality of skived fin structures 141 are respectively located in the two sides of the flow channel cavity 131, tooth tops of the skived fin structures 141 and the cover plate 13 are integrated through welding to further split the flow channel cavity 131 and form a plurality of microchannels.

In some possible implementations, the first main heat-exchange sub-flow channel 111 is provided with an inlet 15. The third main heat-exchange sub-flow channel 113 is provided with an outlet 16. The inlet 15 and the outlet 16 are respectively located in middle portions of the first main heat-exchange sub-flow channel 111 and the third main heat-exchange sub-flow channel 113, and a baffle structure is defined in the flow channel cavity 131 of the first main heat-exchange sub-flow channel 111 and the third main heat-exchange sub-flow channel 113 through the rib structure 132.

After the coolant enters the first main heat-exchange sub-flow channel 111 from the inlet 15, a part of the liquid enters the liquid inlet quick connector 211 through the liquid distribution port 114 to form a first branch, and another part thereof flows along the flow channel cavity 131 of the first main heat-exchange sub-flow channel 111 to form a second branch, after flowing in the first main heat-exchange sub-flow channel 111 toward the third main heat-exchange sub-flow channel 113, flows in a direction away from the third main heat-exchange sub-flow channel 113 after one baffle, then enters the first branch connecting pipeline 121 through the sub-flow channel connector 116, passes through the second main heat-exchange sub-flow channel 112, and reaches the third main heat-exchange sub-flow channel 113 on the rear side through the second branch connecting pipeline 122. Subsequently, the coolant flows along a flow channel within the third main heat-exchange sub-flow channel 113 on the rear side toward the first main heat-exchange sub-flow channel 111, and after one baffle, merges with the coolant of the first branch at the liquid collection port 115, and flows out of the main heat-exchange flow channel 10 through the outlet 16.

In some possible implementations, the fixed shaft 31 is disposed on the cover plate 13, and an axial direction of the fixed shaft 31 is the same as an extension direction of the flow channel cavity 131 in the cover plate 13 so as to sequentially arrange a plurality of memory heat-exchange sub-plates 93 in the extension direction of the flow channel cavity 131.

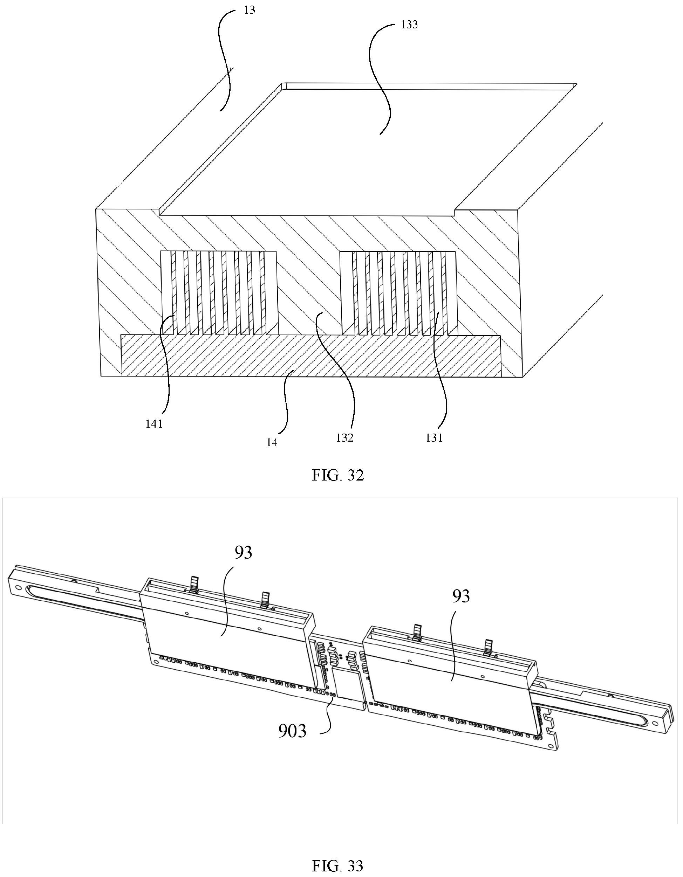

Also, referring to FIG. 33, in some possible implementations, a plurality of memory heat-exchange sub-plates 93 are divided into two groups in a length direction of the memory 903, the two groups of memory heat-exchange sub-plates 93 are oppositely disposed, and in the length direction of the memory 903, each group of memory heat-exchange sub-plates 93 clamps one end of the corresponding memory 903 respectively. Memory heat-exchange sub-plates 93 at two ends are axially symmetrical to each other, and are combined into a set of memory heat-exchange sub-plates 93 to jointly dissipate heat for one memory 903.

The memory heat-exchange sub-plates 93 are divided into two groups and clamp one end of the memory 903 respectively in the length direction of the memory 903, thereby reducing a length of the memory heat-exchange sub-plate 93. In addition, since the reduced length of the memory heat-exchange sub-plate 93 enhances resistance to stress bending and deformation, rigidity of each memory heat-exchange sub-plate 93 may be effectively increased, which reduces the risk of deformation of the memory heat-exchange sub-plate 93 during attachment to the memory 903 and during plugging and unplugging, and improves the overall structural stability. This helps to maintain good contact between the memory heat-exchange sub-plate 93 and the memory 903 during installation and disassembly processes, and ensures heat dissipation performance. Meanwhile, a region where the two memory heat-exchange sub-plates 93 are disconnected may further effectively prevent a chip protruding from the center of the memory 903 from being damaged by compression during plugging and unplugging.

The memory heat-exchange sub-plate 93 is connected to the main heat-exchange flow channel 10 through the fixed shaft 31, and therefore the memory heat-exchange sub-plate 93 may move freely on the fixed shaft 31. During actual assembly, the memory heat-exchange sub-plates 93 may be self-adapted based on a position of the memory 903 and precisely adjust positions of the memory heat-exchange sub-plates, which may effectively solve the effect of poor attachment between the memory heat-exchange sub-plates 93 and the memory 903 caused by assembly tolerances of related components in the server 2000, and ensure optimal fit with the memory 903.

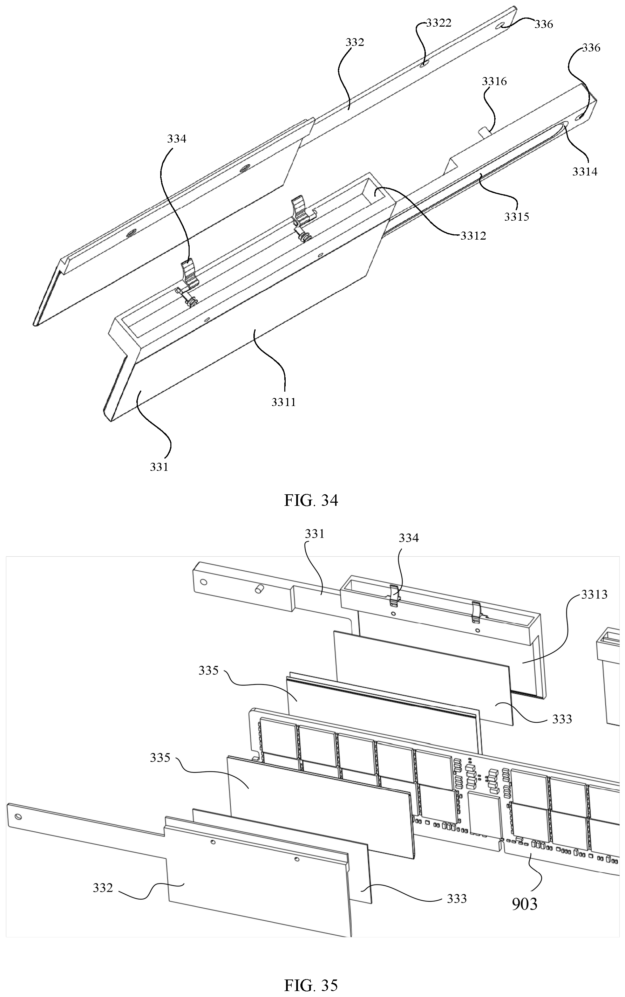

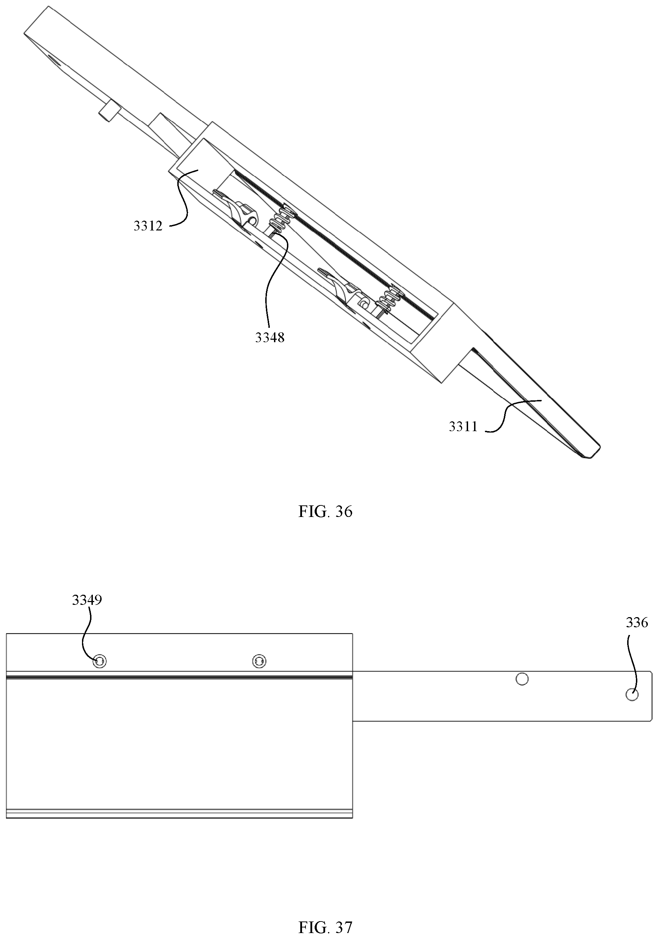

Also, referring to FIG. 34, FIG. 35, FIG. 36, and FIG. 37, in some possible implementations, the memory heat-exchange sub-plate 93 includes a main cold plate 331, a secondary cold plate 332, thermally conductive pads 333, and a locking switch assembly 334. In a thickness direction of the memory 903, the main cold plate 331 is located on one side of the memory 903. The secondary cold plate 332 is movably disposed on the main cold plate 331 and is located on the other side of the memory 903. The thermally conductive pads 333 are disposed on the sides of the main cold plate 331 and the secondary cold plate 332 that face the memory 903. The main cold plate 331 and the secondary cold plate 332 are sleeved on the fixed shaft 31. The locking switch assembly 334 is disposed on the main cold plate 331, and the locking switch assembly 334 is used for driving the secondary cold plate 332 to move toward the main cold plate 331, so as to press the thermally conductive pads 333 on the secondary cold plate 332 and the main cold plate 331 against the memory 903.

The thermally conductive pads 333 are disposed on the sides of the main cold plate 331 and the secondary cold plate 332 that face the memory 903, which ensures good thermal contact between the memory heat-exchange sub-plate 93 and the memory 903, improves heat conduction efficiency, and helps to more effectively transfer heat generated by the memory 903 to the memory heat-exchange sub-plate 93 for heat dissipation.

The secondary cold plate 332 is movably disposed on the main cold plate 331 and is adjusted through the locking switch assembly 334, which allows adjustments based on an actual thickness of the memory 903 during installation, to ensure tight contact between the memory heat-exchange sub-plate 93 and the memory 903.

The locking switch assembly 334 may drive the secondary cold plate 332 to move toward the main cold plate 331 to achieve rapid locking, which simplifies installation and disassembly processes of the memory heat-exchange sub-plate 93, reduces operation time, and improves operation and maintenance efficiency. Through adjustment of the locking switch assembly 334, appropriate pressing forces may be provided to avoid applying excessive mechanical stress to the memory 903, thereby reducing a risk of damage to the memory 903. The locking switch assembly 334 improves overall reliability of the system and ensures that the memory heat-exchange sub-plate 93 may maintain good thermal contact with the memory 903 under various operating conditions.

The memory heat-exchange sub-plate 93 may improve structural compatibility, reliability, and operational flexibility of a memory cold plate, and solve problems such as difficulty in plugging and unplugging of the current memory 903, poor contact of a heat dissipation surface, and cumbersome steps of replacing the memory 903. The memory heat-exchange sub-plate 93 is designed to be split at both ends, that is, two groups of memory heat-exchange sub-plates 93 having a length of approximately half the length of the memory 903 are combined to achieve heat dissipation for each memory 903. Each group of memory heat-exchange sub-plates 93 is designed to be provided with a locking switch assembly 334 for rapid locking, which provides adjustable spring forces to ensure good attachment between the thermally conductive pad 333 and the memory 903 and a required pressing force, and may further achieve manual rapid locking and unlocking between the memory heat-exchange sub-plate 93 and the memory 903, while reducing a failure rate of the memory 903 and further improving the service life thereof.

In some possible implementations, the main cold plate 331 includes a base plate 3311 and a reinforcement frame 3312. The base plate 3311 is sleeved on the fixed shaft 31, the reinforcement frame 3312 is disposed on the base plate 3311, the secondary cold plate 332 is movably disposed on the reinforcement frame 3312, and the locking switch assembly 334 is disposed on the reinforcement frame 3312.

In some possible implementations, the reinforcement frame 3312 is designed at a top end of the base plate 3311, which is used for strengthening rigidity of the base plate 3311 and preventing deformation caused by compression with the memory 903 during use on one hand; on the other hand, the reinforcement frame 3312 may provide a mounting hole for the locking switch assembly 334 and does not interfere with the memory 903 during operations.

Introduction of the reinforcement frame 3312 improves overall rigidity and strength of the main cold plate 331, reduces possible deformation of the memory heat-exchange sub-plate 93 during installation and use, ensures stable contact between the memory heat-exchange sub-plate 93 and the memory 903, and improves heat dissipation efficiency. The reinforcement frame 3312 helps to uniformly distribute pressure applied to the locking switch assembly 334 during a locking process, so as to avoid excessive local stress on the memory 903 and reduce a risk of damage to the memory 903.

In some possible implementations, a limiting groove 3313 is disposed on the base plate 3311, and the limiting groove 3313 is used for accommodating the thermally conductive pad 333.

The limiting groove 3313 provides a clear mounting position for the thermally conductive pad 333, ensures precise positioning of the thermally conductive pad 333 between the main cold plate 331 and the memory 903, helps to maintain an effective contact area of the thermally conductive pad 333, and improves heat conduction efficiency. The limiting groove 3313 may further effectively prevent the thermally conductive pad 333 from moving or sliding during installation and use, so as to ensure that the thermally conductive pad 333 is always in an optimal position, and avoid degradation of heat dissipation performance caused by position deviation.

The limiting groove 3313 provides a fixed position for the thermally conductive pad 333, simplifying an installation process, reducing a possibility of an installation error, and improving operational efficiency. Meanwhile, the limiting groove 3313 may further protect edges of the thermally conductive pad 333 to a certain extent, and reduce damage caused by mechanical stress or friction, thereby extending the service life of the thermally conductive pad 333.

In some possible implementations, a heat pipe groove 3314 is disposed on a side of the base plate 3311 that is away from the limiting groove 3313, and the heat pipe groove 3314 is used for a heat pipe 3315 to be embedded therein.

The heat pipe 3315 is a highly efficient heat conduction apparatus capable of rapidly transferring heat, and by embedding the heat pipe 3315 in the base plate 3311, heat may be more rapidly transferred from a region of the memory 903 to another part, so as to improve heat dissipation efficiency of the main cold plate 331.

Design of the heat pipe groove 3314 allows the heat pipe 3315 to be tightly embedded in the base plate 3311, ensures that heat is uniformly distributed in the length direction of the heat pipe 3315, is conducive to avoiding local overheating phenomena, and improves the temperature uniformity of the memory 903. Embedding the heat pipe 3315 into the base plate 3311 through the heat pipe groove 3314 makes the main cold plate 331 more compact, without significantly increasing a volume of the memory heat-exchange sub-plate 93. The heat pipe groove 3314 ensures close contact between the heat pipe 3315 and the base plate 3311, reducing thermal resistance in a heat transfer path and improving heat conduction efficiency.

In some possible implementations, a thermally conductive pad groove 3321 is disposed on the side of the secondary cold plate 332 that faces the memory 903, and the thermally conductive pad groove 3321 is used for accommodating the thermally conductive pad 333.

The thermally conductive pad groove 3321 provides a clear mounting position for the thermally conductive pad 333, ensures precise positioning of the thermally conductive pad 333 between the secondary cold plate 332 and the memory 903, helps to maintain an effective contact area of the thermally conductive pad 333, and improves heat conduction efficiency. The thermally conductive pad groove 3321 may further effectively prevent the thermally conductive pad 333 from moving or sliding during installation and use, so as to ensure that the thermally conductive pad 333 is always in an optimal position, and avoid degradation of heat dissipation performance caused by position deviation.

The thermally conductive pad groove 3321 provides a fixed position for the thermally conductive pad 333, simplifying an installation process, reducing a possibility of an installation error, and improving operational efficiency. Meanwhile, the thermally conductive pad groove 3321 may further protect edges of the thermally conductive pad 333 to a certain extent, and reduce damage caused by mechanical stress or friction, thereby extending the service life of the thermally conductive pad 333.

Hardness of the thermally conductive pads 333 on the main cold plate 331 and the secondary cold plate 332 is the same, so that forces applied by the locking switch assembly 334 on the main cold plate 331 and the secondary cold plate 332 are the same, and thus fastening forces received by two sides of the memory 903 are also consistent, thereby avoiding tilting of the memory 903 to one side caused by different forces resulting from different contact methods or dimensional deviations on the two sides of the memory 903 in previous solutions, avoiding stress damage to golden fingers of the memory 903 and a memory slot, to reduce a failure rate of the memory 903 and further improve the service life of the memory.

In some possible implementations, one of the main cold plate 331 and the secondary cold plate 332 is provided with a guide pin 3316, and the other one of the main cold plate 331 and the secondary cold plate 332 is provided with a guide hole 3322 corresponding to the guide pin 3316.

Design of the guide pin 3316 and the guide hole 3322 ensures that the main cold plate 331 and the secondary cold plate 332 may be precisely aligned during an installation process, helping to ensure good contact between the memory heat-exchange sub-plate 93 and the memory 903 and improving heat conduction efficiency.

The guide pin 3316 and the guide hole 3322 provide a simple and effective alignment mechanism, such that the installation process is more intuitive and convenient, a possibility of an installation error is reduced, and the operational efficiency is improved. During use, the guide pin 3316 and the guide hole 3322 may effectively prevent relative misalignment of the main cold plate 331 and the secondary cold plate 332, ensuring that the memory heat-exchange sub-plate 93 maintains a stable structure during operations.

In some possible implementations, the base plate 3311 and the secondary cold plate 332 are provided with a through hole 336, and the through hole 336 is used for the fixed shaft 31 to pass through. The through hole 336 mates with the fixed shaft 31 to form a hinge structure, such that the base plate 3311 and the secondary cold plate 332 may rotate on the fixed shaft 31.

In some possible implementations, the secondary cold plate 332 has no heat pipe groove, and thus a thickness of the secondary cold plate may be appropriately reduced to meet requirements of a spacing of the memories 903.

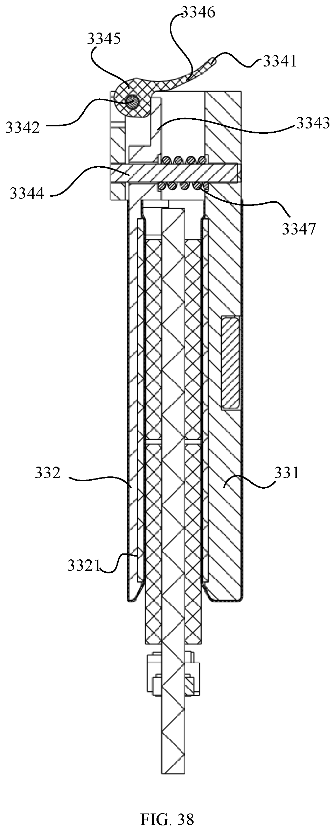

Also, referring to FIG. 38, in some possible implementations, the locking switch assembly 334 includes a cam wrench 3341, a cam rotating shaft 3342, a pressing slider 3343, and a guide shaft 3344. The cam wrench 3341 is rotatably disposed on the reinforcement frame 3312 through the cam rotating shaft 3342. The guide shaft 3344 is disposed on the reinforcement frame 3312. The secondary cold plate 332 is sleeved on the guide shaft 3344, and the pressing slider 3343 is disposed on the secondary cold plate 332 and faces the cam wrench 3341. The cam wrench 3341 is used for pushing the pressing slider 3343 to move in an axial direction of the guide shaft 3344, so as to cause the secondary cold plate 332 to move toward the main cold plate 331.

When the memory heat-exchange sub-plate 93 is mounted on the memory 903, the main cold plate 331 and the secondary cold plate 332 rotate together around the fixed shaft 31 to the two sides of the memory 903 until making contact with the main heat-exchange sub-flow channel 11, at this time, the quick locking assembly 32 is lowered and locked, and finally the cam wrench 3341 is moved from a vertical position to a horizontal position to lock. During the process, a cam of the cam wrench 3341 rotates from a minor diameter to a major diameter, so as to push the pressing slider 3343 to translate along the guide shaft 3344. In the above process, the pressing slider 3343 drives the secondary cold plate 332 to translate, and the thermally conductive pads 333 on the main cold plate 331 and the secondary cold plate 332 first make contact with the memory 903, and as the main cold plate 331 and the secondary cold plate 332 continue to translate and clamp the memory 903 under a cam thrust, the thermally conductive pads 333 may be further compressed, so as to ensure that a required preload force is met between the thermally conductive pads 333 and the memory 903, thereby reducing thermal contact resistance, and achieving an optimal heat dissipation effect.

Tight fitting and unlocking of the memory heat-exchange sub-plate 93 and the memory 903 simply require toggling the cam wrench 3341, so that the operation is fast and reliable, thereby effectively reducing the failure rate and operation time of electronic component replacement. Use of the cam wrench 3341 makes a locking process and an unlocking process simple and intuitive, so that an operator may quickly complete installation and disassembly of the memory heat-exchange sub-plate 93 and the memory 903, thereby improving operational efficiency.

The cam wrench 3341, through rotation of the cam rotating shaft 3342, is capable of precisely controlling movement of the pressing slider 3343, allowing a precise pressing force to be applied to the secondary cold plate 332, thereby ensuring good thermal contact between the memory heat-exchange sub-plate 93 and the memory 903.

The guide shaft 3344 provides a stable sliding path to prevent the secondary cold plate 332 from shifting or tilting during movement, thereby ensuring stability of the memory heat-exchange sub-plate 93. Through a cam mechanism, the pressing slider 3343 may move smoothly in the axial direction of the guide shaft 3344, ensuring that a force applied to the secondary cold plate 332 is uniform, thereby reducing local stress concentration, and lowering a risk of damage to the memory 903.

In some possible implementations, the cam wrench 3341 has a cam portion 3345 and a handle portion 3346, the cam portion 3345 is rotatably disposed on the cam rotating shaft 3342 and abuts against and mates with the pressing slider 3343, and the handle portion 3346 is connected to the cam portion 3345.

The cam portion 3345, through abutting against and mating with the pressing slider 3343, may convert rotational motion into linear motion, thereby precisely controlling the pressing force applied to the secondary cold plate 332, helping to ensure good thermal contact between the memory heat-exchange sub-plate 93 and the memory 903, and improving heat dissipation efficiency.

The handle portion 3346 provides an interface facilitating gripping and operation, enabling a user to easily rotate the cam wrench 3341, thereby improving efficiency of installation and disassembly, and reducing operation time. By adjusting a rotation angle of the handle portion 3346, the user may conveniently adjust a magnitude of the pressing force, flexible adjustment based on specific installation requirements is allowed, so as to ensure an optimal pressing effect.

In some possible implementations, a mating surface of the cam portion 3345 and the pressing slider 3343 is an arc surface, which may ensure smooth sliding during a mating process.

In some possible implementations, the locking switch assembly 334 further includes a compression spring 3347, the compression spring 3347 is sleeved on the guide shaft 3344 and is located on a side of the pressing slider 3343 that is away from the cam wrench 3341, one side of the compression spring 3347 is connected to the reinforcement frame 3312, and the other side of the compression spring 3347 is connected to the pressing slider 3343.

The compression spring 3347 provides a buffering mechanism capable of absorbing and mitigating mechanical shocks and vibrations that may be generated during installation and use, helping to protect the memory heat-exchange sub-plate 93 and the memory 903, and extending the service life of the memory heat-exchange sub-plate and the memory.

A difference between the major diameter and the minor diameter of the cam portion 3345 is a horizontal displacement amount of the secondary cold plate 332. Based on this, parameters such as a compression amount of the thermally conductive pad 333 may be further calculated, thereby facilitating design and selection. When operation and maintenance or unlocking of the memory heat-exchange sub-plate 93 are/is needed, the cam wrench 3341 is toggled from the horizontal position to the vertical position, thereby opening the locking switch device. During the process, the cam portion 3345 rotates from the major diameter to the minor diameter, and the compression spring 3347 pushes the pressing slider 3343 to translate in a loosening direction during a rebounding process, at this time, the thermally conductive pads 333 on the main cold plate 331 and the secondary cold plate 332, and the memory 903 change from a compressed state to a non-contact state. Therefore, after the quick locking assembly 32 is unlocked, the memory 903 may be smoothly pulled out from the motherboard 201 by opening a memory slot switch, thereby achieving tool-free and quick replacement.

In some possible implementations, one of the pressing slider 3343 and the guide shaft 3344 is provided with a guide groove 3348, and the other one of the pressing slider 3343 and the guide shaft 3344 is provided with a guide block 3349 corresponding to the guide groove 3348.

Cooperative use of the guide groove 3348 and the guide block 3349 may ensure that the main cold plate 331 and the secondary cold plate 332 do not tilt during a translation process, thereby improving accuracy of fitting with the memory 903.

Combination of the guide groove 3348 and the guide block 3349 ensures precise linear motion of the pressing slider 3343 along the guide shaft 3344, thereby helping to prevent the pressing slider 3343 from shifting or tilting during movement, and ensuring that the applied pressing force is uniform and stable. Design of the guide groove 3348 and the guide block 3349 provides a clear motion path, so as to reduce friction and wear between the pressing slider 3343 and other components, thereby extending the service life of the components. The precise guide mechanism improves reliability of locking and unlocking operations, so as to ensure that each operation may achieve an expected pressing effect, thereby enhancing overall reliability of the system.

In some possible implementations, the memory heat-exchange sub-plate 93 further includes a scratch-resistant film 335, and the scratch-resistant film 335 is adhered to the thermally conductive pad 333, the main cold plate 331, and the secondary cold plate 332.

The scratch-resistant film 335 may effectively protect the thermally conductive pad 333 as well as surfaces of the main cold plate 331 and the secondary cold plate 332, reduce a friction force during installation, and prevent scratches, wear, or other physical damage during installation, operation, and maintenance, thereby extending the service life of the components, maintaining integrity and thermal conductivity of the thermally conductive pad 333, and ensuring that heat may be efficiently transferred from the memory 903 to the memory heat-exchange sub-plate 93.

The scratch-resistant film 335 may further prevent dust, grease, and other contaminants from adhering to the thermally conductive pad 333 as well as the surfaces of the main cold plate 331 and the secondary cold plate 332, thereby maintaining cleanliness of the components and improving heat dissipation efficiency. Presence of the scratch-resistant film 335 makes cleaning and maintenance processes simpler, so that the user may easily wipe off dirt on the film without worrying about damaging the thermally conductive pad 333 or the surfaces of the main cold plate 331 and the secondary cold plate 332.

In some possible implementations, a thermally conductive groove 133 is disposed on the cover plate 13, a heat exchange pad 134 is disposed in the thermally conductive groove 133, and the memory heat-exchange sub-plate 93 abuts against the heat exchange pad 134.

Design of the thermally conductive groove 133 may reduce thermal resistance of heat from the memory 903 continuing to be transferred to the main heat-exchange sub-flow channel 11 through the memory heat-exchange sub-plate 93. In this way, a wall thickness of the main heat-exchange sub-flow channel 11 in a heat conducting region here may be reduced, and heat conduction thermal resistance thereof may be reduced; and on the other hand, a position of the heat exchange pad 134 may be better fixed, so that the heat exchange pad may be prevented from moving, generating wrinkles, or falling off after being compressed, so as to improve the service life.

The heat exchange pad 134 may effectively fill a gap in the heat conducting region between the memory heat-exchange sub-plate 93 and the cover plate 13, so as to ensure close contact between the two and reduce thermal contact resistance. The heat conduction efficiency is improved, and heat generated by the memory 903 is transferred to the cover plate 13 more rapidly for heat dissipation.

Combined design of the thermally conductive groove 133 and the heat exchange pad 134 reduces thermal resistance in the heat transfer path, and ensures that heat may be efficiently transferred from the memory heat-exchange sub-plate 93 to the cover plate 13.

The thermally conductive groove 133 provides a defined position for placing the heat exchange pad 134, which simplifies an installation process, thereby ensuring correct positioning of the heat exchange pad 134, and improving operational efficiency.

The heat exchange pad 134 has certain flexibility, and may compensate for possible unevenness on surfaces of the memory heat-exchange sub-plate 93 and the cover plate 13, thereby improving a contact area and the heat conduction efficiency.

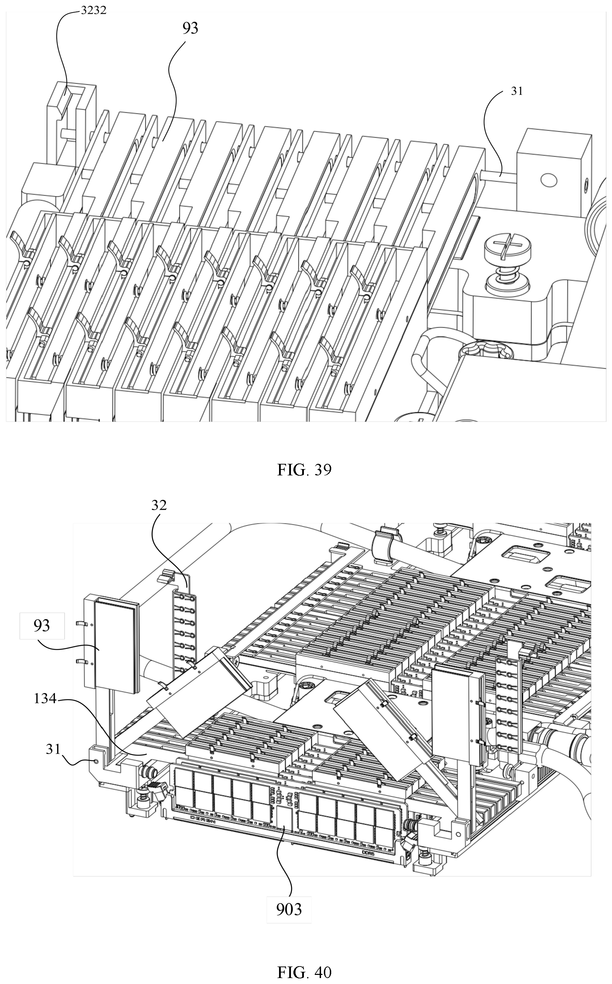

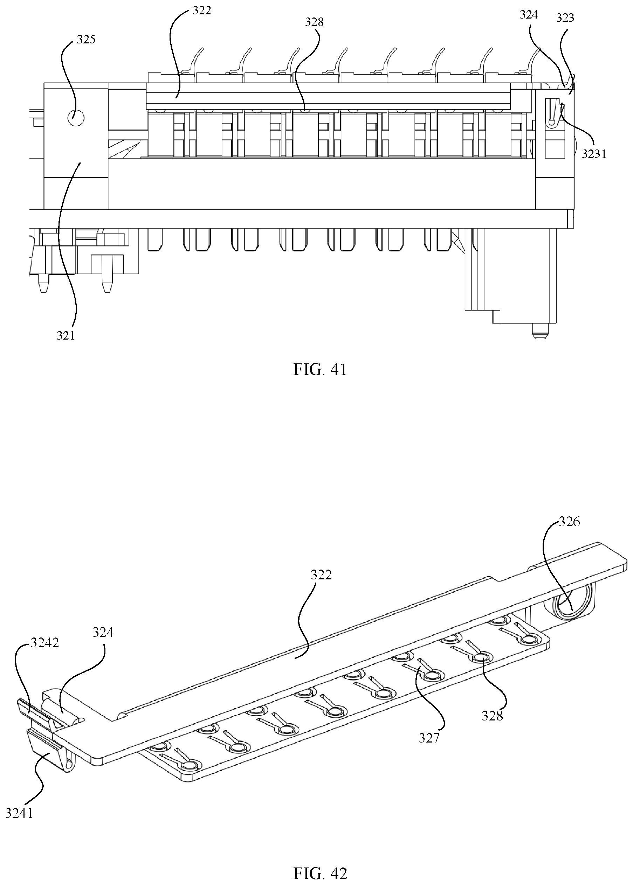

Also, referring to FIG. 39, FIG. 40, FIG. 41, FIG. 42, and FIG. 43, in some possible implementations, the quick locking assembly 32 includes a pressure rod bracket 321, a pressure rod 322, a lock catch 323, and a lock piece 324. The lock catch 323 is disposed on the main heat-exchange flow channel 10, one end of the pressure rod 322 is rotatably disposed on the pressure rod bracket 321, the other end of the pressure rod 322 is provided with the lock piece 324, and the lock catch 323 mates with the lock piece 324 for locking the pressure rod 322 and pressing the pressure rod 322 against a side of the memory heat-exchange sub-plate 93 that is away from the main heat-exchange flow channel 10, so as to enable the memory heat-exchange sub-plate 93 to abut against the main heat-exchange flow channel 10.

The quick locking assembly 32 is used for applying a specific fastening force to the memory heat-exchange sub-plate 93, thereby further improving heat conduction efficiency of the memory heat-exchange sub-plate 93 and the main heat-exchange sub-flow channel 11, and reducing thermal contact resistance thereof.

Design of the quick locking assembly 32 allows the user to quickly lock or release the memory heat-exchange sub-plate 93 through a simple operation of the pressure rod 322, thereby greatly simplifying installation and disassembly processes, and improving operational efficiency.

Mating of the lock catch 323 with the lock piece 324 provides a stable mechanical connection, ensures that the pressure rod 322 may firmly press the memory heat-exchange sub-plate 93 against the main heat-exchange flow channel 10, and prevents loosening or displacement during use. Design of the pressure rod 322 makes a force applied to the memory heat-exchange sub-plate 93 uniform, thereby ensuring good contact between the memory heat-exchange sub-plate 93 and the main heat-exchange flow channel 10, and improving heat conduction efficiency.

In some possible implementations, the pressure rod bracket 321 and the lock catch 323 are respectively disposed on the main heat-exchange flow channel 10, and are located on two sides of a plurality of memories 903 arranged in sequence. When the lock catch 323 mates with the lock piece 324, an extension direction of the pressure rod 322 is the same as a direction in which the plurality of memories 903 are arranged in sequence, so as to simultaneously press the plurality of memory heat-exchange sub-plates 93 against the corresponding memories 903.

In some possible implementations, the quick locking assembly 32 further includes a limiting screw rod 325. The limiting screw rod 325 is disposed on the pressure rod bracket 321, one end of the pressure rod 322 is provided with a pressure rod sleeve 326, and the pressure rod sleeve 326 is sleeved on the limiting screw rod 325.

The limiting screw rod 325 provides a defined limiting function and ensures that the pressure rod 322 is maintained in a predetermined position during operations, thereby helping to ensure a stable connection between the memory heat-exchange sub-plate 93 and the main heat-exchange flow channel 10. By limiting a moving range of the pressure rod 322, the limiting screw rod 325 may prevent excessive force application, so as to avoid damage to the memory heat-exchange sub-plate 93 and other components.

The pressure rod sleeve 326 is sleeved on the limiting screw rod 325, to provide additional support and guidance, thereby enhancing the stability of the pressure rod 322 and reducing possible shaking or deviation during operations.

In some possible implementations, the side of the pressure rod 322 that faces the memory heat-exchange sub-plate 93 is provided with an elastic sheet 327, and the elastic sheet 327 is provided with a protrusion structure 328 opposite to the memory heat-exchange sub-plate 93.

The elastic sheet 327 has certain elasticity, may provide additional buffering and support when the pressure rod 322 applies force, adapts to slight dimensional changes caused by thermal expansion or other factors, and ensures stable contact between the memory heat-exchange sub-plate 93 and the main heat-exchange flow channel 10. The elastic sheet 327 and the protrusion structure 328 help to improve heat conduction efficiency and enhance a heat dissipation effect.

The protrusion structure 328 may apply force in a concentrated manner to a specific region, so as to ensure that pressure applied to the memory heat-exchange sub-plate 93 is uniform, thereby reducing local stress concentration, and reducing a risk of component damage.

A height of the protrusion structure 328 on the corresponding elastic sheet 327 may be designed based on a required compression amount of the heat exchange pad 134. When the pressure rod 322 is lowered and locked, the protrusion structure 328 on the elastic sheet 327 squeezes the memory heat-exchange sub-plate 93, so that the elastic sheet 327 undergoes elastic deformation and generates a specific elastic force acting on the memory heat-exchange sub-plate 93, and the acting force is transferred through the memory heat-exchange sub-plate 93 and compresses the heat exchange pad 134 in the thermally conductive groove 133, so as to satisfy a fastening force requirement thereof.

In some possible implementations, the lock catch 323 includes a locking pin 3231 and a guide inclined surface 3232, the lock piece 324 is provided with a blocking piece 3241 and a toggle piece 3242, the locking pin 3231 mates with the blocking piece 3241 in a limiting manner, and the toggle piece 3242 is connected to the blocking piece 3241. When the pressure rod 322 is pressed until the locking pin 3231 mates with the blocking piece 3241 in a limiting manner, locking may be achieved, and when the toggle piece 3242 is toggled so that the locking pin 3231 is disengaged from the blocking piece 3241, unlocking may be achieved, thereby realizing tool-free installation, and improving operational efficiency.

Mating in a limiting manner between the locking pin 3231 and the blocking piece 3241 provides a stable locking mechanism, ensuring that the pressure rod 322 does not loosen when in a locked position, thereby maintaining a stable connection between the memory heat-exchange sub-plate 93 and the main heat-exchange flow channel 10. The guide inclined surface 3232 facilitates guiding the lock piece 324 into a correct position to reduce a need for precise alignment during operations, such that locking and unlocking processes are made smoother and more intuitive. The presence of the guide inclined surface 3232 further reduces direct friction between the lock piece 324 and the locking pin 3231, thereby reducing wear and extending the service life of the component. Design of the toggle piece 3242 allows the user to quickly release the locking mechanism through a simple action, thereby simplifying a disassembly process and improving operation efficiency.

In some embodiments of the present application, by unlocking the quick locking assembly 32 and the locking switch assembly 334, the memory heat-exchange sub-plate 93 may be rotated along the fixed shaft 31 and be lifted to completely expose the memory slot switch, and with no components obstructing a region above, an operator may directly perform unlocking operations on the memory slot switch, thereby effectively solving a difficulty in existing solutions of needing to unlock the memory slot switch through a tool from a gap between adjacent memory cold plates across the memory cold plate, and greatly improving operational efficiency and safety.

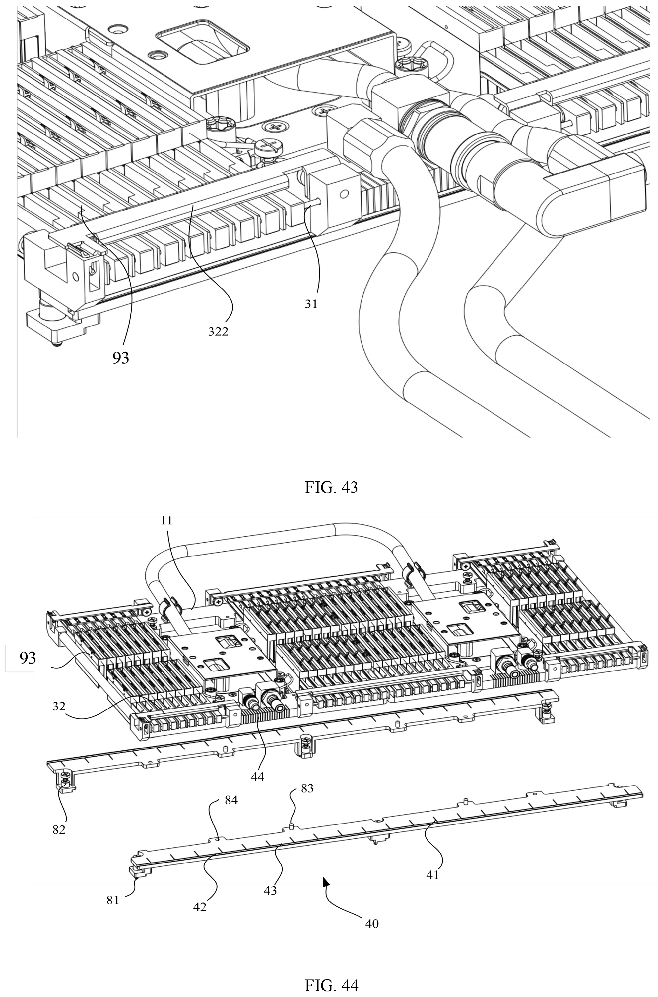

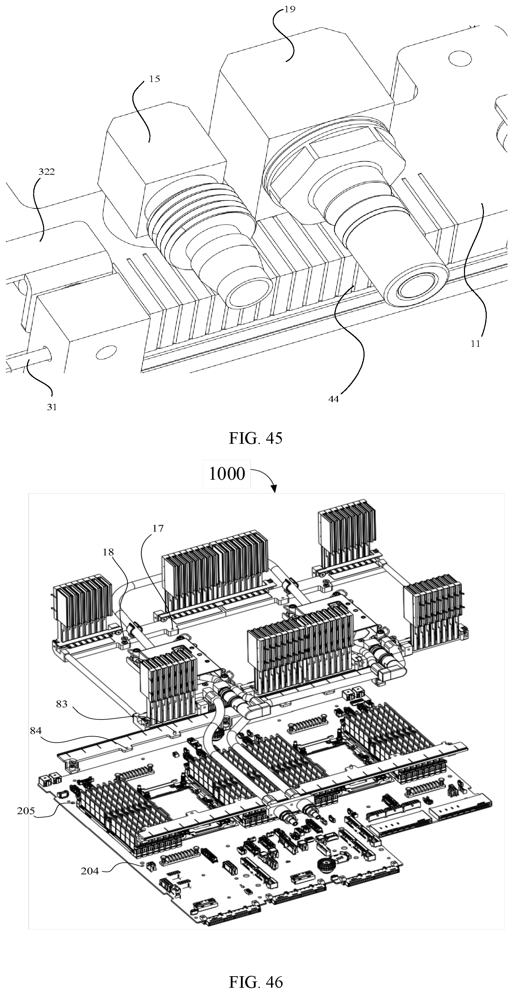

Also, referring to FIG. 44 and FIG. 45 at the same time, in some possible implementations, the liquid-cooling heat dissipation apparatus 1000 further includes a liquid leakage detection mechanism 40, and the liquid leakage detection mechanism 40 includes a processor liquid leakage detection assembly and a memory liquid leakage detection assembly.

The liquid leakage detection mechanism 40 may rapidly detect any leakage in the liquid cooling system and promptly issue an alarm or take an automatic protection measure to prevent damage caused by liquid leakage. The processor 202 and the memory 903 are key components in a computer system, and the liquid leakage detection mechanism 40 monitors these regions, facilitating protection of these key components against liquid damage and extending their service life. By rapidly detecting and responding to a liquid leakage issue, the system may perform repair before the issue escalates, thereby reducing unexpected downtime caused by liquid leakage and improving system availability. The liquid leakage detection mechanism 40 may be integrated with an automated management and monitoring system of the system to achieve real-time monitoring of and automated response to the liquid cooling system, improving management efficiency. To satisfy flexibility requirements, the processor liquid leakage detection assembly and the memory liquid leakage detection assembly are independently designed and respectively have independent signal interfaces connected to the motherboard 201.

In some possible implementations, the processor liquid leakage detection assembly includes a processor heat exchange mechanism detection element, a processor heat exchange mechanism and connecting pipeline connection detection element, and a processor heat exchange mechanism connecting pipeline detection element.

The processor liquid leakage detection assembly are disposed at locations such as a welding joint of the processor heat exchange mechanism, a connection portion between the processor heat exchange mechanism and the connecting pipeline, and positions below the processor heat exchange mechanism connecting pipeline and a maintenance joint connecting pipeline. Fixing of the liquid leakage detection wire to metal parts such as a cold plate and a joint may be achieved through means such as winding along an outer diameter of the metal part, an acetate tape, a waterproof tape, or a snap fastener, and fixing of a liquid leakage detection wire to the connecting pipeline may be achieved by wrapping the liquid leakage detection wire and the connecting pipeline inside a heat shrink tubing and then performing heat shrinking.

A plurality of detection elements are disposed at key positions, so that the system may comprehensively monitor the processor heat exchange mechanism, the connecting pipeline, and connection points thereof, thereby ensuring that any potential leakage issue may be promptly detected. Comprehensive liquid leakage detection improves overall reliability of the liquid cooling system, ensures safe operation under various operating conditions, and reduces a risk of failure caused by liquid leakage.

In some possible implementations, the liquid-cooling heat dissipation apparatus 1000 further includes a cold plate bracket 80, and the memory liquid leakage detection assembly includes a first flow guide groove 41, a detection wire groove 42, and a liquid leakage detection wire 43. The main heat-exchange flow channel 10 is disposed on the cold plate bracket 80, and a side of the cold plate bracket 80 that faces the main heat-exchange flow channel 10 is provided with the detection wire groove 42 and a plurality of first flow guide grooves 41. The plurality of first flow guide grooves 41 are disposed at intervals, the plurality of first flow guide grooves 41 communicate with each other via the detection wire groove 42, and the liquid leakage detection wire 43 is disposed in the detection wire groove 42. The first flow guide groove 41 is used for collecting and directing leaked liquid in the main heat-exchange flow channel 10 to prevent leaked liquid in the main heat-exchange flow channel 10 from spreading to the motherboard 201 and damaging a circuit. The detection wire groove 42 is used for placing and protecting the liquid leakage detection wire 43 to prevent the liquid leakage detection wire from being damaged by pulling and friction on one hand, and is used for receiving leaked liquid directed from the first flow guide groove 41 on the other hand. Once liquid leakage is detected, an electrical signal of the liquid leakage detection wire 43 changes accordingly and triggers an alarm. After receiving an alarm signal, a server management module immediately issues an instruction to shut down a server power supply to avoid equipment and data loss.

If the memory liquid leakage detection assembly follows an installation scheme of the processor liquid leakage detection assembly, the liquid leakage detection wire needs to be fixed to the main heat-exchange sub-flow channel 11 through a tape to perform leaked liquid detection. However, in actual use, due to a different structure of the memory heat-exchange sub-plate 93 and a need to frequently operate the memory 903, in the above-mentioned method, there is a difficulty in fixing the liquid leakage detection wire flatly and firmly to the memory heat-exchange sub-plate 93, and the liquid leakage detection wire may easily loosen or be displaced and then interfere with the memory slot switch during opening and closing processes, causing damage to the liquid leakage detection wire due to wear and pulling, and failures such as inability to lock due to interference with the memory slot switch, which result in the memory 903 not being installed in place. If a quantity of fixing tapes is increased, part of the leaked liquid may be absorbed and isolated, affecting accuracy of the liquid leakage detection system. Therefore, the memory liquid leakage detection assembly in some embodiments of the present application simultaneously considers convenience of installation and operation and maintenance, and accuracy of a detection function.

Disposing of the plurality of first flow guide grooves 41 may effectively guide any potential leaked liquid to flow toward the specific detection wire groove 42, ensuring that the leaked liquid may be rapidly collected and detected, and reducing diffusion of liquid in the system. A plurality of spaced first flow guide grooves 41 and detection wire grooves 42 are disposed on the cold plate bracket 80, so that the system may cover a larger region, ensuring that liquid leakage at any position may be detected, and improving an overall detection coverage. Communicating design of the detection wire groove 42 with the plurality of first flow guide grooves 41 enables the liquid leakage detection wire 43 to rapidly detect liquid in any first flow guide groove 41, providing a timely liquid leakage alarm and preventing the liquid from causing damage to the system. Efficient and reliable liquid leakage detection may be achieved within limited space, interference with the memory 903 is not easily caused, there is firm fixing and good contact, and damage is not easily caused during installation and maintenance, thereby reducing a difficulty in production and maintenance operations, effectively improving detection accuracy and installation and maintenance efficiency, and saving server downtime.

In some possible implementations, a fixing seat 19 is disposed on the main heat-exchange flow channel 10, and the fixing seat 19 is used for connecting to the quick connector assembly 21.

A connector is disposed on the fixing seat 19, one of the connector and the quick connector assembly 21 is a female connector, the other one is a male connector, and the two are mutually docked, so as to realize connections to the quick connector assembly 21.

In some possible implementations, a second flow guide groove 44 penetrating the main heat-exchange flow channel 10 is disposed on the main heat-exchange flow channel 10 below the quick connector assembly 21, and the second flow guide groove 44 communicates with the detection wire groove 42.

Disposing of the second flow guide groove 44 may effectively guide any leaked liquid from the quick connector assembly 21 to rapidly flow into the detection wire groove 42, thereby improving efficiency of liquid leakage detection. The second flow guide groove 44 communicates with the detection wire groove 42, so that the system may cover a larger detection region that is not limited to a region of the memory 903 and further includes a region near the quick connector assembly 21, so as to ensure comprehensive monitoring. Since the second flow guide groove 44 directly penetrates the main heat-exchange flow channel 10, any leaked liquid may be rapidly guided to the liquid leakage detection wire 43 in the detection wire groove 42, therefore, when liquid leakage occurs at the quick connector assembly 21, the leaked liquid will drip onto a surface of the main heat-exchange flow channel 10 under an action of gravity, and when the liquid accumulates to a certain volume, the liquid may flow along the second flow guide groove 44 to the detection wire groove 42. The liquid leakage detection wire 43 disposed in the detection wire groove 42 will immediately trigger an alarm after being wetted, thereby achieving rapid response and reducing potential damage to the system by the liquid. This design makes the liquid leakage detection system more integrated and simplified, reduces a need for additional sensors or complicated wiring, and reduces system complexity and costs.

In some possible implementations, a width of the second flow guide groove 44 covers a range where liquid leakage may exist at the quick connector assembly 21, that is, the width of the second flow guide groove 44 is greater than a gap between the female connector and the male connector, so that more comprehensive detection of the liquid leakage at the quick connector assembly 21 may be performed.

In some possible implementations, the inlet 15 is disposed adjacent to one of the fixing seats 19, the outlet 16 is disposed adjacent to another fixing seat 19, and a length of the second flow guide groove 44 covers the inlet 15 and the one of the fixing seats 19, or the outlet 16 and the another fixing seat 19, so that liquid leakage at the inlet 15 and the fixing seat 19, or liquid leakage at the outlet 16 and the fixing seat 19 may be simultaneously detected.

The liquid leakage detection mechanism 40 of the present application effectively solves a problem of a failure in liquid leakage detection at a quick connector connection port in the quick connector assembly 21 within limited space. For movable components such as a quick connector, which need to be connected during operations and disconnected during maintenance, accuracy and service life of liquid leakage detection thereof are of critical importance. If the liquid leakage detection wire is directly laid along a connection direction of the quick connector and fixed integrally with the quick connector, the liquid leakage detection wire has to be provided with a connection terminal in the middle, so as to be connected and disconnected. Therefore, in actual use, when the quick connector needs to be unlocked and disconnected, a connection terminal of the liquid leakage detection wire at this location needs to be disconnected first, and after the quick connector is connected and locked, the connection terminal of the liquid leakage detection wire at this location needs to be connected again. The above operation steps will inevitably increase the operation difficulty and time, and if there is slight carelessness, the liquid leakage detection wire may be damaged due to pulling by an external force. At the same time, a shape of the quick connector is generally a continuous curved surface in an axial direction, and problems such as difficulty in good fitting and fixing of the liquid leakage detection wire with the quick connector, and inability to cover all regions of droplet leakage may also lead to low detection accuracy. The liquid leakage detection mechanism 40 of some embodiments of the present application avoids winding a complicated liquid leakage detection wire loop on the memory heat-exchange sub-plate 93, so as to solve an interference problem that is prone to occurring in practical application, and further effectively improves detection accuracy and installation and maintenance efficiency, thereby saving server downtime.

In some possible implementations, a first positioning pin 81 and a first captive screw 82 are disposed on the cold plate bracket 80, the first positioning pin 81 corresponds to a first positioning hole 204 on the motherboard 201, and the first captive screw 82 corresponds to a motherboard screw hole 205 on the motherboard.

The first positioning pin 81 corresponds to the positioning hole 204 on the motherboard, ensures that the cold plate bracket 80 may be accurately positioned on the motherboard 201, and helps to ensure correct alignment of the cold plate bracket 80 with the processor 202 or other components, thereby optimizing heat conduction efficiency. Design of the first positioning pin 81 and the first captive screw 82 makes an installation process simpler and more intuitive, reduces a possibility of an installation error, improves operational efficiency, facilitates maintenance and replacement of the cold plate bracket 80 and related components, allows the user to easily remove and reinstall these components, and reduces maintenance costs. The user may easily fix the cold plate bracket 80 in place without complicated adjustments. Design of the first captive screw 82 ensures that the screw does not fall off during installation and maintenance, reduces a risk of losing the screw, and further ensures that the cold plate bracket 80 remains stable during use, so as to prevent loosening caused by vibration or movement.

In some possible implementations, a second positioning hole 17 and a second captive screw 18 are disposed on the main heat-exchange flow channel 10, a second positioning pin 83 and a bracket screw hole 84 are disposed on the cold plate bracket 80, the second positioning pin 83 corresponds to the second positioning hole 17, and the second captive screw 18 corresponds to the bracket screw hole 84.

The second positioning pin 83 corresponds to the second positioning hole 17, so as to ensure precise alignment of the cold plate bracket 80 and the main heat-exchange flow channel 10, help to optimize a liquid flow path and heat conduction efficiency, and ensure efficient operation of the system.

Design of the second positioning pin 83 and the second captive screw 18 makes an installation process simpler and more intuitive. The user may easily fix the main heat-exchange flow channel 10 to the cold plate bracket 80 without complicated adjustment, thereby reducing a possibility of an installation error, facilitating maintenance and replacement of the main heat-exchange flow channel 10 and related components, allowing the user to easily remove and reinstall these components, and reducing maintenance costs. Design of the second captive screw 18 ensures that the screw does not fall off during installation and maintenance to reduce a risk of losing the screw and screwdriver slippage, and further ensures that the main heat-exchange flow channel 10 remains stable during use to prevent loosening caused by vibration or movement.

In some possible implementations, the liquid-cooling heat dissipation apparatus 1000 further includes a liquid supply and return connector assembly 50, the liquid supply and return connector assembly 50 communicates with the main heat-exchange flow channel 10, and the liquid supply and return connector assembly 50 is mainly used for opening and closing of a coolant flow path in the server 2000.

Introduction of the liquid supply and return connector assembly 50 allows the coolant to circulate in the main heat-exchange flow channel 10, so as to carry away heat generated by electronic components such as the processor 202 and the memory 903, thereby achieving efficient thermal management and heat dissipation. The liquid supply and return connector assembly 50 may be integrated with an external cooling system (for example, a chiller or radiator) to provide a flexible heat dissipation solution and adapt to different application requirements and environmental conditions. Through continuous liquid circulation, the liquid-cooling heat dissipation apparatus 1000 may maintain stable temperature in the system, prevent overheating, and improve performance and reliability of an electronic device.

In some possible implementations, the liquid supply and return connector assembly 50 is fixed on a leftmost side of a rear window of the server 2000, and is connected with a cabinet-side water distributor through a liquid supply and return quick connector 206, so that a coolant circuit is conducted, and separation of water and electricity from a power module on a right side of the server 2000 is achieved to the maximum extent.

In some possible implementations, the liquid supply and return connector assembly 50 includes a liquid inlet pipeline 51 and a liquid return pipeline 52, the liquid inlet pipeline 51 communicates with one side of the main heat-exchange flow channel 10, and the liquid return pipeline 52 communicates with the other side of the main heat-exchange flow channel 10.

The coolant enters the liquid-cooling heat dissipation apparatus 1000 of the server 2000 through the liquid supply and return quick connector 206 and reaches the first main heat-exchange sub-flow channel 111 through the liquid inlet pipeline 51, and the coolant flowing out from the third main heat-exchange sub-flow channel 113 returns to the liquid supply and return quick connector 206 through the liquid return pipeline 52, thereby completing an entire circulation process of the coolant in the server 2000.

By connecting the liquid inlet pipeline 51 and the liquid return pipeline 52 to two sides of the main heat-exchange flow channel 10 respectively, a complete circulation path is formed, ensuring that the coolant may effectively flow through the entire main heat-exchange flow channel 10 and carry away heat generated by the device, so as to achieve efficient heat exchange. This design allows flexible configuration of a flow direction and a flow rate of the coolant to adapt to different heat dissipation requirements and system configurations, providing greater design and application flexibility.

In some possible implementations, the processor heat exchange mechanism 20 is provided with a fastening screw hole 22, and the fastening screw hole 22 corresponds to a stud 207 of a chip socket on the motherboard 201.

Corresponding design of the fastening screw hole 22 and the stud 207 ensures that the processor heat exchange mechanism 20 may be firmly fixed on the motherboard 201, prevents loosening or displacement during use, ensures good contact between the processor heat exchange mechanism 20 and the processor 202, helps to optimize heat transfer efficiency, and rapidly transfers the heat generated by the processor 202 to the processor heat exchange mechanism 20 for heat dissipation.

Corresponding design of the fastening screw hole 22 and the stud 207 further makes an installation process of the processor heat exchange mechanism 20 simpler and more intuitive, reduces a possibility of an installation error, and improves operational efficiency. Design of the fastening screw hole 22 facilitates maintenance and replacement of the processor 202 or the processor heat exchange mechanism 20, and the user may easily remove and reinstall components, thereby reducing maintenance costs.

Through reasonably distributed fastening screw holes 22, pressure applied to the processor heat exchange mechanism 20 may be effectively dispersed, stress concentration may be reduced, and a risk of component damage may be lowered.

Also, referring to FIG. 46, during installation, the first step is to install the cold plate bracket 80, and align and place all the first positioning pins 81 on the cold plate bracket 80 into the first positioning holes 204 on the motherboard 201, at this time, the first captive screw 82 may also be aligned with the motherboard screw hole 205 to fasten the first captive screw 82 in place. The second step is to lift the pressure rod 322, rotate all the memory heat-exchange sub-plates 93 around the fixed shaft 31 to a maximum elevation angle position, at this time, the pressure rod 322 is put down and locked. Then, all the memory heat-exchange sub-plates 93 are rotated around the fixed shaft 31 in a reverse direction and rested against the pressure rod 322, and the pressure rod 322 serves to block and limit the memory heat-exchange sub-plates 93 to restrict the memory heat-exchange sub-plates from continuing to fall. The third step is to align the second positioning hole 17 on the main heat-exchange flow channel 10 with the second positioning pin 83 on the cold plate bracket 80, and put down the main heat-exchange flow channel 10 and the memory heat-exchange sub-plate 93 together. At this time, the second captive screw 18 on the main heat-exchange flow channel 10 is also aligned with the bracket screw hole 84 on the cold plate bracket 80 to fasten the second captive screw 18 in place. Then, the liquid supply and return connector assembly 50 is fastened through screws and fixed to a rear window of a chassis. The fourth step is to install the memory heat-exchange sub-plate 93, insert the memory 903, lift the pressure rod 322, rotate all the memory heat-exchange sub-plates 93 around the fixed shaft 31 to a position covering particles of the memory 903, then put down and lock the pressure rod 322, and finally toggle the locking switch assembly 334 to press the memory 903. The fifth step is to install the processor heat exchange mechanism 20, align the fastening screw hole 22 of the processor heat exchange mechanism 20 with the stud 207 of the chip socket on the motherboard 201, put the processor heat exchange mechanism down horizontally and slowly, and tighten all the fastening screw hole 22 according to a required torque. Then, the processor heat exchange connecting pipeline 23 is fixed, and the liquid inlet quick connector 211 and the liquid outlet quick connector 212 are connected. The sixth step is to install a signal interface of the liquid leakage detection wire. Installation of the entire liquid cooling and heat dissipation system may be completed by connecting the signal interfaces of the liquid leakage detection wires of the processor heat exchange mechanism 20 and the memory heat-exchange sub-plate 93 to the motherboard 201 according to tag numbers respectively.

The liquid-cooling heat dissipation apparatus 1000 provided by some embodiments of the present application includes the main heat-exchange flow channel 10, the processor heat exchange mechanism 20, and the memory heat exchange mechanism 90. The processor heat exchange mechanism 20 is disposed on the processor 202, and the processor heat exchange mechanism 20 communicates with the main heat-exchange flow channel 10 through the quick connector assembly 21. The memory heat exchange mechanism 90 includes the fixed shaft 31, the quick locking assembly 32, and the plurality of memory heat-exchange sub-plates 93, the memory heat-exchange sub-plates 93 are sleeved on the fixed shaft 31 and clamp the corresponding memory 903, and the quick locking assembly 32 is used for fixing and pressing the memory heat-exchange sub-plates 93 on the main heat-exchange flow channel 10, so that the memory heat-exchange sub-plates 93 perform heat exchange with the main heat-exchange flow channel 10.

Since the processor heat exchange mechanism 20 communicates with the main heat-exchange flow channel 10 through the quick connector assembly 21, when only the processor 202 or the processor heat exchange mechanism 20 needs to be replaced, quick connection and disconnection of the processor heat exchange mechanism 20 and the main heat-exchange flow channel 10 are realized through the quick connector assembly 21, and then the processor heat exchange mechanism 20 is separately disassembled and installed, without being disassembled together with the memory heat exchange mechanism 90 and the memory 903.

However, the memory heat-exchange sub-plates 93 are sleeved on the fixed shaft 31, are fixed by the quick locking assembly 32, and abut against the main heat-exchange flow channel 10, and the memory heat-exchange sub-plate 93 clamps the corresponding memory 903, so that when the memory 903 needs to be replaced, the memory 903 may be taken out and replaced with a new memory 903 by simply operating to open the quick locking assembly 32 and rotate the memory heat-exchange sub-plate 93 corresponding to the memory 903 around the fixed shaft 31, without removing the memory heat-exchange sub-plate 93 for disassembly and assembly, thereby greatly simplifying a replacement process of the memory 903; the memory heat-exchange sub-plates 93 are sleeved on the fixed shaft 31, so that the memory heat-exchange sub-plates 93 may move freely on the fixed shaft 31, during actual assembly, the memory heat-exchange sub-plates 93 may be self-adapted and positions of the memory heat-exchange sub-plates may be precisely adjusted based on a position of the memory 903, so as to ensure optimal contact and heat exchange efficiency between the memory heat-exchange sub-plates 93 and the memory 903, achieve optimal adaptation, and improve a heat dissipation effect.

The liquid-cooling heat dissipation apparatus 1000 of the present application supports independent disassembly, assembly, and maintenance of the processor 202 and the memory 903, so that operation and maintenance personnel may replace and maintain components more quickly, thereby greatly improving flexibility, maintainability, convenience, and safety of production, testing, as well as operation and maintenance, reducing downtime, and improving availability and maintenance efficiency of the server 2000.

In addition, some embodiments of the present application further provide a server 2000, including a motherboard 201, a processor 202, a memory 903, and the liquid-cooling heat dissipation apparatus 1000 described above, the processor 202 and the memory 903 are disposed on the motherboard 201, and the liquid-cooling heat dissipation apparatus 1000 is used for cooling the processor 202 and the memory 903.

In view of the fact that the server 2000 in some embodiments of the present application includes the liquid-cooling heat dissipation apparatus 1000 described in any of the above embodiments, the server 2000 includes the structure and beneficial effects of the liquid-cooling heat dissipation apparatus 1000, which will not be further elaborated herein in the present application.

The liquid-cooling heat dissipation apparatus and the server provided by the present application have been described in detail above. Specific examples are used herein to illustrate the principle and implementations of the present application, and the descriptions of the above embodiments are only used for helping to understand the method of the present application and the core idea thereof. It should be indicated that for those of ordinary skill in the art, several improvements and modifications may be made to the present application without departing from the principle of the present application, and these improvements and modifications also fall within the protection scope of the claims of the present application.

## Claims

1. A liquid-cooling heat dissipation apparatus, **characterized in that** the liquid-cooling heat dissipation apparatus comprises:
a main heat-exchange flow channel; and
an expansion card heat exchange mechanism, comprising a fixed shaft, a quick locking assembly, and a plurality of expansion card heat-exchange sub-plates, wherein the plurality of expansion card heat-exchange sub-plates are sleeved on the fixed shaft, so as to enable the plurality of expansion card heat-exchange sub-plates to rotate around the fixed shaft and slide axially along the fixed shaft, the expansion card heat-exchange sub-plates are configured to clamp a corresponding expansion card, and the quick locking assembly is configured to fix the plurality of expansion card heat-exchange sub-plates and make the plurality of expansion card heat-exchange sub-plates abut against the main heat-exchange flow channel, so as to enable the plurality of expansion card heat-exchange sub-plates to exchange heat with the main heat-exchange flow channel.

2. The liquid-cooling heat dissipation apparatus according to claim 1, **characterized in that** the main heat-exchange flow channel comprises a plurality of main heat-exchange sub-flow channels, and the plurality of main heat-exchange sub-flow channels are sequentially in communication through connecting pipelines.

3. The liquid-cooling heat dissipation apparatus according to claim 2, **characterized in that** the main heat-exchange flow channel comprises a first main heat-exchange sub-flow channel, a second main heat-exchange sub-flow channel, and a third main heat-exchange sub-flow channel, the connecting pipelines comprise a first branch connecting pipeline and a second branch connecting pipeline, the first main heat-exchange sub-flow channel is in communication with the second main heat-exchange sub-flow channel through the first branch connecting pipeline, and the second main heat-exchange sub-flow channel is in communication with the third main heat-exchange sub-flow channel through the second branch connecting pipeline.

4. The liquid-cooling heat dissipation apparatus according to claim 3, **characterized in that** a liquid distribution port is disposed on the first main heat-exchange sub-flow channel, a liquid collection port is disposed on the third main heat-exchange sub-flow channel, and the liquid distribution port and the liquid collection port are respectively in communication with a second heat exchange mechanism.

5. The liquid-cooling heat dissipation apparatus according to claim 3, **characterized in that** the liquid-cooling heat dissipation apparatus further comprises a liquid supply and return connector assembly, and the liquid supply and return connector assembly is in communication with the main heat-exchange flow channel.

6. The liquid-cooling heat dissipation apparatus according to claim 5, **characterized in that** the liquid supply and return connector assembly comprises a liquid inlet pipeline and a liquid return pipeline, the liquid inlet pipeline is in communication with the first main heat-exchange sub-flow channel, and the liquid return pipeline is in communication with the third main heat-exchange sub-flow channel.

7. The liquid-cooling heat dissipation apparatus according to claim 1, **characterized in that** the main heat-exchange flow channel comprises a cover plate and a bottom plate, a flow channel cavity is disposed in the cover plate, the bottom plate closes the flow channel cavity, and the plurality of expansion card heat-exchange sub-plates abut against the cover plate.

8. The liquid-cooling heat dissipation apparatus according to claim 7, **characterized in that** a rib structure is disposed in the flow channel cavity, and the rib structure is disposed in an extension direction of the flow channel cavity.

9. The liquid-cooling heat dissipation apparatus according to claim 7, **characterized in that** a skived fin structure is disposed on the bottom plate, and the skived fin structure is disposed in the flow channel cavity in an extension direction of the flow channel cavity.

10. The liquid-cooling heat dissipation apparatus according to claim 7, **characterized in that** the cover plate is provided with a thermally conductive groove, a heat exchange pad is disposed in the thermally conductive groove, and the plurality of expansion card heat-exchange sub-plates abut against the heat exchange pad.

11. The liquid-cooling heat dissipation apparatus according to claim 1, **characterized in that** the plurality of expansion card heat-exchange sub-plates are divided into two groups in a length direction of the corresponding expansion card, the two groups of expansion card heat-exchange sub-plates are oppositely disposed, and in the length direction of the corresponding expansion card, each group of expansion card heat-exchange sub-plates clamps one end of the corresponding expansion card respectively.

12. The liquid-cooling heat dissipation apparatus according to claim 1, **characterized in that** each of the plurality of expansion card heat-exchange sub-plates comprises a main cold plate, a secondary cold plate, thermally conductive pads, and a locking switch assembly; in a thickness direction of the corresponding expansion card, the main cold plate is located on one side of the corresponding expansion card, the secondary cold plate is movably disposed on the main cold plate and is located on the other side of the corresponding expansion card, the thermally conductive pads are disposed on sides, of the main cold plate and the secondary cold plate, that face the corresponding expansion card, the main cold plate and the secondary cold plate are sleeved on the fixed shaft, the locking switch assembly is disposed on the main cold plate, and the locking switch assembly is configured to drive the secondary cold plate to move toward the main cold plate, so as to press the thermally conductive pads on the secondary cold plate and the main cold plate against the corresponding expansion card.

13. The liquid-cooling heat dissipation apparatus according to claim 12, **characterized in that** the main cold plate comprises a base plate and a reinforcement frame, the base plate is sleeved on the fixed shaft, the reinforcement frame is disposed on the base plate, the secondary cold plate is movably disposed on the reinforcement frame, and the locking switch assembly is disposed on the reinforcement frame.

14. The liquid-cooling heat dissipation apparatus according to claim 13, **characterized in that** the base plate is provided with a limiting groove, and the limiting groove is configured to accommodate the thermally conductive pads.

15. The liquid-cooling heat dissipation apparatus according to claim 14, **characterized in that** one side of the base plate that is away from the limiting groove is provided with a heat pipe groove, and the heat pipe groove is configured to receive a heat pipe.

16. The liquid-cooling heat dissipation apparatus according to claim 13, **characterized in that** one of the main cold plate and the secondary cold plate is provided with a guide pin, and the other of the main cold plate and the secondary cold plate is provided with a guide hole corresponding to the guide pin.

17. The liquid-cooling heat dissipation apparatus according to claim 13, **characterized in that** the locking switch assembly comprises a cam wrench, a cam rotating shaft, a pressing slider, and a guide shaft, the cam wrench is rotatably disposed on the reinforcement frame via the cam rotating shaft, the guide shaft is disposed on the reinforcement frame, the secondary cold plate is sleeved on the guide shaft, the pressing slider is disposed on the secondary cold plate and faces the cam wrench, and the cam wrench is configured to push the pressing slider to move in an axial direction of the guide shaft, so as to cause the secondary cold plate to move toward the main cold plate.

18. The liquid-cooling heat dissipation apparatus according to claim 17, **characterized in that** the cam wrench has a cam portion and a handle portion, the cam portion is rotatably disposed on the cam rotating shaft and abuts against and mates with the pressing slider, and the handle portion is connected to the cam portion.

19. The liquid-cooling heat dissipation apparatus according to claim 17, **characterized in that** the locking switch assembly further comprises a compression spring, the compression spring is sleeved on the guide shaft and is located on one side of the pressing slider that is away from the cam wrench, one side of the compression spring is connected to the reinforcement frame, and the other side of the compression spring is connected to the pressing slider.

20. The liquid-cooling heat dissipation apparatus according to claim 17, **characterized in that** one of the pressing slider and the guide shaft is provided with a guide groove, and the other of the pressing slider and the guide shaft is provided with a guide block corresponding to the guide groove.

21. The liquid-cooling heat dissipation apparatus according to claim 12, **characterized in that** each of the plurality of expansion card heat-exchange sub-plates further comprises a scratch-resistant film, and the scratch-resistant film is adhered to the thermally conductive pads, the main cold plate, and the secondary cold plate.

22. The liquid-cooling heat dissipation apparatus according to claim 1, **characterized in that** the quick locking assembly comprises a pressure rod bracket, a pressure rod, a lock catch, and a lock piece, the lock catch is disposed on the main heat-exchange flow channel, one end of the pressure rod is rotatably disposed on the pressure rod bracket, the other end of the pressure rod is provided with the lock piece, the lock catch and the lock piece mate with each other and are configured to lock the pressure rod and cause the pressure rod to press against one side of the plurality of expansion card heat-exchange sub-plates that is away from the main heat-exchange flow channel, so as to cause the plurality of expansion card heat-exchange sub-plates to abut against the main heat-exchange flow channel.

23. The liquid-cooling heat dissipation apparatus according to claim 22, **characterized in that** an elastic sheet is disposed on one side of the pressure rod that faces the plurality of expansion card heat-exchange sub-plates, and the elastic sheet is provided with protrusion structures opposite to the plurality of expansion card heat-exchange sub-plates.

24. The liquid-cooling heat dissipation apparatus according to claim 22, **characterized in that** the lock catch comprises a locking pin and a guide inclined surface, the lock piece is provided with a blocking piece and a toggle piece, the locking pin mates with the blocking piece in a limiting manner, and the toggle piece is connected to the blocking piece.

25. The liquid-cooling heat dissipation apparatus according to claim 1, **characterized in that** the liquid-cooling heat dissipation apparatus further comprises a liquid leakage detection mechanism, the liquid-cooling heat dissipation apparatus further comprises a cold plate bracket, the liquid leakage detection mechanism comprises a first flow guide groove, a detection wire groove, and a liquid leakage detection wire, the main heat-exchange flow channel is disposed on the cold plate bracket, the detection wire groove and a plurality of first flow guide grooves are disposed on one side of the cold plate bracket that faces the main heat-exchange flow channel, the plurality of first flow guide grooves are spaced apart, the detection wire groove is in communication with the plurality of first flow guide grooves, and the liquid leakage detection wire is disposed in the detection wire groove.

26. The liquid-cooling heat dissipation apparatus according to claim 25, **characterized in that** a fixing seat is disposed on the main heat-exchange flow channel, and the fixing seat is configured to connect to a second heat exchange mechanism.

27. The liquid-cooling heat dissipation apparatus according to claim 26, **characterized in that** a second flow guide groove penetrating the main heat-exchange flow channel is disposed on the main heat-exchange flow channel below a connection port between the second heat exchange mechanism and the fixing seat, and the second flow guide groove is in communication with the detection wire groove.

28. A liquid-cooling heat dissipation apparatus, **characterized in that** the liquid-cooling heat dissipation apparatus comprises:
a main heat-exchange flow channel;
a processor heat exchange mechanism, configured to dissipate heat from a processor, wherein the processor heat exchange mechanism is detachably connected to the main heat-exchange flow channel via a quick connector assembly, so that the processor heat exchange mechanism is in communication with the main heat-exchange flow channel; and
a memory heat exchange mechanism, comprising a fixed shaft, a quick locking assembly, and a plurality of memory heat-exchange sub-plates, wherein the plurality of memory heat-exchange sub-plates are sleeved on the fixed shaft, so as to enable the plurality of memory heat-exchange sub-plates to rotate around the fixed shaft and slide axially along the fixed shaft, the memory heat-exchange sub-plates are configured to clamp a corresponding memory, and the quick locking assembly is configured to fix the plurality of memory heat-exchange sub-plates and make the plurality of memory heat-exchange sub-plates abut against the main heat-exchange flow channel, so as to enable the plurality of memory heat-exchange sub-plates to exchange heat with the main heat-exchange flow channel.

29. The liquid-cooling heat dissipation apparatus according to claim 28, **characterized in that** the main heat-exchange flow channel comprises a plurality of main heat-exchange sub-flow channels, and the plurality of main heat-exchange sub-flow channels are sequentially in communication through connecting pipelines.

30. The liquid-cooling heat dissipation apparatus according to claim 29, **characterized in that** the main heat-exchange flow channel comprises a first main heat-exchange sub-flow channel, a second main heat-exchange sub-flow channel, and a third main heat-exchange sub-flow channel, the connecting pipelines comprise a first branch connecting pipeline and a second branch connecting pipeline, the first main heat-exchange sub-flow channel is in communication with the second main heat-exchange sub-flow channel through the first branch connecting pipeline, and the second main heat-exchange sub-flow channel is in communication with the third main heat-exchange sub-flow channel through the second branch connecting pipeline.

31. The liquid-cooling heat dissipation apparatus according to claim 30, **characterized in that** a liquid distribution port is disposed on the first main heat-exchange sub-flow channel, a liquid collection port is disposed on the third main heat-exchange sub-flow channel, the quick connector assembly comprises a liquid inlet quick connector and a liquid outlet quick connector, the liquid inlet quick connector is in communication with the liquid distribution port, and the liquid outlet quick connector is in communication with the liquid collection port.

32. The liquid-cooling heat dissipation apparatus according to claim 30, **characterized in that** the liquid-cooling heat dissipation apparatus further comprises a liquid supply and return connector assembly, and the liquid supply and return connector assembly is in communication with the main heat-exchange flow channel.

33. The liquid-cooling heat dissipation apparatus according to claim 32, **characterized in that** the liquid supply and return connector assembly comprises a liquid inlet pipeline and a liquid return pipeline, the liquid inlet pipeline is in communication with the first main heat-exchange sub-flow channel, and the liquid return pipeline is in communication with the third main heat-exchange sub-flow channel.

34. The liquid-cooling heat dissipation apparatus according to claim 29, **characterized in that** the main heat-exchange sub-flow channel comprises a cover plate and a bottom plate, a flow channel cavity is disposed in the cover plate, the bottom plate closes the flow channel cavity, the processor heat exchange mechanism is in communication with the flow channel cavity, and the memory heat-exchange sub-plate abuts against the cover plate.

35. The liquid-cooling heat dissipation apparatus according to claim 34, **characterized in that** a rib structure is disposed in the flow channel cavity, and the rib structure is disposed in an extension direction of the flow channel cavity.

36. The liquid-cooling heat dissipation apparatus according to claim 34, **characterized in that** a skived fin structure is disposed on the bottom plate, and the skived fin structure is disposed in the flow channel cavity in an extension direction of the flow channel cavity.

37. The liquid-cooling heat dissipation apparatus according to claim 34, **characterized in that** the cover plate is provided with a thermally conductive groove, a heat exchange pad is disposed in the thermally conductive groove, and the memory heat-exchange sub-plate abuts against the heat exchange pad.

38. The liquid-cooling heat dissipation apparatus according to any one of claims 28 to 37, **characterized in that** the quick connector assembly comprises a liquid inlet quick connector and a liquid outlet quick connector, one side of the main heat-exchange flow channel communicates with the processor heat exchange mechanism via the liquid inlet quick connector, and the other side of the main heat-exchange flow channel communicates with the processor heat exchange mechanism via the liquid outlet quick connector.

39. The liquid-cooling heat dissipation apparatus according to claim 38, **characterized in that** the liquid-cooling heat dissipation apparatus comprises a plurality of processor heat exchange mechanisms, and adjacent processor heat exchange mechanisms are in communication with each other through a processor heat exchange connecting pipeline.

40. The liquid-cooling heat dissipation apparatus according to claim 39, **characterized in that** the liquid-cooling heat dissipation apparatus comprises two processor heat exchange mechanisms, the liquid inlet quick connector is in communication with one of the two processor heat exchange mechanisms through a processor liquid inlet pipeline, the two processor heat exchange mechanisms are in communication with each other through the processor heat exchange connecting pipeline, and the other one of the two processor heat exchange mechanisms is in communication with the liquid outlet quick connector through a processor liquid outlet pipeline.

41. The liquid-cooling heat dissipation apparatus according to claim 28, **characterized in that** the plurality of memory heat-exchange sub-plates are divided into two groups in a length direction of the corresponding memory, the two groups of memory heat-exchange sub-plates are oppositely disposed, and in the length direction of the corresponding memory, each group of memory heat-exchange sub-plates clamps one end of the corresponding memory.

42. The liquid-cooling heat dissipation apparatus according to claim 28, **characterized in that** each of the plurality of memory heat-exchange sub-plate comprises a main cold plate, a secondary cold plate, thermally conductive pads, and a locking switch assembly; in a thickness direction of the corresponding memory, the main cold plate is located on one side of the corresponding memory, the secondary cold plate is movably disposed on the main cold plate and is located on the other side of the corresponding memory, the thermally conductive pads are disposed on sides, of the main cold plate and the secondary cold plate, that face the corresponding memory, the main cold plate and the secondary cold plate are sleeved on the fixed shaft, the locking switch assembly is disposed on the main cold plate, and the locking switch assembly is configured to drive the secondary cold plate to move toward the main cold plate, so as to press the thermally conductive pads on the secondary cold plate and the main cold plate against the memory.

43. The liquid-cooling heat dissipation apparatus according to claim 42, **characterized in that** the locking switch assembly comprises a cam wrench, a cam rotating shaft, a pressing slider, and a guide shaft, the cam wrench is rotatably disposed on the main cold plate via the cam rotating shaft, the guide shaft is disposed on the main cold plate, the secondary cold plate is sleeved on the guide shaft, the pressing slider is disposed on the secondary cold plate and faces the cam wrench, and the cam wrench is configured to push the pressing slider to move in an axial direction of the guide shaft, so as to cause the secondary cold plate to move toward the main cold plate.

44. The liquid-cooling heat dissipation apparatus according to claim 43, **characterized in that** the locking switch assembly further comprises a compression spring, the compression spring is sleeved on the guide shaft and is located on one side of the pressing slider that is away from the cam wrench, and one side of the compression spring is connected to the main cold plate and the other side of the compression spring is connected to the pressing slider.

45. The liquid-cooling heat dissipation apparatus according to claim 42, **characterized in that** each of the plurality of memory heat-exchange sub-plate further comprises a scratch-resistant film, and the scratch-resistant film is adhered to the thermally conductive pads, the main cold plate, and the secondary cold plate.

46. The liquid-cooling heat dissipation apparatus according to claim 28, **characterized in that** the quick locking assembly comprises a pressure rod bracket, a pressure rod, a lock catch, and a lock piece, the lock catch is disposed on the main heat-exchange flow channel, one end of the pressure rod is rotatably disposed on the pressure rod bracket, the other end of the pressure rod is provided with the lock piece, the lock catch and the lock piece mate with each other and are configured to lock the pressure rod and cause the pressure rod to press against one side of the plurality of memory heat-exchange sub-plates that is away from the main heat-exchange flow channel, so as to cause the plurality of memory heat-exchange sub-plates to abut against the main heat-exchange flow channel.

47. The liquid-cooling heat dissipation apparatus according to claim 46, **characterized in that** an elastic sheet is disposed on one side of the pressure rod that faces the plurality of memory heat-exchange sub-plates, and the elastic sheet is provided with protrusion structures opposite to the plurality of memory heat-exchange sub-plates.

48. The liquid-cooling heat dissipation apparatus according to claim 28, **characterized in that** the liquid-cooling heat dissipation apparatus further comprises a liquid leakage detection mechanism, and the liquid leakage detection mechanism comprises a processor liquid leakage detection assembly and a memory liquid leakage detection assembly.

49. The liquid-cooling heat dissipation apparatus according to claim 48, **characterized in that** the liquid-cooling heat dissipation apparatus further comprises a cold plate bracket, the memory liquid leakage detection assembly comprises a first flow guide groove, a detection wire groove, and a liquid leakage detection wire, the main heat-exchange flow channel is disposed on the cold plate bracket, the detection wire groove and a plurality of first flow guide grooves are disposed on one side of the cold plate bracket that faces the main heat-exchange flow channel, the plurality of first flow guide grooves are spaced apart, the detection wire groove is in communication with the plurality of first flow guide grooves, and the liquid leakage detection wire is disposed in the detection wire groove.

50. The liquid-cooling heat dissipation apparatus according to claim 49, **characterized in that** a fixing seat is disposed on the main heat-exchange flow channel, and the fixing seat is configured to connect to the quick connector assembly.

51. The liquid-cooling heat dissipation apparatus according to claim 50, **characterized in that** a second flow guide groove penetrating the main heat-exchange flow channel is disposed on the main heat-exchange flow channel below the quick connector assembly, and the second flow guide groove is in communication with the detection wire groove.

52. A server, **characterized in that** the server comprises the liquid-cooling heat dissipation apparatus according to any one of claims 1 to 51.
